(19) Europäisches Patentamt / European Patent Office / Office européen des brevets

(11) **EP 3 935 851 B1**

(12) **EUROPEAN PATENT SPECIFICATION**

(45) Date of publication and mention
of the grant of the patent:
**22.04.2026 Bulletin 2026/17**

(21) Application number: **20716058.1**

(22) Date of filing: **06.03.2020**

(51) International Patent Classification (IPC):
**H04N 19/52** (2014.01)    **H04N 19/70** (2014.01)
**H04N 19/96** (2014.01)

(52) Cooperative Patent Classification (CPC):
**H04N 19/52; H04N 19/70; H04N 19/96**

(86) International application number:
**PCT/US2020/021541**

(87) International publication number:
**WO 2020/181250 (10.09.2020 Gazette 2020/37)**

(54) **SIGNALING OF TRIANGLE MERGE MODE INDEXES IN VIDEO CODING**

SIGNALISIERUNG VON DREIECKSZUSAMMENFÜHRUNGSSMODUSINDIZES IN DER VIDEOCODIERUNG

SIGNALISATION D'INDICES DE MODE DE FUSION TRIANGULAIRE EN CODAGE VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2019 US 201962814492 P
11.03.2019 US 201962816837 P
05.03.2020 US 202016809774**

(43) Date of publication of application:
**12.01.2022 Bulletin 2022/02**

(73) Proprietor: **QUALCOMM INCORPORATED**
San Diego, California 92121-1714 (US)

(72) Inventors:
• **CHANG, Yao-Jen**
**San Diego, California 92121-1714 (US)**
• **CHEN, Chun-Chi**
**San Diego, California 92121-1714 (US)**
• **CHIEN, Wei-Jung**
**San Diego, California 92121-1714 (US)**
• **KARCZEWICZ, Marta**
**San Diego, California 92121-1714 (US)**

(74) Representative: **Reddie & Grose LLP**
**The White Chapel Building
10 Whitechapel High Street
London E1 8QS (GB)**

(56) References cited:
• Y-J CHANG (QUALCOMM) ET AL: "Non-CE4: On triangle merge mode", no. m47109, 13 March 2019 (2019-03-13), XP030210718, Retrieved from the Internet <URL:http://phenix.int-evry.fr/mpeg/doc_end_user/documents/126_Geneva/wg11/m47109-JVET-N0447-v1-JVET-N0447-v1.zip JVET-N0447-v1/JVET-N0447.docx> [retrieved on 20190313]
• WANG (QUALCOMM) H ET AL: "CE10-related: Using regular merge index signaling for triangle mode", no. JVET-M0883, 14 January 2019 (2019-01-14), XP030202180, Retrieved from the Internet <URL:http://phenix.int-evry.fr/jvet/doc_end_user/documents/13_Marrakech/wg11/JVET-M0883-v1.zip JVET-M0883.docx> [retrieved on 20190114]
• ZHOU (TI) M: "CE13: Test results on maxNumMergeCand signaling and simplification of merge MVP list pruning process", no. JCTVC-G091, 17 November 2011 (2011-11-17), XP030229800, Retrieved from the Internet <URL:http://phenix.int-evry.fr/jct/doc_end_user/documents/7_Geneva/wg11/JCTVC-G091-v3.zip JCTVC-G091.doc> [retrieved on 20111117]

• WANG (KWAI) X ET AL: "Non-CE10: Triangle prediction merge index coding", no. m45500, 13 January 2019 (2019-01-13), XP030213507, Retrieved from the Internet <URL:http://phenix. int-evry.fr/mpeg/doc_end_user/documents/ 125_Marrakech/wg11/ m45500-JVET-M0234-v4-JVET-M0234_r3.zip JVET-M0234_r2.docx> [retrieved on 20190113]

## Description

### TECHNICAL FIELD

This disclosure relates to video encoding and video decoding.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video coding techniques, such as those described in the standards defined by MPEG-2, MPEG-4, ITU-T H.263, ITU-T H.264/MPEG-4, Part 10, Advanced Video Coding (AVC), ITU-T H.265/High Efficiency Video Coding (HEVC), and extensions of such standards. The video devices may transmit, receive, encode, decode, and/or store digital video information more efficiently by implementing such video coding techniques.

Video coding techniques include spatial (intra-picture) prediction and/or temporal (inter-picture) prediction to reduce or remove redundancy inherent in video sequences. For block-based video coding, a video slice (e.g., a video picture or a portion of a video picture) may be partitioned into video blocks, which may also be referred to as coding tree units (CTUs), coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to as reference frames.

JVET Document JVET-M0883 "CE10-related: Using regular merge index signaling for triangle mode" proposes to replace look-up table based signaling in the triangular mode with a triangle split direction flag and two merge indices.

### SUMMARY

In general, this disclosure describes techniques for video coding. More specifically, this disclosure describes techniques that may improve the syntax of merge modes, which may include normal merge mode, merge with motion vector difference (MVD), triangle merge mode, and combined inter-intra mode. The techniques of this disclosure may be used with the developing Versatile Video Coding (VVC) standard and other future video coding standards.

The present disclosure provides a method of decoding video data according to claim 1, a method of encoding video data according to claim 5, a device for decoding video data according to claim 8, and a device for encoding video data according to claim 13. . Specific embodiments are subject of the dependent claims.

The details of one or more examples are set forth in the accompanying drawings and the description below. Other features, objects, and advantages will be apparent from the description, drawings, and claims.

### BRIEF DESCRIPTION OF DRAWINGS

FIG. 1 is a block diagram illustrating an example video encoding and decoding system that may perform the techniques of this disclosure.

FIG. 2 is a conceptual diagram illustrating a merge mode with motion vector difference search point.

FIG. 3 is a conceptual diagram illustrating locations of inherited affine motion predictors.

FIG. 4 is a conceptual diagram illustrating control point motion vector inheritance.

FIG. 5 is a conceptual diagram illustrating locations of candidates for constructed affine merge mode.

FIG. 6 is a conceptual diagram illustrating triangle partition-based inter prediction.

FIG. 7 is a conceptual diagram illustrating spatial and temporal neighboring blocks used to construct a uni-prediction candidate list.

FIGS. 8A and 8B are conceptual diagrams illustrating an example quadtree binary tree (QTBT) structure, and a corresponding coding tree unit (CTU).

FIG. 9 is a block diagram illustrating an example video encoder that may perform the techniques of this disclosure.

FIG. 10 is a block diagram illustrating an example video decoder that may perform the techniques of this disclosure.

FIG. 11 is a flowchart illustrating an example encoding method.

FIG. 12 is a flowchart illustrating an example decoding method.

FIG. 13 is a flowchart illustrating an example encoding method in accordance with one or more techniques of this disclosure.

FIG. 14 is a flowchart illustrating an example decoding method in accordance with one or more techniques of this disclosure.

## DETAILED DESCRIPTION

Versatile Video Coding (VVC) includes a triangle partition mode. When the triangle partition mode is used, a coding unit (CU) may be split diagonally into two triangle-shaped partitions, using either the diagonal split or the anti-diagonal split. In some examples, a CU may instead be split diagonally into two unequal sized partitions. Each triangle partition in the CU is inter-predicted using separate motion parameters. Only uni-prediction is allowed in VVC for each partition. That is, each partition has one motion vector and one reference index. The constraint requiring uni-prediction is applied to ensure that only two motion compensated prediction operations are needed for each CU. Performing three or more motion compensated prediction operations for a CU may significantly increase complexity. The video coder may derive the uni-prediction motion parameter for each partition from a uni-prediction candidate list, referred to as a merge candidate list.

If a CU-level flag indicates that the current CU is coded using the triangle partition mode, indexes (i.e., triangle partition indexes) are further signaled for each of the triangle partitions. For each of the triangle partitions, a video decoder may use the triangle partition index for the triangle partition to determine a merge candidate for the triangle partition in the merge candidate list. The video decoder may use the motion information of the merge candidate for the triangle partition to generate prediction data for the triangle partition.

After predicting each of the triangle partitions, the sample values along the diagonal or anti-diagonal edge are adjusted using a blending process with adaptive weights. The resulting predictions for the triangle partitions after application of the blending process is the prediction signal for the whole CU, and the video coder applies transform and quantization processes to the whole CU as in other prediction modes.

A video encoder may signal a tile-level syntax element (e.g., five_minus_max_num_triangle_merge_cand) that a video decoder may use to determine a maximum number of merge candidates that can be used in a merge candidate list for a CU encoded using triangle partition mode. In some examples, the video decoder may determine, based on this syntax element, that the maximum number of merge candidates that can be used in the merge candidate list for a CU encoded using triangle partition mode is less than or equal to 2.

In cases where the maximum number of such merge candidates is less than or equal to 2, signaling a triangle partition index for the second triangle partition of a CU is not necessary. This is because if both triangle partitions of the CU used the same merge candidate, then it would be more efficient not to use triangle partition mode at all and instead use a single set of motion parameters for the whole CU. Hence, in the case where there are 2 merge candidates, if a first triangle partition of a CU uses one of the merge candidates, the video decoder can infer that a second triangle partition of the CU uses the other one of the merge candidates. Therefore, it is more efficient to signal the triangle partition index for the both triangle partitions only if the maximum number of merge candidates is greater than 2.

Hence, in accordance with a technique of this disclosure, a video encoding process includes signaling a triangle partition index for a second triangle partition of a CU only if the maximum number of merge candidates is greater than 2. Similarly, a video decoding process includes parsing a triangle partition index for a second triangle partition of a CU only if the maximum number of merge candidates is greater than 2.

Additionally, in accordance with a technique of this disclosure, signaling of the tile-level syntax element (e.g., five_minus_max_num_triangle_merge_cand) that the video decoder uses to determine the maximum number of merge candidates that can be used in the merge candidate list for the CU encoded using triangle partition mode may be dependent on a higher-level syntax element that indicates whether triangle merge mode is enabled. Thus, the video decoder may determine, based on whether or not the higher-level syntax element indicates triangle merge mode is enabled, whether the tile-level syntax element is signaled in the bitstream.

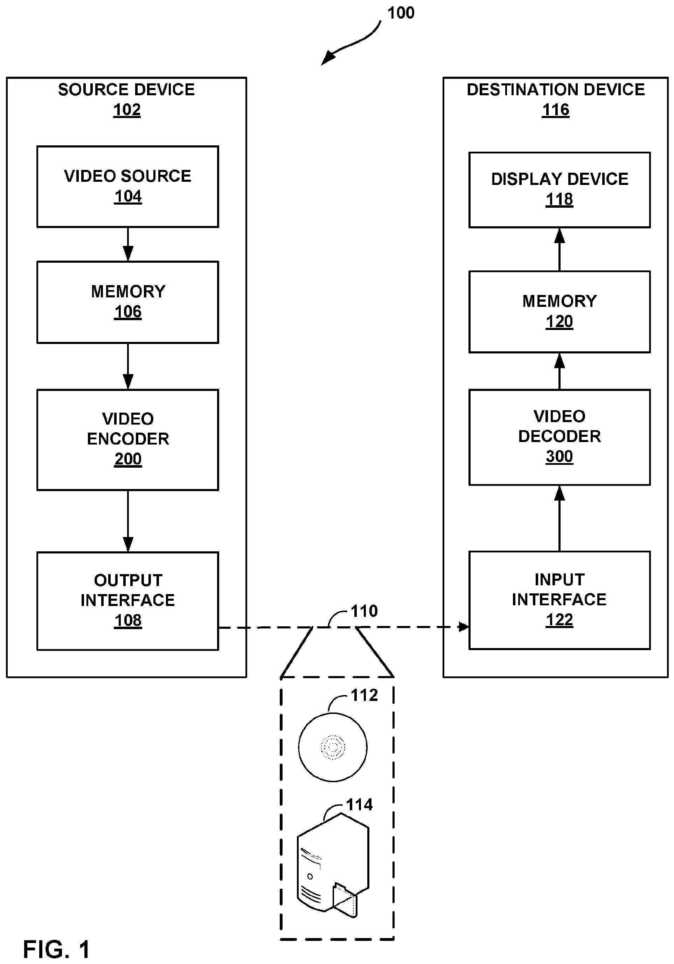

FIG. 1 is a block diagram illustrating an example video encoding and decoding system 100 that may perform the techniques of this disclosure. The techniques of this disclosure are generally directed to coding (encoding and/or decoding) video data. In general, video data includes any data for processing a video. Thus, video data may include raw, uncoded video, encoded video, decoded (e.g., reconstructed) video, and video metadata, such as signaling data.

As shown in FIG. 1, system 100 includes a source device 102 that provides encoded video data to be decoded and displayed by a destination device 116, in this example. In particular, source device 102 provides the video data to destination device 116 via a computer-readable medium 110. Source device 102 and destination device 116 may include any of a wide range of devices, including desktop computers, notebook (i.e., laptop) computers, tablet computers, set-top boxes, telephone handsets such as smartphones, televisions, cameras, display devices, digital media players, video gaming consoles, video streaming device, or the like. In some cases, source device 102 and destination device 116 may be equipped for wireless communication, and thus may be referred to as wireless communication devices.

In the example of FIG. 1, source device 102 includes video source 104, memory 106, video encoder 200, and output interface 108. Destination device 116 includes input interface 122, video decoder 300, memory 120, and display device 118. In accordance with this disclosure, video encoder 200 of source device 102 and video decoder 300 of destination device 116 may be configured to apply the techniques for video coding. Thus, source device 102 represents an example of a video encoding device, while destination device 116 represents an example of a video decoding device. In other examples, a source device and a destination device may include other components or arrangements. For example, source device 102 may receive video data from an external video source, such as an external camera. Likewise, destination device 116 may interface with an external display device, rather than including an integrated display device.

System 100 as shown in FIG. 1 is merely one example. In general, any digital video encoding and/or decoding device may perform techniques for video coding. Source device 102 and destination device 116 are merely examples of such coding devices in which source device 102 generates coded video data for transmission to destination device 116. This disclosure refers to a "coding" device as a device that performs coding (encoding and/or decoding) of data. Thus, video encoder 200 and video decoder 300 represent examples of coding devices, in particular, a video encoder and a video decoder, respectively. In some examples, devices 102, 116 may operate in a substantially symmetrical manner such that each of devices 102, 116 include video encoding and decoding components. Hence, system 100 may support one-way or two-way video transmission between source device 102 and destination device 116, e.g., for video streaming, video playback, video broadcasting, or video telephony.

In general, video source 104 represents a source of video data (i.e., raw, uncoded video data) and provides a sequential series of pictures (also referred to as "frames") of the video data to video encoder 200, which encodes data for the pictures. Video source 104 of source device 102 may include a video capture device, such as a video camera, a video archive containing previously captured raw video, and/or a video feed interface to receive video from a video content provider. As a further alternative, video source 104 may generate computer graphics-based data as the source video, or a combination of live video, archived video, and computer-generated video. In each case, video encoder 200 encodes the captured, pre-captured, or computer-generated video data. Video encoder 200 may rearrange the pictures from the received order (sometimes referred to as "display order") into a coding order for coding. Video encoder 200 may generate a bitstream including encoded video data. Source device 102 may then output the encoded video data via output interface 108 onto computer-readable medium 110 for reception and/or retrieval by, e.g., input interface 122 of destination device 116.

Memory 106 of source device 102 and memory 120 of destination device 116 represent general purpose memories. In some example, memories 106, 120 may store raw video data, e.g., raw video from video source 104 and raw, decoded video data from video decoder 300. Additionally or alternatively, memories 106, 120 may store software instructions executable by, e.g., video encoder 200 and video decoder 300, respectively. Although memory 106 and memory 120 are shown separately from video encoder 200 and video decoder 300 in this example, it should be understood that video encoder 200 and video decoder 300 may also include internal memories for functionally similar or equivalent purposes. Furthermore, memories 106, 120 may store encoded video data, e.g., output from video encoder 200 and input to video decoder 300. In some examples, portions of memories 106, 120 may be allocated as one or more video buffers, e.g., to store raw, decoded, and/or encoded video data.

Computer-readable medium 110 may represent any type of medium or device capable of transporting the encoded video data from source device 102 to destination device 116. In one example, computer-readable medium 110 represents a communication medium to enable source device 102 to transmit encoded video data directly to destination device 116 in real-time, e.g., via a radio frequency network or computer-based network. Output interface 108 may modulate a transmission signal including the encoded video data, and input interface 122 may demodulate the received transmission signal, according to a communication standard, such as a wireless communication protocol. The communication medium may include any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 102 to destination device 116.

In some examples, computer-readable medium 110 may include storage device 112. Source device 102 may output encoded data from output interface 108 to storage device 112. Similarly, destination device 116 may access encoded data from storage device 112 via input interface 122. Storage device 112 may include any of a variety of distributed or locally accessed data storage media such as a hard drive, Blu-ray discs, DVDs, CD-ROMs, flash memory, volatile or non-volatile memory, or any other suitable digital storage media for storing encoded video data.

In some examples, computer-readable medium 110 may include file server 114 or another intermediate storage device that may store the encoded video data generated by source device 102. Source device 102 may output encoded video data to file server 114 or another intermediate storage device that may store the encoded video data generated by source device 102. Destination device 116 may access stored video data from file server 114 via streaming or download.

File server 114 may be any type of server device capable of storing encoded video data and transmitting that encoded video data to the destination device 116. File server 114 may represent a web server (e.g., for a website), a File Transfer Protocol (FTP) server, a content delivery network device, or a network attached storage (NAS) device. Destination device 116 may access encoded video data from file server 114 through any standard data connection, including an Internet connection. This may include a wireless channel (e.g., a Wi-Fi connection), a wired connection (e.g., digital subscriber line (DSL), cable modem, etc.), or a combination of both that is suitable for accessing encoded video data stored on file server 114. File server 114 and input interface 122 may be configured to operate according to a streaming transmission protocol, a download transmission protocol, or a combination thereof.

Output interface 108 and input interface 122 may represent wireless transmitters/receiver, modems, wired networking components (e.g., Ethernet cards), wireless communication components that operate according to any of a variety of IEEE 802.11 standards, or other physical components. In examples where output interface 108 and input interface 122 include wireless components, output interface 108 and input interface 122 may be configured to transfer data, such as encoded video data, according to a cellular communication standard, such as 4G, 4G-LTE (Long-Term Evolution), LTE Advanced, 5G, or the like. In some examples where output interface 108 includes a wireless transmitter, output interface 108 and input interface 122 may be configured to transfer data, such as encoded video data, according to other wireless standards, such as an IEEE 802.11 specification, an IEEE 802.15 specification (e.g., ZigBee™), a Bluetooth™ standard, or the like. In some examples, source device 102 and/or destination device 116 may include respective system-on-a-chip (SoC) devices. For example, source device 102 may include an SoC device to perform the functionality attributed to video encoder 200 and/or output interface 108, and destination device 116 may include an SoC device to perform the functionality attributed to video decoder 300 and/or input interface 122.

The techniques of this disclosure may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications.

Input interface 122 of destination device 116 receives an encoded video bitstream from computer-readable medium 110 (e.g., a communication medium, storage device 112, file server 114, or the like). The encoded video bitstream may include signaling information defined by video encoder 200, which is also used by video decoder 300, such as syntax elements having values that describe characteristics and/or processing of video blocks or other coded units (e.g., slices, pictures, groups of pictures, sequences, or the like). Display device 118 displays decoded pictures of the decoded video data to a user. Display device 118 may represent any of a variety of display devices such as a cathode ray tube (CRT), a liquid crystal display (LCD), a plasma display, an organic light emitting diode (OLED) display, or another type of display device.

Although not shown in FIG. 1, in some examples, video encoder 200 and video decoder 300 may each be integrated with an audio encoder and/or audio decoder, and may include appropriate MUX-DEMUX units, or other hardware and/or software, to handle multiplexed streams including both audio and video in a common data stream. If applicable, MUX-DEMUX units may conform to the ITU H.223 multiplexer protocol, or other protocols such as the user datagram protocol (UDP).

Video encoder 200 and video decoder 300 each may be implemented as any of a variety of suitable encoder and/or decoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 200 and video decoder 300 may be included in one or more encoders or decoders, either of which may be integrated as part of a combined encoder/decoder (CODEC) in a respective device. A device including video encoder 200 and/or video decoder 300 may include an integrated circuit, a microprocessor, and/or a wireless communication device, such as a cellular telephone.

Video encoder 200 and video decoder 300 may operate according to a video coding standard, such as ITU-T H.265, also referred to as High Efficiency Video Coding (HEVC) or extensions thereto, such as the multi-view and/or scalable video coding extensions. Alternatively, video encoder 200 and video decoder 300 may operate according to other proprietary or industry standards, such as the Joint Exploration Test Model (JEM) or ITU-T H.266, also referred to as Versatile Video Coding (VVC). A recent draft of the VVC standard is described in Bross, et al. "Versatile Video Coding (Draft 4)," Joint Video Experts Team (JVET) of ITU-T SG 16 WP 3 and ISO/IEC JTC 1/SC 29/WG 11, 13th Meeting: Marrakech, MA, 9-18 January 2019, JVET-M1001-v5 (hereinafter "VVC Draft 4"). The techniques of this disclosure, however, are not limited to any particular coding standard.

In general, video encoder 200 and video decoder 300 may perform block-based coding of pictures. The term "block" generally refers to a structure including data to be processed (e.g., encoded, decoded, or otherwise used in the encoding and/or decoding process). For example, a block may include a two-dimensional matrix of samples of luminance and/or chrominance data. In general, video encoder 200 and video decoder 300 may code video data represented in a YUV (e.g., Y, Cb, Cr) format. That is, rather than coding red, green, and blue (RGB) data for samples of a picture, video encoder 200 and video decoder 300 may code luminance and chrominance components, where the chrominance components may include both red hue and blue hue chrominance components. In some examples, video encoder 200 converts received RGB formatted data to a YUV representation prior to encoding, and video decoder 300 converts the YUV representation to the RGB format. Alternatively, pre- and post-processing units (not shown) may perform these conversions.

This disclosure may generally refer to coding (e.g., encoding and decoding) of pictures to include the process of encoding or decoding data of the picture. Similarly, this disclosure may refer to coding of blocks of a picture to include the process of encoding or decoding data for the blocks, e.g., prediction and/or residual coding. An encoded video bitstream generally includes a series of values for syntax elements representative of coding decisions (e.g., coding modes) and partitioning of pictures into blocks. Thus, references to coding a picture or a block should generally be understood as coding values for syntax elements forming the picture or block.

HEVC defines various blocks, including coding units (CUs), prediction units (PUs), and transform units (TUs). According to HEVC, a video coder (such as video encoder 200) partitions a coding tree unit (CTU) into CUs according to a quadtree structure. That is, the video coder partitions CTUs and CUs into four equal, nonoverlapping squares, and each node of the quadtree has either zero or four child nodes. Nodes without child nodes may be referred to as "leaf nodes," and CUs of such leaf nodes may include one or more PUs and/or one or more TUs. The video coder may further partition PUs and TUs. For example, in HEVC, a residual quadtree (RQT) represents partitioning of TUs. In HEVC, PUs represent inter-prediction data, while TUs represent residual data. CUs that are intra-predicted include intra-prediction information, such as an intra-mode indication.

As another example, video encoder 200 and video decoder 300 may be configured to operate according to JEM or VVC. According to JEM or VVC, a video coder (such as video encoder 200) partitions a picture into a plurality of coding tree units (CTUs). Video encoder 200 may partition a CTU according to a tree structure, such as a quadtree-binary tree (QTBT) structure or Multi-Type Tree (MTT) structure. The QTBT structure removes the concepts of multiple partition types, such as the separation between CUs, PUs, and TUs of HEVC. A QTBT structure includes two levels: a first level partitioned according to quadtree partitioning, and a second level partitioned according to binary tree partitioning. A root node of the QTBT structure corresponds to a CTU. Leaf nodes of the binary trees correspond to coding units (CUs).

In an MTT partitioning structure, blocks may be partitioned using a quadtree (QT) partition, a binary tree (BT) partition, and one or more types of triple tree (TT) partitions. A triple tree partition is a partition where a block is split into three sub-blocks. In some examples, a triple tree partition divides a block into three sub-blocks without dividing the original block through the center. The partitioning types in MTT (e.g., QT, BT, and TT), may be symmetrical or asymmetrical.

In some examples, video encoder 200 and video decoder 300 may use a single QTBT or MTT structure to represent each of the luminance and chrominance components, while in other examples, video encoder 200 and video decoder 300 may use two or more QTBT or MTT structures, such as one QTBT/MTT structure for the luminance component and another QTBT/MTT structure for both chrominance components (or two QTBT/MTT structures for respective chrominance components).

Video encoder 200 and video decoder 300 may be configured to use quadtree partitioning per HEVC, QTBT partitioning, MTT partitioning, or other partitioning structures. For purposes of explanation, the description of the techniques of this disclosure is presented with respect to QTBT partitioning. However, it should be understood that the techniques of this disclosure may also be applied to video coders configured to use quadtree partitioning, or other types of partitioning as well.

This disclosure may use "NxN" and "N by N" interchangeably to refer to the sample dimensions of a block (such as a CU or other video block) in terms of vertical and horizontal dimensions, e.g., 16x16 samples or 16 by 16 samples. In general, a 16x16 CU will have 16 samples in a vertical direction (y = 16) and 16 samples in a horizontal direction (x = 16). Likewise, an NxN CU generally has N samples in a vertical direction and N samples in a horizontal direction, where N represents a nonnegative integer value. The samples in a CU may be arranged in rows and columns. Moreover, CUs need not necessarily have the same number of samples in the horizontal direction as in the vertical direction. For example, CUs may include NxM samples, where M is not necessarily equal to N.

Video encoder 200 encodes video data for CUs representing prediction and/or residual information, and other information. The prediction information indicates how the CU is to be predicted in order to form a prediction block for the CU. The residual information generally represents sample-by-sample differences between samples of the CU prior to encoding and the prediction block.

To predict a CU, video encoder 200 may generally form a prediction block for the CU through inter-prediction or intra-prediction. Inter-prediction generally refers to predicting the CU from data of a previously coded picture, whereas intra-prediction generally refers to predicting the CU from previously coded data of the same picture. To perform inter-prediction, video encoder 200 may generate the prediction block using one or more motion vectors. Video encoder 200 may generally perform a motion search to identify a reference block that closely matches the CU, e.g., in terms of differences between the CU and the reference block. Video encoder 200 may calculate a difference metric using a sum of absolute difference (SAD), sum of squared differences (SSD), mean absolute difference (MAD), mean squared differences (MSD), or other such difference calculations to determine whether a reference block closely matches the current CU. In some examples, video encoder 200 may predict the current CU using uni-directional prediction or bi-directional prediction.

Some examples of JEM and VVC also provide an affine motion compensation mode, which may be considered an inter-prediction mode. In affine motion compensation mode, video encoder 200 may determine two or more motion vectors that represent non-translational motion, such as zoom in or out, rotation, perspective motion, or other irregular motion types.

To perform intra-prediction, video encoder 200 may select an intra-prediction mode to generate the prediction block. Some examples of JEM and VVC provide sixty-seven intra-prediction modes, including various directional modes, as well as planar mode and DC mode. In general, video encoder 200 selects an intra-prediction mode that describes neighboring samples to a current block (e.g., a block of a CU) from which to predict samples of the current block. Such samples may generally be above, above and to the left, or to the left of the current block in the same picture as the current block, assuming video encoder 200 codes CTUs and CUs in raster scan order (left to right, top to bottom).

Video encoder 200 encodes data representing the prediction mode for a current block. For example, for inter-prediction modes, video encoder 200 may encode data representing which of the various available inter-prediction modes is used, as well as motion information for the corresponding mode. For uni-directional or bi-directional inter-prediction, for example, video encoder 200 may encode motion vectors using advanced motion vector prediction (AMVP) or merge mode. Video encoder 200 may use similar modes to encode motion vectors for affine motion compensation mode.

Video encoder 200 may signal motion parameters of a block in various ways. Such motion parameters may include motion vectors, reference indexes, reference picture list indicators, and/or other data related to motion. In some examples, video encoder 200 and video decoder 300 may use motion prediction to reduce the amount of data used for signaling motion parameters. Motion prediction may include the determination of motion parameters of a block (e.g., a PU, a CU, etc.) based on motion parameters of one or more other blocks. There are various types of motion prediction. For instance, merge mode and advanced motion vector prediction (AMVP) mode are two types of motion prediction.

In merge mode, video encoder 200 generates a candidate list. The candidate list includes a set of candidates that indicate the motion parameters of one or more source blocks. The source blocks may spatially or temporally neighbor a current block. Furthermore, in merge mode, video encoder 200 may select a candidate from the candidate list and may use the motion parameters indicated by the selected candidate as the motion parameters of the current block. Video encoder 200 may signal the position in the candidate list of the selected candidate. Video decoder 300 may determine, based on information obtained from a bitstream, the index into the candidate list. In addition, video decoder 300 may generate the same candidate list and may determine, based on the index, the selected candidate. Video decoder 300 may then use the motion parameters of the selected candidate to generate a predictor block for the current block.

Skip mode is similar to merge mode. In skip mode, video encoder 200 and video decoder 300 generate and use a candidate list in the same way that video encoder 200 and video decoder 300 use the candidate list in merge mode. However, when video encoder 200 signals the motion parameters of a current block using skip mode, video encoder 200 does not signal any residual data for the current block. Accordingly, video decoder 300 may determine a predictor block for the current block based on one or more reference blocks indicated by the motion parameters of a selected candidate in the candidate list. Video decoder 30 may then reconstruct samples in a coding block of the current block such that the reconstructed samples are equal to corresponding samples in the predictor block of the current block.

AMVP mode is similar to merge mode in that video encoder 200 may generate a candidate list for a current block and may select a candidate from the candidate list. However, for each respective reference block used in determining a predictor block for the current block, video encoder 200 may signal a respective motion vector difference (MVD) for the current block, a respective reference index for the current block, and a respective candidate index indicating a selected candidate in the candidate list. An MVD for a block may indicate a difference between a motion vector of the block and a motion vector of the selected candidate. The reference index for the current block indicates a reference picture from which a reference block is determined.

Furthermore, when AMVP mode is used, for each respective reference block used in determining a predictor block for the current block, video decoder 300 may determine a MVD for the current block, a reference index for the current block, and a candidate index and a motion vector prediction (MVP) flag. Video decoder 300 may generate the same candidate list and may determine, based on the candidate index, a selected candidate in the candidate list. As before, this candidate list may include motion vectors of neighboring blocks that are associated with the same reference index as well as a temporal motion vector predictor which is derived based on the motion parameters of the neighboring block of the co-located block in a temporal reference picture. Video decoder 300 may recover a motion vector of the current block by adding the MVD to the motion vector indicated by the selected AMVP candidate. That is, video decoder 300 may determine, based on a motion vector indicated by the selected AMVP candidate and the MVD, the motion vector of the current block. Video decoder 300 may then use the recovered motion vector or motion vectors of the current block to generate predictor blocks for the current block.

When a video coder (e.g., video encoder 200 or video decoder 300) generates an AMVP candidate list for a current block, the video coder may derive one or more AMVP candidates based on the motion parameters of reference blocks (e.g., spatially-neighboring blocks) that contain locations that spatially neighbor the current PU and one or more AMVP candidates based on motion parameters of PUs that temporally neighbor the current PU. The candidate list may include motion vectors of reference blocks that are associated with the same reference index as well as a temporal motion vector predictor which is derived based on the motion parameters of the neighboring block of the co-located block in a temporal reference picture. A candidate in a merge candidate list or an AMVP candidate list is based on the motion parameters of a reference block that temporally neighbors a current block. This disclosure may use the term "temporal motion vector predictor" to refer to a block that is in a different time instance than the current block and is used for motion vector prediction.

Following prediction, such as intra-prediction or inter-prediction of a block, video encoder 200 may calculate residual data for the block. The residual data, such as a residual block, represents sample by sample differences between the block and a prediction block for the block, formed using the corresponding prediction mode. Video encoder 200 may apply one or more transforms to the residual block, to produce transformed data in a transform domain instead of the sample domain. For example, video encoder 200 may apply a discrete cosine transform (DCT), an integer transform, a wavelet transform, or a conceptually similar transform to residual video data. Additionally, video encoder 200 may apply a secondary transform following the first transform, such as a mode-dependent non-separable secondary transform (MDNSST), a signal dependent transform, a Karhunen-Loeve transform (KLT), or the like. Video encoder 200 produces transform coefficients following application of the one or more transforms.

As noted above, following any transforms to produce transform coefficients, video encoder 200 may perform quantization of the transform coefficients. Quantization generally refers to a process in which transform coefficients are quantized to possibly reduce the amount of data used to represent the transform coefficients, providing further compression. By performing the quantization process, video encoder 200 may reduce the bit depth associated with some or all of the transform coefficients. For example, video encoder 200 may round an n-bit value down to an m-bit value during quantization, where $n$ is greater than $m.$ In some examples, to perform quantization, video encoder 200 may perform a bitwise right-shift of the value to be quantized.

Following quantization, video encoder 200 may scan the transform coefficients, producing a one-dimensional vector from the two-dimensional matrix including the quantized transform coefficients. The scan may be designed to place higher energy (and therefore lower frequency) transform coefficients at the front of the vector and to place lower energy (and therefore higher frequency) transform coefficients at the back of the vector. In some examples, video encoder 200 may utilize a predefined scan order to scan the quantized transform coefficients to produce a serialized vector, and then entropy encode the quantized transform coefficients of the vector. In other examples, video encoder 200 may perform an adaptive scan. After scanning the quantized transform coefficients to form the one-dimensional vector, video encoder 200 may entropy encode the one-dimensional vector, e.g., according to context-adaptive binary arithmetic coding (CABAC). Video encoder 200 may also entropy encode values for syntax elements describing metadata associated with the encoded video data for use by video decoder 300 in decoding the video data.

To perform CABAC, video encoder 200 may assign a context within a context model to a symbol to be transmitted. The context may relate to, for example, whether neighboring values of the symbol are zero-valued or not. The probability determination may be based on a context assigned to the symbol.

Video encoder 200 may further generate syntax data, such as block-based syntax data, picture-based syntax data, and sequence-based syntax data, to video decoder 300, e.g., in a picture header, a block header, a slice header, or other syntax data, such as a sequence parameter set (SPS), picture parameter set (PPS), or video parameter set (VPS). Video decoder 300 may likewise decode such syntax data to determine how to decode corresponding video data.

A slice of a picture may include an integer number of blocks of the picture. For example, a slice of a picture may include an integer number of CTUs of the picture. The CTUs of a slice may be ordered consecutively in a scan order, such as a raster scan order. A tile scan is a specific sequential ordering of CTUs partitioning a picture in which the CTUs are ordered consecutively in CTU raster scan in a tile, whereas tiles in a picture are ordered consecutively in a raster scan of the tiles of the picture. A tile is a rectangular region of CTUs within a particular tile column and a particular tile row in a picture.

In this manner, video encoder 200 may generate a bitstream including encoded video data, e.g., syntax elements describing partitioning of a picture into blocks (e.g., CUs) and prediction and/or residual information for the blocks. Ultimately, video decoder 300 may receive the bitstream and decode the encoded video data.

In general, video decoder 300 performs a reciprocal process to that performed by video encoder 200 to decode the encoded video data of the bitstream. For example, video decoder 300 may decode values for syntax elements of the bitstream using CABAC in a manner substantially similar to, albeit reciprocal to, the CABAC encoding process of video encoder 200. The syntax elements may define partitioning information for partitioning of a picture into CTUs and partitioning of each CTU according to a corresponding partition structure, such as a QTBT structure, to define CUs of the CTU. The syntax elements may further define prediction and residual information for blocks (e.g., CUs) of video data.

The residual information may be represented by, for example, quantized transform coefficients. Video decoder 300 may inverse quantize and inverse transform the quantized transform coefficients of a block to reproduce a residual block for the block. Video decoder 300 uses a signaled prediction mode (intra- or inter-prediction) and related prediction information (e.g., motion information for inter-prediction) to form a prediction block for the block. Video decoder 300 may then combine the prediction block and the residual block (on a sample-by-sample basis) to reproduce the original block. Video decoder 300 may perform additional processing, such as performing a deblocking process to reduce visual artifacts along boundaries of the block.

In the following section, video coding techniques and tools related to the techniques of this application are discussed. These video coding techniques and tools include extended merge prediction, merge mode with motion vector differences, affine merge prediction, triangle merge mode, and combined inter and intra prediction (CIIP), which are discussed below.

Extended Merge Prediction

In extended merge prediction, video encoder 200 and video decoder 300 may be configured to construct the merge candidate list by including the following five types of candidates in order:

1) Spatial MVP from spatial neighbor CUs
2) Temporal MVP from collocated CUs
3) History-based MVP from a first-in-first-out (FIFO) table
4) Pairwise average MVP
5) Zero motion vectors (MVs).

The size of the merge candidate list is signaled in a slice header. In some examples, the maximum allowed size of a merge candidate list is 6. For each CU in merge mode, an index of a merge candidate is encoded using truncated unary binarization. The first bin of the merge index is coded with context and bypass coding is used for other bins.

Merge Mode with Motion Vector Difference (MMVD)

In addition to merge mode, where the implicitly derived motion information is directly used for generating prediction samples of the current CU, MMVD is introduced in VVC. An MMVD flag is signaled right after sending a skip flag and merge flag to specify whether MMVD mode is used for a CU.

In MMVD, after a merge candidate is selected, the merge candidate is further refined by the signaled MVD information. The further information includes a merge candidate flag, an index to specify motion magnitude, and an index for indication of motion direction. In MMVD mode, one of the first two candidates in the merge candidate list is selected to be used as the MV basis. The merge candidate flag is signaled to specify which one is used.

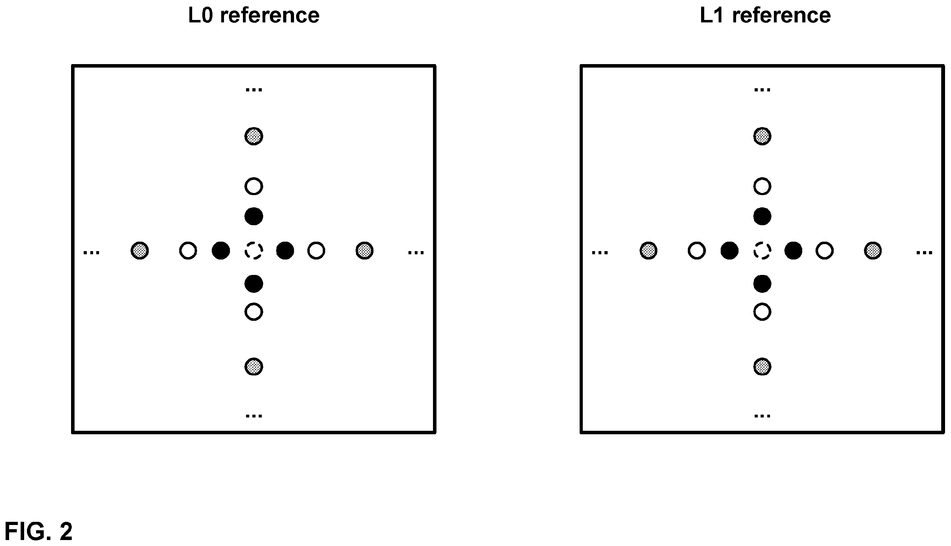

A distance index specifies motion magnitude information and indicates the pre-defined offset from the starting point. FIG. 2 is a conceptual diagram illustrating a merge mode with a motion vector difference search point. As shown in FIG. 2, an offset is added to either a horizontal component or a vertical component of a starting MV. In the example of FIG. 2, a dashed center circle representing a location indicated by the starting MV. Furthermore, in the example of FIG. 2, the locations resulting from adding the offsets to the location indicated by the starting MV are indicated by circles above, below, left, and right of the location indicated by the starting MV. The offsets may be different for a L0 motion vector and a L1 motion vector of the same block. The relation of distance index and pre-defined offset is specified in Table 1.

Table 1 - The relation of distance index and pre-defined offset

| Distance IDX | 0 | 1 | 2 | 3 | 4 | 5 | 6 | 7 |
|---|---|---|---|---|---|---|---|---|
| Offset (in unit of luma sample) | 1/4 | 1/2 | 1 | 2 | 4 | 8 | 16 | 32 |

A direction index represents the direction of the MVD relative to the starting point. The direction index can represent one of the four directions as shown in Table 2, below. It is noted that the meaning of the MVD sign could vary according to the information of starting MVs. When the starting MVs include an uni-prediction MV or bi-prediction MVs, with both lists pointing to the same side of the current picture (i.e., picture order counts (POCs) of two references are both larger than the POC of the current picture, or are both smaller than the POC of the current picture), the sign in Table 2, below, specifies the sign of MV offset added to the starting MV. When the starting MVs includes bi-prediction MVs with the two MVs pointing to the different sides of the current picture (i.e., the POC of one reference is larger than the POC of the current picture, and the POC of the other reference is smaller than the POC of the current picture), the sign in Table 2 specifies the sign of MV offset added to the list0 MV component of starting MV and the sign for the list1 MV has the opposite value.

Table 2 - Sign of MV offset specified by direction index

| Direction IDX | 00 | 01 | 10 | 11 |
|---|---|---|---|---|
| x-axis | + | - | N/A | N/A |
| y-axis | N/A | N/A | + | - |

Affine Merge Prediction

Affine merge (AF_MERGE) mode can be applied for CUs with both width and height larger than or equal to 8. In this mode, the control point motion vectors (CPMVs) of the current CU are generated based on the motion information of the spatial neighboring CUs. There can be up to five control point motion vector predictor (CPMVP) candidates. An index is signaled to indicate the candidates to be used for the current CU.

The following three types of CPMV candidates are used to form the affine merge candidate list:

1) Inherited affine merge candidates that extrapolated from the CPMVs of the neighbor CUs
2) Constructed affine merge candidates CPMVPs that are derived using the translational MVs of the neighbor CUs
3) Zero MVs

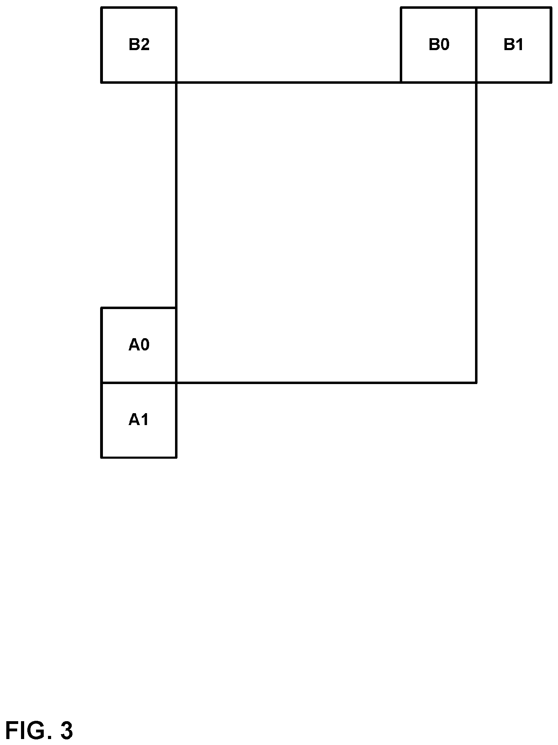

In one example, there are a maximum of two inherited affine candidates, which are derived from the affine motion models of the neighboring blocks: one inherited affine candidate from left neighboring CUs and one inherited affine candidate from above neighboring CUs. The candidate blocks are shown in FIG. 3. FIG. 3 is a conceptual diagram illustrating locations of inherited affine motion predictors. For the left predictor, the scan order is A0->A1, and for the above predictor, the scan order is B0->B1->B2. Only the first inherited candidate from each side is selected. No pruning check is performed between two inherited candidates. When a neighboring affine CU is identified, its control point motion vectors are used to derive the CPMVP candidate in the affine merge candidate list of the current CU.

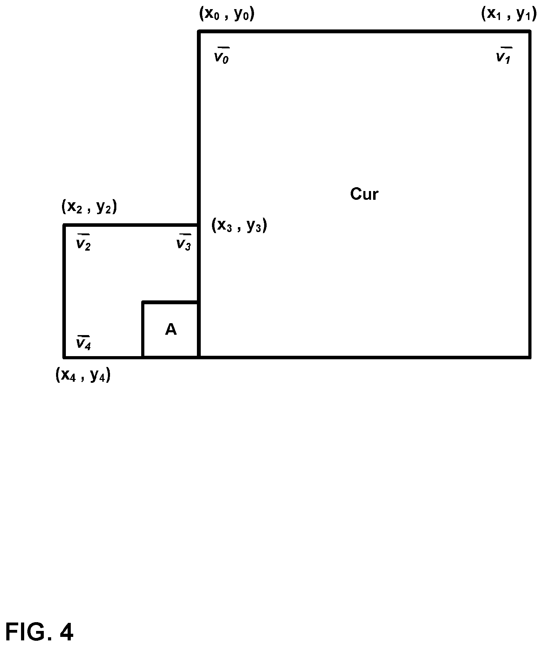

FIG. 4 is a conceptual diagram illustrating control point motion vector inheritance. As shown in FIG. 4, if the neighbor left bottom block A is coded in affine mode, the motion vectors $v_2$ , $v_3$ and $v_4$ of the top left corner, above right corner and left bottom corner of the CU which contains the block A are attained. When block A is coded with a 4-parameter affine model, the two CPMVs of the current CU (Cur) are calculated according to $v_2$, and $v_3$. When block A is coded with a 6-parameter affine model, the three CPMVs of the current CU are calculated according to $v_2$ , $v_3$ and $v_4$.

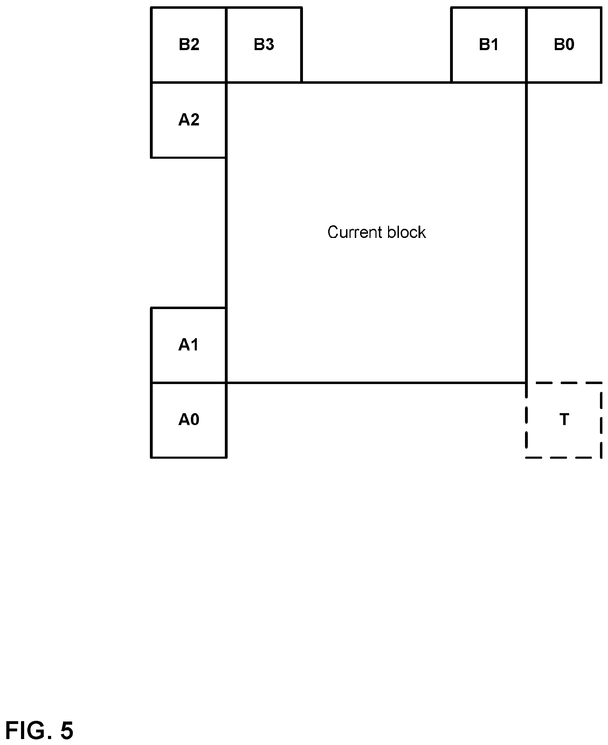

A constructed affine candidate is a candidate that is constructed by combining the neighbor translational motion information of each control point. The motion information for the control points is derived from the specified spatial neighbors and temporal neighbor shown in FIG. 5. FIG. 5 is a conceptual diagram illustrating locations of candidates for constructed affine merge mode. $CPMV_k$ (k=1, 2, 3, 4) represents the k-th control point. For $CPMV_1$, the blocks B2, B3, and A2 are checked in the order of B2->B3->A2 and the MV of the first available block is used. For $CPMV_2$, the blocks B1 and B0 are checked in the order of B 1->B0, and for $CPMV_3$, the A1, A0 blocks are checked in the order of A1->A0. The temporal motion vector predictor (TMVP) T is used as $CPMV_4$ if the TMVP is available.

After MVs of four control points are attained, affine merge candidates are constructed based on the motion information. The following example combinations of control point MVs are used to construct an affine merge candidate, in order: {$CPMV_1$, $CPMV_2$, $CPMV_3$}, {$CPMV_1$, $CPMV_2$, $CPMV_4$}, {$CPMV_1$, $CPMV_3$, $CPMV_4$}, {$CPMV_2$, $CPMV_3$, $CPMV_4$}, { $CPMV_1$, $CPMV_2$}, { $CPMV_1$, $CPMV_3$}

The combination of 3 CPMVs constructs a 6-parameter affine merge candidate, and the combination of 2 CPMVs constructs a 4-parameter affine merge candidate. To avoid a motion scaling process, if the reference indices of control points are different, the related combination of control point MVs is discarded.

After inherited affine merge candidates and constructed affine merge candidates are checked, if the list is still not full (e.g., less than a predetermined maximum), zero-MVs are inserted at the end of the list. Zero-MVs are MVs that have zero magnitude.

Triangle Merge Mode

A triangle partition mode has been introduced for inter prediction. In one example, the triangle partition mode is only applied to CUs that are 8x8 or larger and are coded in skip or merge mode. For a CU satisfying these conditions, a CU-level flag is signaled to indicate whether the triangle partition mode is applied or not.

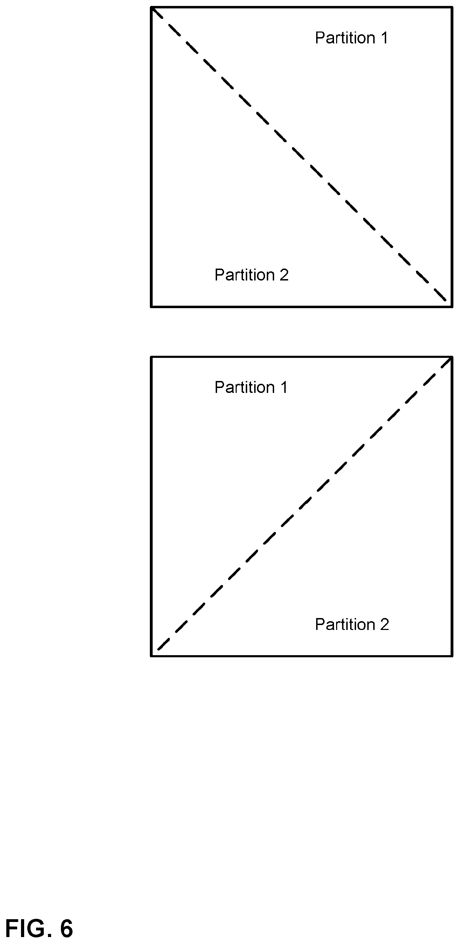

When triangle merge mode is used, a CU may be split evenly into two triangle-shaped partitions, using either the diagonal split or the anti-diagonal split, as shown in FIG. 6. FIG. 6 is a conceptual diagram illustrating triangle partition-based inter prediction. Each triangle partition in the CU is inter-predicted using its own motion. In one example, only uni-prediction is allowed for each partition. That is, each partition has one motion vector and one reference index. The uni-prediction motion constraint is applied to ensure that, like conventional bi-prediction, only two motion compensated predictions are needed for each CU. The uni-prediction motion for each partition is derived from a uni-prediction candidate list constructed using the uni-prediction candidate list construction process described below.

If the CU-level flag indicates that the current CU is coded using the triangle partition mode, a triangle partition index, for example, in the range of [0, 39] is further signaled. Using this triangle partition index, the direction of the triangle partition (diagonal or anti-diagonal), as well as the motion for each of the partitions, can be obtained through a look-up table. The transform and quantization process will be applied to the whole CU as in other prediction modes. For instance, in some examples, after predicting each of the triangle partitions, the sample values along the diagonal or anti-diagonal edge are adjusted using a blending processing with adaptive weights. The predictions for the triangle partitions after the blending process is the prediction signal for the whole CU and transform and quantization process may be applied to the whole CU as in other prediction modes. The motion field of a CU predicted using the triangle partition mode may be stored in 4x4 units.

Uni-Prediction Candidate List Construction

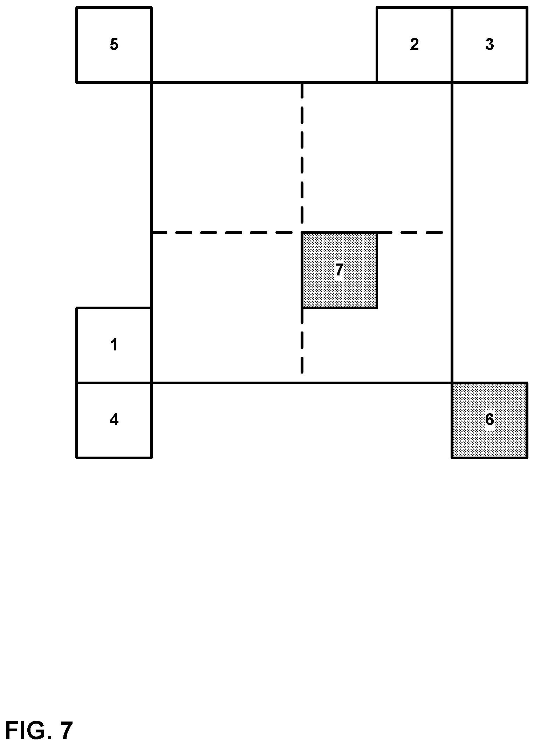

The uni-prediction candidate list includes five uni-prediction motion vector candidates. FIG. 7 is a conceptual diagram illustrating spatial and temporal neighboring blocks used to construct a uni-prediction candidate list. The uni-prediction candidate list is derived from seven neighboring blocks including five spatial neighboring blocks (labeled 1 to 5 in FIG. 7) and two temporal co-located blocks (labeled 6 to 7 in FIG. 7). The motion vectors of the seven neighboring blocks are collected and put into the uni-prediction candidate list according to the following order: first, the motion vectors of the uni-predicted neighboring blocks; then, for the bi-predicted neighboring blocks, the L0 motion vectors (that is, the L0 motion vector part of the bi-prediction MV), the L1 motion vectors (that is, the L1 motion vector part of the bi-prediction MV), and averaged motion vectors of the L0 and L1 motion vectors of the bi-prediction MVs. If the number of candidates is less than five, zero motion vectors are added to the end of the list.

Combined Inter and Intra Prediction (CIIP)

When a CU is coded in merge mode, and if the CU contains at least 64 luma samples (that is, CU width times CU height is equal to or larger than 64), an additional flag is signaled to indicate if the combined inter and intra prediction (CIIP) mode is applied to the current CU. In order to form the CIIP prediction, an intra prediction mode is first derived from two additional syntax elements (e.g., ciip_luma_mpm_flag and ciip_luma_mpm_idx). Up to four possible intra prediction modes can be used: DC, planar, horizontal, or vertical. Then, the inter prediction and intra prediction signals are derived using regular intra and inter decoding processes. Finally, weighted averaging of the inter and intra prediction signals is performed to obtain the CIIP prediction.

Intra Prediction Mode Derivation

Up to four intra prediction modes, including DC, PLANAR, HORIZONTAL, and VERTICAL modes, can be used to predict the luma component in the CIIP mode. If the CU shape is very wide (that is, width is more than two times of height), then the HORIZONTAL mode is not allowed. If the CU shape is very narrow (that is, height is more than two times of width), then the VERTICAL mode is not allowed. In these cases, only three intra prediction modes are allowed.

The CIIP mode uses three most probable modes (MPM) for intra prediction. The CIIP MPM candidate list is formed as follows:

The left and top neighboring blocks are set as A and B, respectively. The intra prediction modes of block A and block B, denoted as intraModeA and intraModeB, respectively, are derived as follows:

    a. Let X be either A or B
    b. intraModeX is set to DC if 1) block X is not available; 2) block X is not predicted using the CIIP mode or the intra mode; or 3) block B is outside of the current CTU.
    c. Otherwise, intraModeX is set to 1) DC or PLANAR if the intra prediction mode of block X is DC or PLANAR; or 2) VERTICAL if the intra prediction mode of block X is a "vertical-like" angular mode (larger than 34), or 3) HORIZONTAL if the intra prediction mode of block X is a "horizontal-like" angular mode (smaller than or equal to 34).

If intraModeA and intraModeB are the same:

    a. If intraModeA is PLANAR or DC, then the three MPMs are set to {PLANAR, DC, VERTICAL} in that order.
    b. Otherwise, the three MPMs are set to {intraModeA, PLANAR, DC} in that order.

Otherwise (intraModeA and intraModeB are different):

 a. The first two MPMs are set to {intraModeA, intraModeB} in that order.
 b. Uniqueness of PLANAR, DC and VERTICAL is checked in that order against the first two MPM candidate modes; as soon as a unique mode is found, the unique mode is added as the third MPM.

If the CU shape is very wide or very narrow as defined above, the MPM flag is inferred to be 1 without signaling. Otherwise, an MPM flag is signaled to indicate if the CIIP intra prediction mode is one of the CIIP MPM candidate modes.

If the MPM flag is 1 (i.e., the CIIP intra prediction mode is one of the CIIP MPM candidate modes), an MPM index is further signaled to indicate which one of the MPM candidate modes is used in CIIP intra prediction. Otherwise, if the MPM flag is 0 (i.e., the CIIP intra prediction mode is not one of the CIIP MPM candidate modes), the intra prediction mode is set to the "missing" mode in the MPM candidate list. For example, if the PLANAR mode is not in the MPM candidate list, then PLANAR is the missing mode, and the intra prediction mode is set to PLANAR. Because four possible intra prediction modes are allowed in CIIP, and the MPM candidate list contains only three intra prediction modes, one of the 4 possible modes must be the missing mode.

For the chroma components, the direct mode (DM) mode is always applied without additional signaling. That is, chroma uses the same prediction mode as luma. The intra prediction mode of a CIIP-coded CU may be saved and used in the intra mode coding of the future neighboring CUs.

Combining the Inter and Intra Prediction Signals

The inter prediction signal in the CIIP mode $P_{inter}$ is derived using the same inter prediction process applied to regular merge mode, and the intra prediction signal $P_{intra}$ is derived using the CIIP intra prediction mode following the regular intra prediction process. Then, the intra and inter prediction signals may be combined using weighted averaging, where the weight value depends on the intra prediction mode and where the sample is located in the coding block, as follows:

 - If the intra prediction mode is the DC or planar mode, or if the block width or height is smaller than 4, then equal weights are applied to the intra prediction and the inter prediction signals.
 - Otherwise, the weights are determined based on the intra prediction mode (either horizontal mode or vertical mode in this case) and the sample location in the block. Take the horizontal prediction mode for example (the weights for the vertical mode are derived similarly but in the orthogonal direction). Denote W as the width of the block and H as the height of the block. The coding block is first split into four equal-area parts, each of the dimension (W/4)xH. Starting from the part closest to the intra prediction reference samples and ending at the part farthest away from the intra prediction reference samples, the weight wt for each of the 4 regions is set to 6, 5, 3, and 2, respectively. The final CIIP prediction signal is derived using the following equation:

$$P_{\text{CIIP}} = \big((8 - wt) * P_{inter} + wt * P_{intra} + 4\big) \gg 3$$

Syntax for Merge Data

The syntax for merge data including extended merge data, MMVD data, Affine merge data, triangle merge data, and CIIP data in VVC Draft 4 is shown in the following tables.

Section 7.3.2.1 in VVC Draft 4

| seq_parameter_set_rbsp( ) { | Descriptor |
|---|---|
| … | |
| **sps_temporal_mvp_enabled_flag** | u(1) |
| if( sps_temporal_mvp_enabled_flag ) | |
| **sps_sbtmvp_enabled_flag** | u(1) |
| … | |

(continued)

| | |
|---|---|
| **sps_ibc_enabled_flag** | u(1) |
| **sps_ciip_enabled_flag** | u(1) |
| **sps_fpel_mmvd_enabled_flag** | u(1) |
| **sps_triangle_enabled_flag** | u(1) |
| ... | |
| } | |

Section 7.3.3.1 in VVC Draft 4

| tile_group_header ( ) { | **Descriptor** |
|---|---|
| ... | |
| if ( tile_group_type != I ) { | |
| if( sps_temporal_mvp_enabled_flag ) | |
| **tile_group_temporal_mvp_enabled_flag** | u(1) |
| if( tile_group_type = = B ) | |
| **mvd_l1_zero_flag** | u(1) |
| if( tile_group_temporal_mvp_enabled_flag ) { | |
| if( tile_group_type = = B ) | |
| **collocated_from_l0_flag** | u(1) |
| } | |
| **six_minus_max_num_merge_cand** | ue(v) |
| if( sps_affine_enable_flag ) | |
| **five_minus_max_num_subblock_merge_cand** | ue(v) |
| } | |
| ... | |
| } | |

Section 7.3.4.1 in VVC Draft 4

| tile_group_header ( ) { | **Descriptor** |
|---|---|
| ... | |
| if ( tile_group_type != I ) { | |
| if( sps_temporal_mvp_enabled_flag ) | |
| **tile_group_temporal_mvp_enabled_flag** | u(1) |
| if( tile_group_type = = B ) | |
| **mvd_11_zero_flag** | u(1) |
| if( tile_group_temporal_mvp_enabled_flag ) { | |
| if( tile_group_type = = B ) | |

(continued)

| | |
|---|---|
| **collocated_from_l0_flag** | u(1) |
| } | |
| if( ( weighted_pred_flag && tile_group_type = = P ) \|\| ( weighted_bipred_flag && tile_group = = B ) ) | |
| pred_weight_table( ) | |
| **six_minus_max_num_merge_cand** | ue(v) |
| if( sps_affine_enabled_flag ) | |
| **five_minus_max_num_subblock_merge_cand** | ue(v) |
| if( sps_fpel_mmvd_enabled_flag ) | |
| **tile_group_fpel_mmvd_enabled_flag** | u(1) |
| } else if ( sps_ibc_enabled_flag ) | |
| **six_minus_max_num_merge_cand** | ue(v) |
| ... | |
| } | |

Section 7.3.4.8 in VVC Draft 4

| merge_data( x0, y0, cbWidth, cbHeight ) { | **Descriptor** |
|---|---|
| **mmvd_flag**[ x0 ][ y0 ] | ae(v) |
| if( **mmvd_flag**[ x0 ][ y0 ] = = 1 ) { | |
| **mmvd_merge_flag**[ x0 ][ y0 ] | ae(v) |
| **mmvd_distance_idx**[ x0 ][ y0 ] | ae(v) |
| **mmvd_direction_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] = = 1 ) { | |
| if( MaxNumSubblockMergeCand > 1 ) | |
| **merge_subblock_idx**[ x0 ][ y0 ] | ae(v) |
| } else { | |
| if( sps_ciip_enabled_flag && cu_skip_flag[ x0 ][ y0 ] = = 0 && ( cbWidth * cbHeight ) >= 64 && cbWidth < 128 && cbHeight < 128 ) { | |
| **ciip_flag**[ x0 ][ y0 ] | ae(v) |
| if( ciip_flag[ x0 ][ y0 ] ) { | |
| if ( cbWidth <= 2 * cbHeight \|\| cbHeight <= 2 * cbWidth ) | |
| **ciip_luma_mpm_flag**[ x0 ][ y0 ] | ae(v) |
| if( ciip_luma_mpm_flag[ x0 ][ y0 ] ) | |
| **ciip_luma_mpm_idx**[ x0 ][ y0 ] | ae(v) |
| } | |
| } | |

(continued)

| | |
|---|---|
| if( sps_triangle_enabled_flag && tile_group_type = = B &&     ciip_flag[ x0 ][ y0 ] == 0 && cbWidth * cbHeight >= 64 ) | |
| **merge_triangle_flag**[ x0 ][ y0 ] | ae(v) |
| if( merge_triangle_flag[ x0 ][ y0 ] ) | |
| **merge_triangle_split_dir**[ x0 ][ y0 ] | ae(v) |
| **merge_triangle_idx0[ x0 ][ y0 ]** | ae(v) |
| **merge_triangle_idx1[ x0 ][ y0 ]** | ae(v) |
| else if( MaxNumMergeCand > 1 ) | |
| **merge_idx**[ x0 ][ y0 ] | ae(v) |
| } | |
| } | |
| } | |

Section 7.3.6.8 in VVC Draft 4

| merge_data( x0, y0, cbWidth, cbHeight ) { | **Descriptor** |
|---|---|
| if ( CuPredMode[ x0 ][ y0 ] = = MODE_IBC ) { | |
| if( MaxNumMergeCand > 1 ) | |
| merge_idx[ x0 ][ y0 ] | ae(v) |
| } else { | |
| **mmvd_flag**[ x0 ][ y0 ] | ae(v) |
| if( mmvd_flag[ x0 ][ y0 ] = = 1 ) { | |
| **mmvd_merge_flag**[ x0 ][ y0 ] | ae(v) |
| **mmvd_distance_idx**[ x0 ][ y0 ] | ae(v) |
| **mmvd_direction_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] = = 1 ) { | |
| if( MaxNumSubblockMergeCand > 1 ) | |
| **merge_subblock_idx**[ x0 ][ y0 ] | ae(v) |
| } else { | |
| if( sps_ciip_enabled_flag && cu_skip_flag[ x0 ][ y0 ] = = 0 &&   ( cbWidth * cbHeight ) >= 64 && cbWidth < 128 && cbHeight < 128 ) { | |
| **ciip_flag**[ x0 ][ y0 ] | ae(v) |
| if( ciip_flag[ x0 ][ y0 ] ) { | |
| if ( cbWidth <= 2 * cbHeight \|\| cbHeight <= 2 * cbWidth ) | |
| **ciip_luma_mpm_flag**[ x0 ][ y0 ] | ae(v) |
| if( ciip_luma_mpm_flag[ x0 ][ y0 ] ) | |
| **ciip_luma_mpm_idx**[ x0 ][ y0 ] | ae(v) |

(continued)

| | |
|---|---|
| } | |
| } | |
| if( sps_triangle_enabled_flag && tile_group_type = = B && ciip_flag[ x0 ][ y0 ] = = 0 && cbWidth * cbHeight >= 64 ) | |
| **merge_triangle_flag**[ x0 ][ y0 ] | ae(v) |
| if( merge_triangle_flag[ x0 ][ y0 ] ) { | |
| **merge_triangle_split_dir**[ x0 ][ y0 ] | ae(v) |
| **merge_triangle_idx0**[ x0 ][ y0 ] | ae(v) |
| **merge_triangle_idx1**[ x0 ][ y0 ] | ae(v) |
| } else if( MaxNumMergeCand > 1 ) | |
| **merge_idx**[ x0 ][ y0 ] | ae(v) |
| } | |
| } | |
| } | |
| } | |

The merge data semantics are shown as below:

**sps_temporal_mvp_enabled_flag** equal to 1 specifies that tile_group_temporal_mvp_enabled_flag is present in the tile group headers of tile groups with tile_group_type not equal to I in the coded video sequence (CVS).

**sps_temporal_mvp_enabled_flag** equal to 0 specifies that tile_group_temporal_mvp_enabled_flag is not present in tile group headers and that temporal motion vector predictors are not used in the CVS.

**sps_sbtmvp_enabled_flag** equal to 1 specifies that subblock-based temporal motion vector predictors may be used in decoding of pictures with all tile groups having tile_group_type not equal to I in the CVS. sps_sbtmvp_enabled_flag equal to 0 specifies that subblock-based temporal motion vector predictors are not used in the CVS. When sps_sbtmvp_enabled_flag is not present, sps_sbtmvp_enabled_flag is inferred to be equal to 0.

**sps_ibc_enabled_flag** equal to 1 specifies that current picture referencing may be used in decoding of pictures in the CVS. sps_ibc_enabled_flag equal to 0 specifies that current picture referencing is not used in the CVS. When sps_ibc_enabled_flag is not present, sps_ibc_enabled_flag is inferred to be equal to 0.

**sps_ciip_enabled_flag** specifies that ciip_flag may be present in the coding unit syntax for inter coding units. sps_ciip_enabled_flag equal to 0 specifies that ciip_flag is not present in the coding unit syntax for inter coding units.

**sps_fpel_mmvd_enabled_flag** equal to 1 specifies that merge mode with motion vector difference is using integer sample precision. sps_fpel_mmvd_enabled_flag equal to 0 specifies that merge mode with motion vector difference can use fractional sample precision.

**sps_triangle_enabled_flag** specifies whether triangular shape based motion compensation can be used for inter prediction. sps_triangle_enabled_flag equal to 0 specifies that the syntax shall be constrained such that no triangular shape based motion compensation is used in the CVS, and merge_triangle_flag, merge_triangle_split_dir, merge_triangle_idx0, and merge_triangle_idx1 are not present in coding unit syntax of the CVS. sps_triangle_enabled_flag equal to 1 specifies that triangular shape based motion compensation can be used in the CVS.

**tile_group_temporal_mvp_enabled_flag** specifies whether temporal motion vector predictors can be used for inter prediction. If tile_group_temporal_mvp_enabled_flag is equal to 0, the syntax elements of the current picture shall be constrained such that no temporal motion vector predictor is used in decoding of the current picture. Otherwise (tile_group_temporal_mvp_enabled_flag is equal to 1), temporal motion vector predictors may be used in decoding of the current picture. When not present, the value of tile_group_temporal_mvp_enabled_flag is inferred to be equal to 0.

**mvd_l1_zero_flag** equal to 1 indicates that the mvd_coding( x0, y0, 1 ) syntax structure is not parsed and MvdL1 [ x0 ][ y0 ][ compIdx ] is set equal to 0 for compIdx = 0..1. mvd_l1_zero_flag equal to 0 indicates that the mvd_coding( x0, y0, 1 ) syntax structure is parsed.

**collocated_from_l0_flag** equal to 1 specifies that the collocated picture used for temporal motion vector prediction is derived from reference picture list 0. collocated_from_l0_flag equal to 0 specifies that the collocated picture used for temporal motion vector prediction is derived from reference picture list 1. When collocated_from_l0_flag is not present, collocated_from_l0_flag is inferred to be equal to 1.

**six_minus_max_num_merge_cand** specifies the maximum number of merging motion vector prediction (MVP) candidates supported in the tile group subtracted from 6. The maximum number of merging MVP candidates, MaxNumMergeCand is derived as follows:

$$MaxNumMergeCand = 6 - six\_minus\_max\_num\_merge\_cand$$

The value of MaxNumMergeCand shall be in the range of 1 to 6, inclusive.

**five_minus_max_num_subblock_merge_cand** specifies the maximum number of subblock-based merging motion vector prediction (MVP) candidates supported in the tile group subtracted from 5. When five_minus_max_num_subblock merge_cand is not present, five_minus_max_num_subblock_merge_cand is inferred to be equal to 5 - sps_sbtmvp_enabled_flag. The maximum number of subblock-based merging MVP candidates, MaxNum-SubblockMergeCand is derived as follows:

MaxNumSubblockMergeCand = 5 - five_minus_max_num_subblock_merge_cand The value of MaxNumSubblockMergeCand shall be in the range of 0 to 5, inclusive.

**tile_group_fpel_mmvd_enabled_flag** equal to 1 specifies that merge mode with motion vector difference uses integer sample precision in the current tile group. tile_group_fpel_mmvd_enabled_flag equal to 0 specifies that merge mode with motion vector difference can use fractional sample precision in the current tile group. When not present, the value of tile_group_fpel_mmvd_enabled_flag is inferred to be 0.

**mmvd_flag**[ x0 ][ y0 ] equal to 1 specifies that merge mode with motion vector difference is used to generate the inter prediction parameters of the current coding unit. The array indices x0, y0 specify the location ( x0, y0 ) of the top-left luma sample of the considered coding block relative to the top-left luma sample of the picture. When mmvd_flag[ x0 ][ y0 ] is not present, mmvd_flag[ x0 ][ y0 ] is inferred to be equal to 0.

**mmvd_merge_flag**[ x0 ][ y0 ] specifies whether the first (0) or the second (1) candidate in the merging candidate list is used with the motion vector difference derived from mmvd_distance_idx[ x0 ][ y0 ] and mmvd_direction_idx[ x0 ][ y0 ]. The array indices x0, y0 specify the location ( x0, y0 ) of the top-left luma sample of the considered coding block relative to the top-left luma sample of the picture.

**mmvd_distance_idx**[ x0 ][ y0 ] specifies the index used to derive MmvdDistance[ x0 ][ y0 ] as specified in Table 4. The array indices x0, y0 specify the location ( x0, y0 ) of the top-left luma sample of the considered coding block relative to the top-left luma sample of the picture.

**Table 4 - Specification of MmvdDistance[ x0 ][ y0 ] based on mmvd_distance_idx[ x0 ][ y0 ].**

| mmvd_distance_idx[ x0 ][ y0 ] | MmvdDistance[ x0 ][ y0 ] |
|---|---|
| 0 | 1 |
| 1 | 2 |
| 2 | 4 |
| 3 | 8 |
| 4 | 16 |
| 5 | 32 |
| 6 | 64 |
| 7 | 128 |

Another version of Table 4 is presented below:

| mmvd_distance_idx[ x0 ][ y0 ] | MmvdDistance[ x0 ][ y0 ] | |
|---|---|---|
| | tile_group_fpel_mmvd_ena bled_flag = = 0 | tile_group_fpel_mmvd_ena bled_flag = = 1 |
| 0 | 1 | 4 |
| 1 | 2 | 8 |
| 2 | 4 | 16 |
| 3 | 8 | 32 |

(continued)

| mmvd_distance_idx[ x0 ][ y0 ] | MmvdDistance[ x0 ][ y0 ] | |
| --- | --- | --- |
| | tile_group_fpel_mmvd_ena bled_flag = = 0 | tile_group_fpel_mmvd_ena bled_flag = = 1 |
| 4 | 16 | 64 |
| 5 | 32 | 128 |
| 6 | 64 | 256 |
| 7 | 128 | 512 |

**mmvd_direction_idx**[ x0 ][ y0 ] specifies index used to derive MmvdSign[ x0 ][ y0 ] as specified in Table 5. The array indices x0, y0 specify the location ( x0, y0 ) of the top-left luma sample of the considered coding block relative to the top-left luma sample of the picture.

**Table 5** - **Specification of MmvdSign[ x0 ][ y0 ] based on mmvd_direction_idx[ x0 ][ y0 ]**

| mmvd_direction_idx[ x0 ][ y0 ] | MmvdSign[ x0 ][ y0 ][0] | MmvdSign[ x0 ][ y0 ][1] |
| --- | --- | --- |
| 0 | +1 | 0 |
| 1 | -1 | 0 |
| 2 | 0 | +1 |
| 3 | 0 | -1 |

Both components of the merge plus MVD offset MmvdOffset[ x0 ][ y0 ] are derived as follows:

MmvdOffset[ x0 ][ y0 ][ 0 ] = ( MmvdDistance[ x0 ][ y0 ] << 2 ) * MmvdSign[ x0 ][ y0 ][0] MmvdOffset[ x0 ][ y0 ][ 1 ] = ( MmvdDistance[ x0 ][ y0 ] << 2 ) * MmvdSign[ x0 ][ y0 ][1]

**merge_subblock_flag**[ x0 ][ y0 ] specifies whether the subblock-based inter prediction parameters for the current coding unit are inferred from neighboring blocks. The array indices x0, y0 specify the location ( x0, y0 ) of the top-left luma sample of the considered coding block relative to the top-left luma sample of the picture. When merge_subblock_flag [ x0 ][ y0 ] is not present, merge_subblock_flag[ x0 ][ y0 ] is inferred to be equal to 0.
**merge_subblock_idx**[ x0 ][ y0 ] specifies the merging candidate index of the subblock-based merging candidate list where x0, y0 specify the location ( x0, y0 ) of the top-left luma sample of the considered coding block relative to the top-left luma sample of the picture. When merge_subblock_idx[ x0 ][ y0 ] is not present, merge_subblock_idx[ x0 ][ y0 ] is inferred to be equal to 0.
**ciip_flag**[ x0 ][ y0 ] specifies whether the combined inter-picture merge and intra-picture prediction is applied for the current coding unit. The array indices x0, y0 specify the location ( x0, y0 ) of the top-left luma sample of the considered coding block relative to the top-left luma sample of the picture. When ciip_flag[ x0 ][ y0 ] is not present, ciip_flag[ x0 ][ y0 ] is inferred to be equal to 0.
The syntax elements **ciip_luma_mpm_flag**[ x0 ][ y0 ], and **ciip_luma_mpm_idx**[ x0 ][ y0 ] specify the intra prediction mode for luma samples used in combined inter-picture merge and intra-picture prediction. The array indices x0, y0 specify the location ( x0 , y0 ) of the top-left luma sample of the considered coding block relative to the top-left luma sample of the picture. The intra prediction mode is derived according to clause 8.4.5 of VVC Draft 4.
When ciip_luma_mpm_flag[ x0 ][ y0 ] is not present, ciip_luma_mpm_flag[ x0 ][ y0 ] is inferred as follows:

- If cbWidth is greater than 2 * cbHeight or cbHeight is greater than 2 * cbWidth, ciip_luma_mpm_flag[ x0 ][ y0 ] is inferred to be equal to 1.
- Otherwise, ciip_luma_mpm_flag[ x0 ][ y0 ] is inferred to be equal to 0.

**merge_triangle_flag**[ x0 ][ y0 ] equal to 1 specifies that for the current coding unit, when decoding a B tile group, triangular shape based motion compensation is used to generate the prediction samples of the current coding unit. merge_triangle_flag[ x0 ][ y0 ] equal to 0 specifies that the coding unit is not predicted by triangular shape based motion compensation. When merge_triangle_flag[ x0 ][ y0 ] is not present, merge_triangle_flag[ x0 ][ y0 ] is inferred to be equal to 0.

**merge_triangle_split_dir**[ x0 ][ y0 ] specifies the splitting direction of merge triangle mode. The array indices x0, y0 specify the location ( x0, y0 ) of the top-left luma sample of the considered coding block relative to the top-left luma sample of the picture. When merge _triangle_split_dir[ x0 ][ y0 ] is not present, merge_triangle_split_dir[ x0 ][ y0 ] is inferred to be equal to 0.

**merge_triangle_idx0**[ x0 ][ y0 ] specifies the first triangle merging candidate index of the triangular shape based motion compensation candidate list where x0, y0 specify the location ( x0, y0 ) of the top-left luma sample of the considered coding block relative to the top-left luma sample of the picture. When merge_triangle_idx0[ x0 ][ y0 ] is not present, merge_triangle_idx0[ x0 ][ y0 ] is inferred to be equal to 0.

**merge_triangle_idx1**[ x0 ][ y0 ] specifies the second merging candidate index of the triangular shape based motion compensation candidate list where x0, y0 specify the location ( x0, y0 ) of the top-left luma sample of the considered coding block relative to the top-left luma sample of the picture. When merge _triangle_idx1[ x0 ][ y0 ] is not present, merge _triangle_idx1[ x0 ][ y0 ] is inferred to be equal to 0.

In Section 8.4.4.2 in JVET-M1001, Versatile Video Coding (Draft 4), **merge_triangle_idx**[ x0 ][ y0 ] is described as follows:

- The variables m and n, being the candidates in the merging candidate list mergeCandList, are derived using merge_triangle_idx[ xCb ][ yCb ] as specified in Table 8-10.

- The following assignments are made with M and N being the candidates at position m and n in the merging candidate list mergeCandList ( M = mergeCandList[ m ] and N = mergeCandList[ n ] ):

$$predFlagLA = ( predFlagL0M == 1 ) ? 0 : 1 \qquad (8\text{-}511)$$

$$predFlagLB = ( predFlagL0N == 1 ) ? 0 : 1 \qquad (8\text{-}512)$$

$$refIdxLA = ( predFlagL0M == 1 ) ? refIdxL0M : refIdxL1M \qquad (8\text{-}513)$$

$$refIdxLB = ( predFlagL0N == 1 ) ? refIdxL0N : refIdxL1N \qquad (8\text{-}514)$$

$$mvLA[ 0 ] = ( predFlagL0M == 1 ) ? mvL0M[ 0 ] : mvL1M[ 0 ] \qquad (8\text{-}515)$$

$$mvLA[ 1 ] = ( predFlagL0M == 1 ) ? mvL0M[ 1 ] : mvL1M[ 1 ] \qquad (8\text{-}516)$$

$$mvLB[ 0 ] = ( predFlagL0N == 1 ) ? mvL0N[ 0 ] : mvL1N[ 0 ] \qquad (8\text{-}517)$$

$$mvLB[ 1 ] = ( predFlagL0N == 1 ) ? mvL0N[ 1 ] : mvL1N[ 1 ] \qquad (8\text{-}518)$$

*Table 8-10 – Specification of m and n using merge_triangle_idx[ xCb ][ yCb ]*

| merge_triangle_idx[ xCb ][ yCb ] | 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|
| m | 1 | 0 | 0 | 0 | 2 | 0 | 0 | 1 | 3 | 4 | 0 | 1 | 1 | 0 | 0 | 1 | 1 | 1 | 1 | 2 |
| n | 0 | 1 | 2 | 1 | 0 | 3 | 4 | 0 | 0 | 0 | 2 | 2 | 2 | 4 | 3 | 3 | 4 | 4 | 3 | 1 |

| merge_triangle_idx[ xCb ][ yCb ] | 20 | 21 | 22 | 23 | 24 | 25 | 26 | 27 | 28 | 29 | 30 | 31 | 32 | 33 | 34 | 35 | 36 | 37 | 38 | 39 |
|---|---|---|---|---|---|---|---|---|---|---|---|---|---|---|---|---|---|---|---|---|
| m | 2 | 2 | 4 | 3 | 3 | 3 | 4 | 3 | 2 | 4 | 4 | 2 | 4 | 3 | 4 | 3 | 2 | 2 | 4 | 3 |
| n | 0 | 1 | 3 | 0 | 2 | 4 | 0 | 1 | 3 | 1 | 1 | 3 | 2 | 2 | 3 | 1 | 4 | 4 | 2 | 4 |
| | | | | | | | | | | | | | | | | | | | | |

**merge_idx**[ x0 ][ y0 ] specifies the merging candidate index of the merging candidate list where x0, y0 specify the location ( x0, y0 ) of the top-left luma sample of the considered coding block relative to the top-left luma sample of the picture.

When merge_idx[ x0 ][ y0 ] is not present, merge_idx[ x0 ][ y0 ] is inferred as follows:

- If mmvd_flag[ x0 ][ y0 ] is equal to 1, merge_idx[ x0 ][ y0 ] is inferred to be equal to mmvd_merge_flag[ x0 ][ y0 ].
- Otherwise (mmvd_flag[ x0 ][ y0 ] is equal to 0), merge_idx[ x0 ][ y0 ] is inferred to be equal to 0.

It is a requirement of bitstream conformance that when the reference picture corresponding to ref_idx_l0[ x0 ][ y0 ] for the current coding unit is the current decoded picture, mmvd_flag[ x0 ][ y0 ], merge_subblock_flag[ x0 ][ y0 ], ciip_flag[ x0 ][ y0 ] and merge_triangle_flag[ x0 ][ y0 ] shall all be equal to 0.

Video encoder 200 and video decoder 300 may be configured to perform techniques for improving the syntax of merge modes as described in this disclosure. For example, video encoder 200 and video decoder 300 may be configured to code a tile-level syntax element (e.g., minus_max_num_triange_merge_cand) that indicates a maximum number of triangle merge candidates, construct a triangle merge candidate list according to the maximum number of triangle merge candidates, and code video data using the triangle merge candidate list and a triangle merge mode.

Video encoder 200 determines a maximum number of triangle merging candidates. Additionally, video encoder 200 signals a first triangle merging index syntax element in the bitstream. The first triangle merging index syntax element specifies a first triangle merging candidate index. The first triangle merging candidate index indicates a first triangle merging candidate of a triangular shape-based motion compensation candidate list. Furthermore, video encoder 200 determines whether the maximum number of triangle merging candidates is greater than 2. Based on the maximum number of triangle merging candidates being greater than 2, video encoder 200 may signal a second triangle merging index in the bitstream. The second triangle merging index specifies a second triangle merging candidate of the triangle shape-based motion compensation candidate list. However, based on the maximum number of triangle merging candidates not being greater than 2, video encoder 200 omits from the bitstream the second triangle merging index syntax element. Nevertheless, video decoder 300 may still be able to determine the value of the second triangle merging index because the second triangle merging candidate must be different from the first triangle merging candidate. In either case, video encoder 200 generates a prediction block for a CU. As part of generating the prediction block for the CU, video encoder 200 inter-predicts a first triangle partition of the CU using motion information of the first triangle merging candidate. Additionally, video encoder 200 inter-predicts a second triangle partition of the CU using motion information of the second triangle merging candidate. Video encoder 200 generates residual data for the CU based on the prediction block for the CU and samples of the CU.

Similarly, video decoder 300 determines, based on a first syntax element signaled in a bitstream that includes an encoded representation of the video data, a maximum number of triangle merging candidates. Video decoder 300 also obtains a first triangle merging index syntax element from the bitstream. The first triangle merging index syntax element specifies a first triangle merging candidate index. The first triangle merging candidate index indicates a first triangle merging candidate of a triangular shape-based motion compensation candidate list. Furthermore, video decoder 300 determines whether the maximum number of triangle merging candidates is greater than 2. Based on the maximum number of triangle merging candidates being greater than 2, video decoder 300 may obtain a second triangle merging index from the bitstream. The second triangle merging index specifies a second triangle merging candidate of the triangle shape-based motion compensation candidate list. However, based on the maximum number of triangle merging candidates not being greater than 2, video decoder 300 infers that the second triangle merging candidate index indicates a second triangle merging candidate of the triangular shape-based motion compensation candidate list without obtaining any syntax element specifying the second triangle merging candidate index from the bitstream. This is because the second triangle merging candidate must be different from the first triangle merging candidate and the maximum number of triangle candidates is not greater than 2. Furthermore, video decoder 300 generates a prediction block for a CU. As part of generating the prediction block for the CU, video decoder 300 inter-predicts a first triangle partition of the CU using motion information of the first triangle merging candidate. Additionally, video decoder 300 inter-predicts a second triangle partition of the CU using motion information of the second triangle merging candidate. Video decoder 300 reconstructs the CU based on the prediction block for the CU and residual data for the CU.

This disclosure may generally refer to "signaling" certain information, such as syntax elements. The term "signaling" may generally refer to the communication of values for syntax elements and/or other data used to decode encoded video data. That is, video encoder 200 may signal values for syntax elements in the bitstream. In general, signaling refers to generating a value in the bitstream. As noted above, source device 102 may transport the bitstream to destination device 116 substantially in real time, or not in real time, such as might occur when storing syntax elements to storage device 112 for later retrieval by destination device 116.

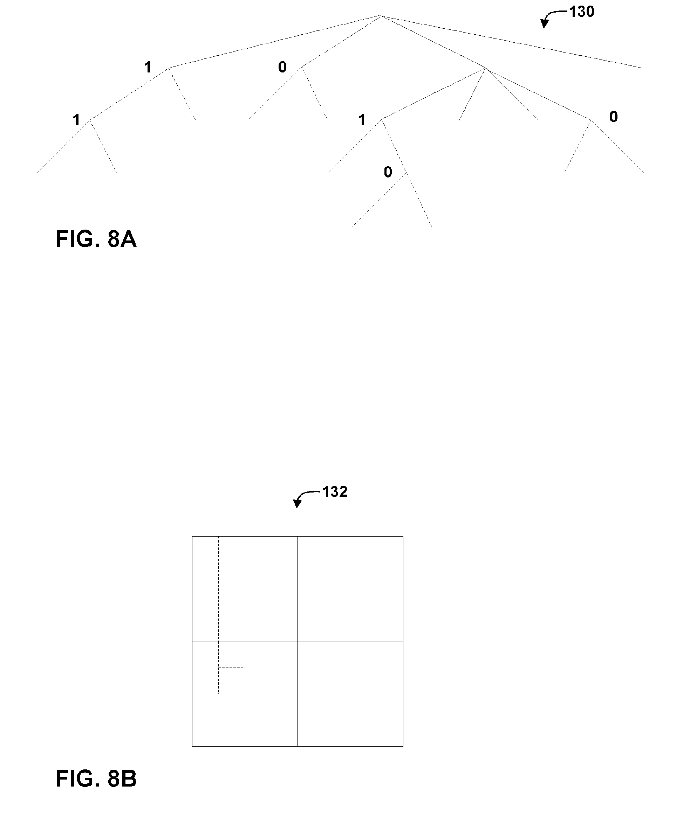

FIGS. 8A and 8B are conceptual diagram illustrating an example quadtree binary tree (QTBT) structure 130, and a corresponding coding tree unit (CTU) 132. The solid lines represent quadtree splitting, and dotted lines indicate binary tree splitting. In each split (i.e., non-leaf) node of the binary tree, one flag is signaled to indicate which splitting type (i.e., horizontal or vertical) is used, where 0 indicates horizontal splitting and 1 indicates vertical splitting in this example. For the quadtree splitting, there is no need to indicate the splitting type, since quadtree nodes split a block horizontally and vertically into 4 sub-blocks with equal size. Accordingly, video encoder 200 may encode, and video decoder 300 may decode, syntax elements (such as splitting information) for a region tree level (i.e., the first level) of QTBT structure 130 (i.e., the solid lines) and syntax elements (such as splitting information) for a prediction tree level (i.e., the second level) of QTBT structure 130 (i.e., the dashed lines). Video encoder 200 may encode, and video decoder 300 may decode, video data, such as prediction and transform data, for CUs represented by terminal leaf nodes of QTBT structure 130.

In general, CTU 132 of FIG. 8B may be associated with parameters defining sizes of blocks corresponding to nodes of QTBT structure 130 at the first and second levels. These parameters may include a CTU size (representing a size of CTU 132 in samples), a minimum quadtree size (MinQTSize, representing a minimum allowed quadtree leaf node size), a maximum binary tree size (MaxBTSize, representing a maximum allowed binary tree root node size), a maximum binary tree depth (MaxBTDepth, representing a maximum allowed binary tree depth), and a minimum binary tree size (MinBTSize, representing the minimum allowed binary tree leaf node size).

The root node of a QTBT structure corresponding to a CTU may have four child nodes at the first level of the QTBT structure, each of which may be partitioned according to quadtree partitioning. That is, nodes of the first level are either leaf nodes (having no child nodes) or have four child nodes. The example of QTBT structure 130 represents such nodes as including the parent node and child nodes having solid lines for branches. If nodes of the first level are not larger than the maximum allowed binary tree root node size (MaxBTSize), then the nodes can be further partitioned by respective binary trees. The binary tree splitting of one node can be iterated until the nodes resulting from the split reach the minimum allowed binary tree leaf node size (MinBTSize) or the maximum allowed binary tree depth (MaxBTDepth). The example of QTBT structure 130 represents such nodes as having dashed lines for branches. The binary tree leaf node is referred to as a coding unit (CU), which is used for prediction (e.g., intra-picture or inter-picture prediction) and transform, without any further partitioning. As discussed above, CUs may also be referred to as "video blocks" or "blocks."

In one example of the QTBT partitioning structure, the CTU size is set as 128x128 (luma samples and two corresponding 64x64 chroma samples), the MinQTSize is set as 16x16, the MaxBTSize is set as 64x64, the MinBTSize (for both width and height) is set as 4, and the MaxBTDepth is set as 4. The quadtree partitioning is applied to the CTU first to generate quad-tree leaf nodes. The quadtree leaf nodes may have a size from 16x16 (i.e., the MinQTSize) to 128x128 (i.e., the CTU size). If the quadtree leaf node is 128x128, the quadtree leaf node will not be further split by the binary tree, since the size exceeds the MaxBTSize (i.e., 64x64, in this example). Otherwise, the quadtree leaf node will be further partitioned by the binary tree. Therefore, the quadtree leaf node is also the root node for the binary tree and has the binary tree depth as 0. When the binary tree depth reaches MaxBTDepth (4, in this example), no further splitting is permitted. When the binary tree node has width equal to MinBTSize (4, in this example), it implies that no further vertical splitting is permitted. Similarly, a binary tree node having a height equal to MinBTSize implies that no further horizontal splitting is permitted for that binary tree node. As noted above, leaf nodes of the binary tree are referred to as CUs and are further processed according to prediction and transform without further partitioning.

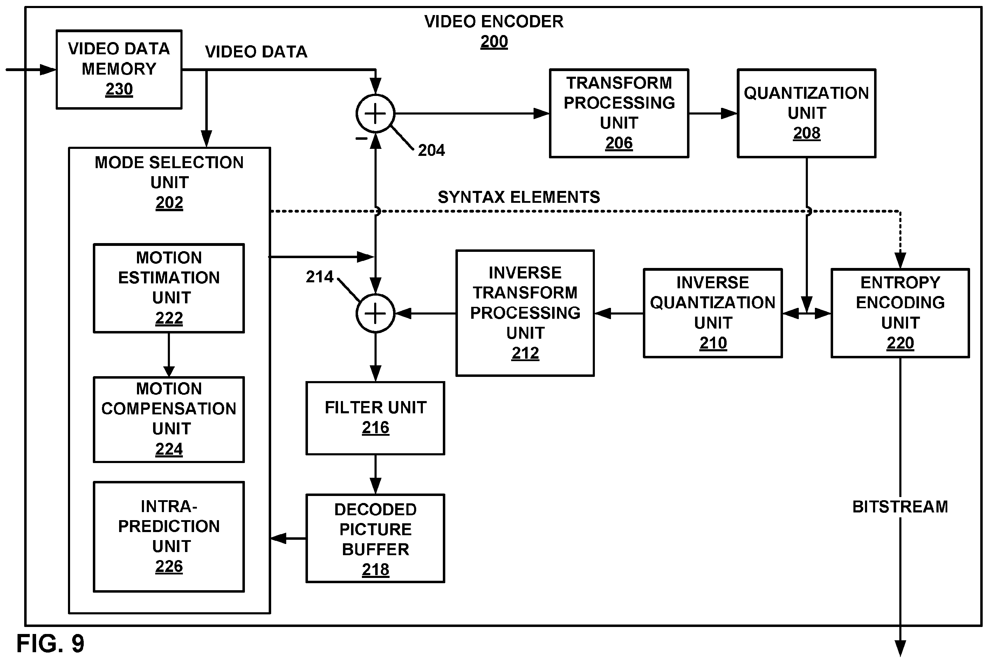

FIG. 9 is a block diagram illustrating an example video encoder 200 that may perform the techniques of this disclosure. FIG. 9 is provided for purposes of explanation and should not be considered limiting of the techniques as broadly exemplified and described in this disclosure. For purposes of explanation, this disclosure describes video encoder 200 in the context of video coding standards such as the HEVC video coding standard and the H.266 video coding standard in development. However, the techniques of this disclosure are not limited to these video coding standards and are applicable generally to video encoding and decoding.

In the example of FIG. 9, video encoder 200 includes video data memory 230, mode selection unit 202, residual generation unit 204, transform processing unit 206, quantization unit 208, inverse quantization unit 210, inverse transform processing unit 212, reconstruction unit 214, filter unit 216, decoded picture buffer (DPB) 218, and entropy encoding unit 220. Any or all of video data memory 230, mode selection unit 202, residual generation unit 204, transform processing unit 206, quantization unit 208, inverse quantization unit 210, inverse transform processing unit 212, reconstruction unit 214, filter unit 216, DPB 218, and entropy encoding unit 220 may be implemented in one or more processors or in processing circuitry. Moreover, video encoder 200 may include additional or alternative processors or processing circuitry to perform these and other functions.

Video data memory 230 may store video data to be encoded by the components of video encoder 200. Video encoder 200 may receive the video data stored in video data memory 230 from, for example, video source 104 (FIG. 1). DPB 218 may act as a reference picture memory that stores reference video data for use in prediction of subsequent video data by video encoder 200. Video data memory 230 and DPB 218 may be formed by any of a variety of memory devices, such as dynamic random access memory (DRAM), including synchronous DRAM (SDRAM), magnetoresistive RAM (MRAM), resistive RAM (RRAM), or other types of memory devices. Video data memory 230 and DPB 218 may be provided by the same memory device or separate memory devices. In various examples, video data memory 230 may be on-chip with other components of video encoder 200, as illustrated, or off-chip relative to those components.

In this disclosure, reference to video data memory 230 should not be interpreted as being limited to memory internal to video encoder 200, unless specifically described as such, or memory external to video encoder 200, unless specifically described as such. Rather, reference to video data memory 230 should be understood as reference memory that stores video data that video encoder 200 receives for encoding (e.g., video data for a current block that is to be encoded). Memory 106 of FIG. 1 may also provide temporary storage of outputs from the various units of video encoder 200.

The various units of FIG. 9 are illustrated to assist with understanding the operations performed by video encoder 200. The units may be implemented as fixed-function circuits, programmable circuits, or a combination thereof. Fixed-function circuits refer to circuits that provide particular functionality and are preset on the operations that can be performed. Programmable circuits refer to circuits that can be programmed to perform various tasks and provide flexible functionality in the operations that can be performed. For instance, programmable circuits may execute software or firmware that cause the programmable circuits to operate in the manner defined by instructions of the software or firmware. Fixed-function circuits may execute software instructions (e.g., to receive parameters or output parameters), but the types of operations that the fixed-function circuits perform are generally immutable. In some examples, one or more of the units may be distinct circuit blocks (fixed-function or programmable), and in some examples, the one or more units may be integrated circuits.

Video encoder 200 may include arithmetic logic units (ALUs), elementary function units (EFUs), digital circuits, analog circuits, and/or programmable cores, formed from programmable circuits. In examples where the operations of video encoder 200 are performed using software executed by the programmable circuits, memory 106 (FIG. 1) may store the object code of the software that video encoder 200 receives and executes, or another memory within video encoder 200 (not shown) may store such instructions.

Video data memory 230 is configured to store received video data. Video encoder 200 may retrieve a picture of the video data from video data memory 230 and provide the video data to residual generation unit 204 and mode selection unit 202. Video data in video data memory 230 may be raw video data that is to be encoded.

Mode selection unit 202 includes a motion estimation unit 222, a motion compensation unit 224, and an intra-prediction unit 226. Mode selection unit 202 may include additional functional units to perform video prediction in accordance with other prediction modes. As examples, mode selection unit 202 may include a palette unit, an intra-block copy unit (which may be part of motion estimation unit 222 and/or motion compensation unit 224), an affine unit, a linear model (LM) unit, or the like.

Mode selection unit 202 generally coordinates multiple encoding passes to test combinations of encoding parameters and resulting rate-distortion values for such combinations. The encoding parameters may include partitioning of CTUs into CUs, prediction modes for the CUs, transform types for residual data of the CUs, quantization parameters for residual data of the CUs, and so on. Mode selection unit 202 may ultimately select the combination of encoding parameters having rate-distortion values that are better than the other tested combinations.

Video encoder 200 may partition a picture retrieved from video data memory 230 into a series of CTUs and encapsulate one or more CTUs within a slice. Mode selection unit 202 may partition a CTU of the picture in accordance with a tree structure, such as the QTBT structure or the quad-tree structure of HEVC described above. As described above, video encoder 200 may form one or more CUs from partitioning a CTU according to the tree structure. Such a CU may also be referred to generally as a "video block" or "block."

In general, mode selection unit 202 also controls the components thereof (e.g., motion estimation unit 222, motion compensation unit 224, and intra-prediction unit 226) to generate a prediction block for a current block (e.g., a current CU, or in HEVC, the overlapping portion of a PU and a TU). For inter-prediction of a current block, motion estimation unit 222 may perform a motion search to identify one or more closely matching reference blocks in one or more reference pictures (e.g., one or more previously coded pictures stored in DPB 218). In particular, motion estimation unit 222 may calculate a value representative of how similar a potential reference block is to the current block, e.g., according to sum of absolute difference (SAD), sum of squared differences (SSD), mean absolute difference (MAD), mean squared differences (MSD), or the like. Motion estimation unit 222 may generally perform these calculations using sample-by-sample differences between the current block and the reference block being considered. Motion estimation unit 222 may identify a reference block having a lowest value resulting from these calculations, indicating a reference block that most closely matches the current block.

Motion estimation unit 222 may form one or more motion vectors (MVs) that define the positions of the reference blocks in the reference pictures relative to the position of the current block in a current picture. Motion estimation unit 222 may then provide the motion vectors to motion compensation unit 224. For example, for uni-directional inter-prediction, motion estimation unit 222 may provide a single motion vector, whereas for bi-directional inter-prediction, motion estimation unit 222 may provide two motion vectors. Motion compensation unit 224 may then generate a prediction block using the motion vectors. For example, motion compensation unit 224 may retrieve data of the reference block using the motion vector. As another example, if the motion vector has fractional sample precision, motion compensation unit 224 may interpolate values for the prediction block according to one or more interpolation filters. Moreover, for bi-directional inter-prediction, motion compensation unit 224 may retrieve data for two reference blocks identified by respective motion vectors and combine the retrieved data, e.g., through sample-by-sample averaging or weighted averaging.

Motion estimation unit 222 and motion compensation unit 224 may implement triangle merge mode. Thus, motion estimation unit 222 and motion compensation unit 224 may generate a triangular shape-based motion compensation candidate list. Motion estimation unit 222 and motion compensation unit 224 may inter-predict a first triangle partition of a CU using motion information of a first triangle merging candidate. Motion estimation unit 222 and motion compensation unit 224 may inter-predict a second triangle partition of the CU using motion information of a second triangle merging candidate.

As another example, for intra-prediction, or intra-prediction coding, intra-prediction unit 226 may generate the prediction block from samples neighboring the current block. For example, for directional modes, intra-prediction unit 226 may generally mathematically combine values of neighboring samples and populate these calculated values in the defined direction across the current block to produce the prediction block. As another example, for DC mode, intra-prediction unit 226 may calculate an average of the neighboring samples to the current block and generate the prediction block to include this resulting average for each sample of the prediction block.

Mode selection unit 202 provides the prediction block to residual generation unit 204. Residual generation unit 204 receives a raw, uncoded version of the current block from video data memory 230 and the prediction block from mode selection unit 202. Residual generation unit 204 calculates sample-by-sample differences between the current block and the prediction block. The resulting sample-by-sample differences define a residual block for the current block. In some examples, residual generation unit 204 may also determine differences between sample values in the residual block to generate a residual block using residual differential pulse code modulation (RDPCM). In some examples, residual generation unit 204 may be formed using one or more subtractor circuits that perform binary subtraction.

In examples where mode selection unit 202 partitions CUs into PUs, each PU may be associated with a luma prediction unit and corresponding chroma prediction units. Video encoder 200 and video decoder 300 may support PUs having various sizes. As indicated above, the size of a CU may refer to the size of the luma coding block of the CU and the size of a PU may refer to the size of a luma prediction unit of the PU. Assuming that the size of a particular CU is 2Nx2N, video encoder 200 may support PU sizes of 2Nx2N or NxN for intra prediction, and symmetric PU sizes of 2Nx2N, 2NxN, Nx2N, NxN, or similar for inter prediction. Video encoder 200 and video decoder 300 may also support asymmetric partitioning for PU sizes of 2NxnU, 2NxnD, nLx2N, and nRx2N for inter prediction.

In examples where mode selection unit does not further partition a CU into PUs, each CU may be associated with a luma coding block and corresponding chroma coding blocks. As above, the size of a CU may refer to the size of the luma coding block of the CU. The video encoder 200 and video decoder 300 may support CU sizes of 2Nx2N, 2NxN, or Nx2N.

For other video coding techniques such as an intra-block copy mode coding, an affine-mode coding, and linear model (LM) mode coding, as a few examples, mode selection unit 202, via respective units associated with the coding techniques, generates a prediction block for the current block being encoded. In some examples, such as palette mode coding, mode selection unit 202 may not generate a prediction block, and instead generate syntax elements that indicate the manner in which to reconstruct the block based on a selected palette. In such modes, mode selection unit 202 may provide these syntax elements to entropy encoding unit 220 to be encoded.

As described above, residual generation unit 204 receives the video data for the current block and the corresponding prediction block. Residual generation unit 204 then generates a residual block for the current block. To generate the residual block, residual generation unit 204 calculates sample-by-sample differences between the prediction block and the current block.

Transform processing unit 206 applies one or more transforms to the residual block to generate a block of transform coefficients (referred to herein as a "transform coefficient block"). Transform processing unit 206 may apply various transforms to a residual block to form the transform coefficient block. For example, transform processing unit 206 may apply a discrete cosine transform (DCT), a directional transform, a Karhunen-Loeve transform (KLT), or a conceptually similar transform to a residual block. In some examples, transform processing unit 206 may perform multiple transforms to a residual block, e.g., a primary transform and a secondary transform, such as a rotational transform. In some examples, transform processing unit 206 does not apply transforms to a residual block.

Quantization unit 208 may quantize the transform coefficients in a transform coefficient block, to produce a quantized transform coefficient block. Quantization unit 208 may quantize transform coefficients of a transform coefficient block according to a quantization parameter (QP) value associated with the current block. Video encoder 200 (e.g., via mode selection unit 202) may adjust the degree of quantization applied to the transform coefficient blocks associated with the current block by adjusting the QP value associated with the CU. Quantization may introduce loss of information, and thus, quantized transform coefficients may have lower precision than the original transform coefficients produced by transform processing unit 206.

Inverse quantization unit 210 and inverse transform processing unit 212 may apply inverse quantization and inverse transforms to a quantized transform coefficient block, respectively, to reconstruct a residual block from the transform coefficient block. Reconstruction unit 214 may produce a reconstructed block corresponding to the current block (albeit potentially with some degree of distortion) based on the reconstructed residual block and a prediction block generated by mode selection unit 202. For example, reconstruction unit 214 may add samples of the reconstructed residual block to corresponding samples from the prediction block generated by mode selection unit 202 to produce the reconstructed block.

Filter unit 216 may perform one or more filter operations on reconstructed blocks. For example, filter unit 216 may perform deblocking operations to reduce blockiness artifacts along edges of CUs. Operations of filter unit 216 may be skipped, in some examples.

Video encoder 200 stores reconstructed blocks in DPB 218. For instance, in examples where operations of filter unit 216 are not needed, reconstruction unit 214 may store reconstructed blocks to DPB 218. In examples where operations of filter unit 216 are needed, filter unit 216 may store the filtered reconstructed blocks to DPB 218. Motion estimation unit 222 and motion compensation unit 224 may retrieve a reference picture from DPB 218, formed from the reconstructed (and potentially filtered) blocks, to inter-predict blocks of subsequently encoded pictures. In addition, intra-prediction unit 226 may use reconstructed blocks in DPB 218 of a current picture to intra-predict other blocks in the current picture.

In general, entropy encoding unit 220 may entropy encode syntax elements received from other functional components of video encoder 200. For example, entropy encoding unit 220 may entropy encode quantized transform coefficient blocks from quantization unit 208. As another example, entropy encoding unit 220 may entropy encode prediction syntax elements (e.g., motion information for inter-prediction or intra-mode information for intra-prediction) from mode selection unit 202. Entropy encoding unit 220 may perform one or more entropy encoding operations on the syntax elements, which are another example of video data, to generate entropy-encoded data. For example, entropy encoding unit 220 may perform a context-adaptive variable length coding (CAVLC) operation, a CABAC operation, a variable-to-variable (V2V) length coding operation, a syntax-based context-adaptive binary arithmetic coding (SBAC) operation, a Probability Interval Partitioning Entropy (PIPE) coding operation, an Exponential-Golomb encoding operation, or another type of entropy encoding operation on the data. In some examples, entropy encoding unit 220 may operate in bypass mode where syntax elements are not entropy encoded.

Video encoder 200 may output a bitstream that includes the entropy encoded syntax elements needed to reconstruct blocks of a slice or picture. In particular, entropy encoding unit 220 may output the bitstream. For instance, in accordance with a technique of this disclosure, where a CU is encoded using triangle merge mode, video encoder 200 may signal a first triangle merging index syntax element in the bitstream, where the first triangle merging index syntax element specifies a first triangle merging candidate index. The first triangle merging candidate index indicates a first triangle merging candidate of a triangular shape-based motion compensation candidate list. Additionally, video encoder 200 may determine whether the maximum number of triangle merging candidates is greater than 2. Based on the maximum number of triangle merging candidates not being greater than 2, video encoder 200 may omit from the bitstream a second triangle merging index syntax element that specifies a second triangle merging candidate index indicating a second triangle merging candidate of the triangle shaped-based motion compensation candidate list. The second triangle merging candidate is different from the first triangle merging candidate.

The operations described above are described with respect to a block. Such description should be understood as being operations for a luma coding block and/or chroma coding blocks. As described above, in some examples, the luma coding block and chroma coding blocks are luma and chroma components of a CU. In some examples, the luma coding block and the chroma coding blocks are luma and chroma components of a PU.

In some examples, operations performed with respect to a luma coding block need not be repeated for the chroma coding blocks. As one example, operations to identify a motion vector (MV) and reference picture for a luma coding block need not be repeated for identifying an MV and reference picture for the chroma blocks. Rather, the MV for the luma coding block may be scaled to determine the MV for the chroma blocks, and the reference picture may be the same. As another example, the intra-prediction process may be the same for the luma coding blocks and the chroma coding blocks.

Video encoder 200 represents an example of a device configured to encode video data including a memory configured to store video data, and one or more processing units implemented in circuitry and configured to perform the techniques for improving the syntax of merge modes as described in this disclosure. For example, the one or more processing units may be configured to encode a tile-level syntax element (e.g., minus_max_num_triangle_merge_cand) that indicates a maximum number of triangle merge candidates, construct a triangle merge candidate list according to the maximum number of triangle merge candidates, and encode video data using the triangle merge candidate list and a triangle merge mode.

In some examples, video encoder 200 represents an example of a device configured to encode video data, where the device includes a memory configured to store video data, and one or more processing units implemented in circuitry and configured to determine a maximum number of triangle merging candidates; signal a first triangle merging index syntax element in the bitstream, the first triangle merging index syntax element specifying a first triangle merging candidate index, the first triangle merging candidate index indicating a first triangle merging candidate of a triangular shape-based motion compensation candidate list; determine whether the maximum number of triangle merging candidates is greater than 2; based on the maximum number of triangle merging candidates being greater than 2, signal a second triangle merging index in the bitstream, the second triangle merging index specifying a second triangle merging candidate of the triangle shape-based motion compensation candidate list; based on the maximum number of triangle merging candidates not being greater than 2, omit from the bitstream a second triangle merging index syntax element that specifies a second triangle merging candidate index indicating a second triangle merging candidate of the triangle shaped-based motion compensation candidate list, the second triangle merging candidate being different from the first triangle merging candidate; generate a prediction block for a coding unit (CU), wherein generating the prediction block for the CU includes: inter-predicting a first triangle partition of the CU using motion information of the first triangle merging candidate; and inter-predicting a second triangle partition of the CU using motion information of the second triangle merging candidate; and generate residual data for the CU based on the prediction block for the CU and samples of the CU.

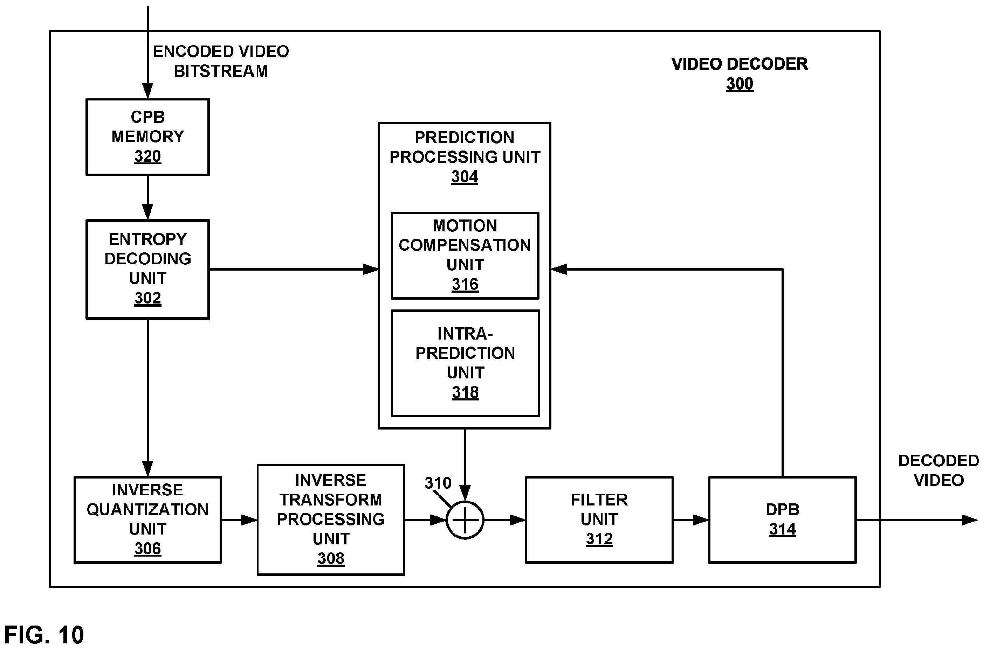

FIG. 10 is a block diagram illustrating an example video decoder 300 that may perform the techniques of this disclosure. FIG. 10 is provided for purposes of explanation and is not limiting on the techniques as broadly exemplified and described in this disclosure. For purposes of explanation, this disclosure describes video decoder 300 according to the techniques of JEM, VVC, and HEVC. However, the techniques of this disclosure may be performed by video coding devices that are configured to other video coding standards.

In the example of FIG. 10, video decoder 300 includes coded picture buffer (CPB) memory 320, entropy decoding unit 302, prediction processing unit 304, inverse quantization unit 306, inverse transform processing unit 308, reconstruction unit 310, filter unit 312, and decoded picture buffer (DPB) 314. Any or all of CPB memory 320, entropy decoding unit 302, prediction processing unit 304, inverse quantization unit 306, inverse transform processing unit 308, reconstruction unit 310, filter unit 312, and DPB 314 may be implemented in one or more processors or in processing circuitry. Moreover, video decoder 300 may include additional or alternative processors or processing circuitry to perform these and other functions.

Prediction processing unit 304 includes motion compensation unit 316 and intra-prediction unit 318. Prediction processing unit 304 may include additional units to perform prediction in accordance with other prediction modes. As examples, prediction processing unit 304 may include a palette unit, an intra-block copy unit (which may form part of motion compensation unit 316), an affine unit, a linear model (LM) unit, or the like. In other examples, video decoder 300 may include more, fewer, or different functional components.

CPB memory 320 may store video data, such as an encoded video bitstream, to be decoded by the components of video decoder 300. The video data stored in CPB memory 320 may be obtained, for example, from computer-readable medium 110 (FIG. 1). CPB memory 320 may include a CPB that stores encoded video data (e.g., syntax elements) from an encoded video bitstream. Also, CPB memory 320 may store video data other than syntax elements of a coded picture, such as temporary data representing outputs from the various units of video decoder 300. DPB 314 generally stores decoded pictures, which video decoder 300 may output and/or use as reference video data when decoding subsequent data or pictures of the encoded video bitstream. CPB memory 320 and DPB 314 may be formed by any of a variety of memory devices, such as dynamic random access memory (DRAM), including synchronous DRAM (SDRAM), magnetoresistive RAM (MRAM), resistive RAM (RRAM), or other types of memory devices. CPB memory 320 and DPB 314 may be provided by the same memory device or separate memory devices. In various examples, CPB memory 320 may be on-chip with other components of video decoder 300, or off-chip relative to those components.

Additionally or alternatively, in some examples, video decoder 300 may retrieve coded video data from memory 120 (FIG. 1). That is, memory 120 may store data as discussed above with CPB memory 320. Likewise, memory 120 may store instructions to be executed by video decoder 300, when some or all of the functionality of video decoder 300 is implemented in software to be executed by processing circuitry of video decoder 300.

The various units shown in FIG. 10 are illustrated to assist with understanding the operations performed by video decoder 300. The units may be implemented as fixed-function circuits, programmable circuits, or a combination thereof. Similar to FIG. 9, fixed-function circuits refer to circuits that provide particular functionality and are preset on the operations that can be performed. Programmable circuits refer to circuits that can be programmed to perform various tasks and provide flexible functionality in the operations that can be performed. For instance, programmable circuits may execute software or firmware that cause the programmable circuits to operate in the manner defined by instructions of the software or firmware. Fixed-function circuits may execute software instructions (e.g., to receive parameters or output parameters), but the types of operations that the fixed-function circuits perform are generally immutable. In some examples, one or more of the units may be distinct circuit blocks (fixed-function or programmable), and in some examples, the one or more units may be integrated circuits.

Video decoder 300 may include ALUs, EFUs, digital circuits, analog circuits, and/or programmable cores formed from programmable circuits. In examples where the operations of video decoder 300 are performed by software executing on the programmable circuits, on-chip or off-chip memory may store instructions (e.g., object code) of the software that video decoder 300 receives and executes.

Entropy decoding unit 302 may receive encoded video data from the CPB and entropy decode the video data to reproduce syntax elements. Prediction processing unit 304, inverse quantization unit 306, inverse transform processing unit 308, reconstruction unit 310, and filter unit 312 may generate decoded video data based on the syntax elements extracted from the bitstream.

In general, video decoder 300 reconstructs a picture on a block-by-block basis. Video decoder 300 may perform a reconstruction operation on each block individually (where the block currently being reconstructed, i.e., decoded, may be referred to as a "current block").

Entropy decoding unit 302 may entropy decode syntax elements defining quantized transform coefficients of a quantized transform coefficient block, as well as transform information, such as a quantization parameter (QP) and/or transform mode indication(s). Inverse quantization unit 306 may use the QP associated with the quantized transform coefficient block to determine a degree of quantization and, likewise, a degree of inverse quantization for inverse quantization unit 306 to apply. Inverse quantization unit 306 may, for example, perform a bitwise left-shift operation to inverse quantize the quantized transform coefficients. Inverse quantization unit 306 may thereby form a transform coefficient block including transform coefficients.

After inverse quantization unit 306 forms the transform coefficient block, inverse transform processing unit 308 may apply one or more inverse transforms to the transform coefficient block to generate a residual block associated with the current block. For example, inverse transform processing unit 308 may apply an inverse DCT, an inverse integer transform, an inverse Karhunen-Loeve transform (KLT), an inverse rotational transform, an inverse directional transform, or another inverse transform to the transform coefficient block.

Furthermore, prediction processing unit 304 generates a prediction block according to prediction information syntax elements that were entropy decoded by entropy decoding unit 302. For example, if the prediction information syntax elements indicate that the current block is inter-predicted, motion compensation unit 316 may generate the prediction block. In this case, the prediction information syntax elements may indicate a reference picture in DPB 314 from which to retrieve a reference block, as well as a motion vector identifying a location of the reference block in the reference picture relative to the location of the current block in the current picture. Motion compensation unit 316 may generally perform the inter-prediction process in a manner that is substantially similar to that described with respect to motion compensation unit 224 (FIG. 9).

Motion compensation unit 316 may implement triangle merge mode. Thus, motion compensation unit 316 may generate a triangular shape-based motion compensation candidate list. Motion compensation unit 316 may inter-predict a first triangle partition of a CU using motion information of a first triangle merging candidate. Motion compensation unit 316 may inter-predict a second triangle partition of the CU using motion information of the second triangle merging candidate.

Furthermore, to support triangle merge mode, entropy decoding unit 302 may determine, based on a first syntax element (e.g., minus_max_num_triangle_merge_cand) signaled in a bitstream, a maximum number of triangle merging candidates. Entropy decoding unit 302 may obtain a first triangle merging index syntax element from the bitstream. The first triangle merging index syntax element specifies a first triangle merging candidate index. The first triangle merging candidate index indicates the first triangle merging candidate of a triangular shape-based motion compensation candidate list. Additionally, entropy decoding unit 302 may determine whether the maximum number of triangle merging candidates is greater than 2. Based on the maximum number of triangle merging candidates being greater than 2, entropy decoding unit 302 may obtain a second triangle merging index from the bitstream. The second triangle merging index specifies the second triangle merging candidate of the triangle shape-based motion compensation candidate list. Based on the maximum number of triangle merging candidates not being greater than 2, entropy decoding unit 302 may infer that the second triangle merging candidate index indicates a second triangle merging candidate of the triangular shape-based motion compensation candidate list without obtaining any syntax element specifying the second triangle merging candidate index from the bitstream. Entropy decoding unit 302 may do so because the second triangle merging candidate must be different from the first triangle merging candidate.

As another example, if the prediction information syntax elements indicate that the current block is intra-predicted, intra-prediction unit 318 may generate the prediction block according to an intra-prediction mode indicated by the prediction information syntax elements. Again, intra-prediction unit 318 may generally perform the intra-prediction process in a manner that is substantially similar to that described with respect to intra-prediction unit 226 (FIG. 9). Intra-prediction unit 318 may retrieve data of neighboring samples to the current block from DPB 314.

Reconstruction unit 310 may reconstruct the current block using the prediction block and the residual block. For example, reconstruction unit 310 may add samples of the residual block to corresponding samples of the prediction block to reconstruct the current block.

Filter unit 312 may perform one or more filter operations on reconstructed blocks. For example, filter unit 312 may perform deblocking operations to reduce blockiness artifacts along edges of the reconstructed blocks. Operations of filter unit 312 are not necessarily performed in all examples.

Video decoder 300 may store the reconstructed blocks in DPB 314. For instance, in examples where operations of filter unit 312 are not performed, reconstruction unit 310 may store reconstructed blocks to DPB 314. In examples where operations of filter unit 312 are performed, filter unit 312 may store the filtered reconstructed blocks to DPB 314. As discussed above, DPB 314 may provide reference information, such as samples of a current picture for intra-prediction and previously decoded pictures for subsequent motion compensation, to prediction processing unit 304. Moreover, video decoder 300 may output decoded pictures from DPB for subsequent presentation on a display device, such as display device 118 of FIG. 1.

In this manner, video decoder 300 represents an example of a video decoding device including a memory configured to store video data, and one or more processing units implemented in circuitry and configured to perform the techniques for improving the syntax of merge modes as described in this disclosure. For example, the one or more processing units may be configured to decode a tile-level syntax element (e.g., minus_max_num_triange_merge_cand) that indicates a maximum number of triangle merge candidates, construct a triangle merge candidate list according to the maximum number of triangle merge candidates, and decode video data using the triangle merge candidate list and a triangle merge mode.

Furthermore, in some examples, video decoder 300 may represent an example of a video decoding device that includes a memory configured to store video data, and one or more processing units implemented in circuitry and configured to determine, based on a first syntax element signaled in a bitstream that includes an encoded representation of the video data, a maximum number of triangle merging candidates; obtain a first triangle merging index syntax element from the bitstream, the first triangle merging index syntax element specifying a first triangle merging candidate index, the first triangle merging candidate index indicating a first triangle merging candidate of a triangular shape-based motion compensation candidate list; determine whether the maximum number of triangle merging candidates is greater than 2; based on the maximum number of triangle merging candidates being greater than 2, obtain a second triangle merging index from the bitstream, the second triangle merging index specifying a second triangle merging candidate of the triangle shape-based motion compensation candidate list; based on the maximum number of triangle merging candidates not being greater than 2, infer that a second triangle merging candidate index indicates a second triangle merging candidate of the triangular shape-based motion compensation candidate list without obtaining any syntax element specifying the second triangle merging candidate index from the bitstream, the second triangle merging candidate being different from the first triangle merging candidate; generate a prediction block for a CU, wherein generating the prediction block for the CU includes: inter-predicting a first triangle partition of the CU using motion information of the first triangle merging candidate; and inter-predicting a second triangle partition of the CU using motion information of the second triangle merging candidate; and reconstruct the CU based on the prediction block for the CU and residual data for the CU.

In the current syntax design in VVC, there are no tile-level flags to define the maximum number of triangle merge candidates, MaxNumTriangleMergeCand. Note that there are already tile-level flags to define the maximum number of normal merge candidates MaxNumMergeCand and the maximum number of subblock merge candidates MaxNumSubblockMergeCand by the syntax parameters **six_minus_max_num_merge_cand** and **five_minus_max_num_subblock_merge_cand.** Note that smaller numbers of MaxNumMergeCand and MaxNumSubblockMergeCand may lead to lower complexity at the decoder side. MaxNumTriangleMergeCand is set as 5 in VVC Test Model 4. However, it may be desirable to flexibly set MaxNumTriangleMergeCand in a higher-level syntax, e.g., tile, picture parameter set (PPS), sequence parameter set (SPS), etc., to allow the setting of smaller number of MaxNumTriangleMergeCand. These techniques may fulfill the demand on the scenario that may require lower decoder complexity.

This disclosure proposes to add a tile-level syntax element **minus_max_num_triangle_merge_cand** to indicate the maximum number of triangle merge candidates, MaxNumTriangleMergeCand. MaxNumTriangleMergeCand can be derived as follows: MaxNumTriangleMergeCand = T - minus_max_num_triangle_merge_cand, where T is a pre-assigned positive integer, and the minimum value of MaxNumTriangleMergeCand could be defined as U. Therefore, minus_max_num_triangle_merge_cand can be in the range of 0 to (T-U), inclusive. One embodiment is to set T as 5 and U as 2. Then minus_max_num_triangle_merge_cand is in the range of 0 to 3, inclusive. The corresponding modification on the syntax and the semantics can be shown in the table below with tags <m>... </m>:

Section 7.3.2.1 in VVC Draft 4

| seq_parameter_set_rbsp( ) { | Descriptor |
|---|---|
| ... | |
| **sps_triangle_enabled_flag** | u(1) |
| ... | |
| } | |

Section 7.3.3.1 in VVC Draft 4

| tile_group_header ( ) { | Descriptor |
|---|---|
| ... | |
| if ( tile_group_type != I ) { | |
| if( sps_temporal_mvp_enabled_flag ) | |
| **tile_group_temporal_mvp_enabled_flag** | u(1) |
| if( tile_group_type = = B ) | |
| **mvd_11_zero_flag** | u(1) |
| if( tile_group_temporal_mvp_enabled_flag ) { | |
| if( tile_group_type = = B ) | |
| **collocated_from_l0_flag** | u(1) |
| } | |
| **six_minus_max_num_merge_cand** | ue(v) |
| if( sps_affine_enable_flag ) | |
| **five_minus_max_num_subblock_merge_cand** | ue(v) |
| <m> if( sps_triangle_enabled_flag )</m> | |
| <m> **minus_max_num_triangle_merge_cand**</m> | <m>ue(v)</m> |
| } | |
| ... | |
| } | |

In some examples, video encoder 200 does not signal and video decoder 300 does not parse **minus_max_num_triangle_merge_cand** behind **five_minus_max_num_subblock_merge_cand** and **six_minus_max_num_merge_cand.**

In certain examples described above, video encoder 200 and video decoder 300 may be configured to code a tile-level syntax element (e.g., minus_max_num_triange_merge_cand) that indicates a maximum number of triangle merge candidates, construct a triangle merge candidate list according to the maximum number of triangle merge candidates, and code video data using the triangle merge candidate list and a triangle merge mode.

In another example, MaxNumTriangleMergeCand = 2. In some examples of VVC, **merge_triangle_idx0**[ x0 ][ y0 ] and **merge_triangle_idx1**[ x0 ][ y0 ] are always parsed. This disclosure proposes to skip the parsing of **merge_triangle_idx1**[ x0 ][ y0 ] as MaxNumTriangleMergeCand = 2 since **merge_triangle_idx1**[ x0 ][ y0 ] must be the opposite number of **merge_triangle_idx0**[ x0 ][ y0 ], i.e., **merge_triangle_idx1**[ x0 ][ y0 ] = 0 as **merge_triangle_idx0** [ x0 ][ y0 ] = 1, and **merge_triangle_idx1**[ x0 ][ y0 ] = 1 as **merge_triangle_idx0**[ x0 ][ y0 ] = 0. The corresponding modification on the syntax and the semantics can be shown in the table below (marked with <m>...</m> tags):

| Section 7.3.4.8 in VVC Draft | |
|---|---|
| merge_data( x0, y0, cbWidth, cbHeight ) { | **Descriptor** |
|    **mmvd_flag**[ x0 ][ y0 ] | ae(v) |
|   if( mmvd_flag[ x0 ][ y0 ] = = 1 ) { | |
|     **mmvd_merge_flag**[ x0 ][ y0 ] | ae(v) |
|     **mmvd_distance_idx**[ x0 ][ y0 ] | ae(v) |
|     **mmvd_direction_idx**[ x0 ][ y0 ] | ae(v) |
|   } else { | |
|    if( MaxNumSubblockMergeCand > 0  &&  cbWidth >= 8  &&  cbHeight >= 8 ) | |
|     **merge_subblock_flag**[ x0 ][ y0 ] | ae(v) |
|    if( merge_subblock_flag[ x0 ][ y0 ]  = =  1 ) { | |
|    if( MaxNumSubblockMergeCand > 1 ) | |
|     **merge_subblock_idx**[ x0 ][ y0 ] | ae(v) |
|   } else { | |
|    if( sps_ciip_enabled_flag  &&  cu_skip_flag[ x0 ][ y0 ]  = =  0  && ( cbWidth * cbHeight ) >= 64  &&  cbWidth < 128  &&  cbHeight < 128 ) { | |
|     **ciip_flag**[ x0 ][ y0 ] | ae(v) |
|    if( ciip_flag[ x0 ][ y0 ] ) { | |
|     if ( cbWidth <= 2 * cbHeight  ||  cbHeight <= 2 * cbWidth ) | |
|     **ciip_luma_mpm_flag**[ x0 ][ y0 ] | ae(v) |
|     if( ciip_luma_mpm_flag[ x0 ][ y0 ] ) | |
|     **ciip_luma_mpm_idx**[ x0 ][ y0 ] | ae(v) |
|     } | |
|    } | |
|    if( sps_triangle_enabled_flag  &&  tile_group_type = = B  && ciip_flag[ x0 ][ y0 ] = = 0  &&  cbWidth * cbHeight >= 64 ) | |
|     **merge_triangle_flag**[ x0 ][ y0 ] | ae(v) |
|    if( merge_triangle_flag[ x0 ][ y0 ] ) { | |

| | |
|---|---|
| **merge_triangle_split_dir**[ x0 ][ y0 ] | ae(v) |
| **merge_triangle_idx0**[ x0 ][ y0 ] | ae(v) |
| <m>      if(MaxNumTriangleMergeCand > 2)</m> | |
| <m>        **merge_triangle_idx1**[ x0 ][ y0 ]</m> | <m>ae(v)</m> |
|     } else if( MaxNumMergeCand > 1 ) | |
|       **merge_idx**[ x0 ][ y0 ] | ae(v) |
|     } | |
|    } | |
|   } | |
|  } | |

Another illustrative example is related to the priority of the merging candidate pairs in Table 8-10 for different numbers of MaxNumTriangleMergeCand. In the current table, the binarization efficiency might be low as MaxNum-TriangleMergeCand < 4 since some merging candidate pairs (m, n) are put behind the pairs that cannot be used. One case is MaxNumTriangleMergeCand = 4: (m, n) = (3, 1) is put behind the pairs that cannot be used as MaxNumTriangle-MergeCand = 4, i.e., any pair whose m or n = 4. This disclosure describes two techniques to improve the table design. The first technique is to change the table by reordering the merging candidate pairs (m,n) based on the following priority: (m,n) = (1, 0) and (0, 1) are the first group put into the table, (m, n) = (2, 0), (2, 1), (0, 2) and (1, 2) are the second group put into the table, then (m, n) = (3, 0), (3, 1), (3, 2), (0, 3), (1, 3) and (2, 3) are the third group put into the table, and (m, n) = (4, 0), (4, 3), (4, 2), (4, 1), (0, 4), (1, 4), (2, 4) and (3, 4) are the last group put into the table. Note that the ordering of (m, n) in each group may not be limited to the embodiment shown above. Another technique is to use a switchable triangle merging table for different numbers of MaxNumTriangleMergeCand. Each value of MaxNumTriangleMergeCand corresponds to a different triangle merging table. One example is to set T as 5 and U as 2. Then MaxNumTriangleMergeCand is in the range of 2 to 5, inclusive. There will be at most 4 different triangle merging tables respectively applied to different values of MaxNum-TriangleMergeCand.

Thus, in some examples, video encoder 200 and video decoder 300 may generate the triangular shape-based motion compensation candidate list based on a table. In some such examples, entries in the table correspond to different combinations of pairs of merging candidates in a merging candidate list. The first and second triangle merging candidate indices specify respective entries in the table. The entries are ordered in the table so that no entry corresponding to a first pair of merging candidates is put behind another entry corresponding to a second pair of merging candidates if the second pair of merging candidates cannot be used given the maximum number of triangle merging candidates.

In other examples, video encoder 200 and video decoder 300 may generate the triangular shape-based motion compensation candidate list based on a selected table in a plurality of tables. Each table in the plurality of tables corresponds to a different maximum number of triangle merging candidates. The selected table corresponds to the maximum number of triangle merging candidates that was determined based on the first syntax element. Entries in the table correspond to different combinations of pairs of merging candidates in a merging candidate list. The first and second triangle merging candidate indices specify respective entries in the selected table.

In the current syntax design in VVC, there is no tile-level flag or syntax element to define the maximum number of triangle merge candidates, MaxNumTriangleMergeCand, and the maximum number of MMVD base MV candidates, MaxNumMmvdBaseMerge-Cand. Note that there are already high-level flags to define the maximum number of normal merge candidates MaxNumMergeCand and the maximum number of subblock merge candidates MaxNumSubblockMergeCand by the syntax parameters **six_minus_max_num_merge_cand** and **five_minus_max_num_subblock_merge_cand.** The smaller number of merge candidates leads to lower complexity at encoder and decoder side. It is desirable to flexibly set MaxNumTriangleMergeCand and MaxNumMmvdBaseMergeCand in a higher-level syntax, e.g., tile, PPS, SPS, etc., to allow the setting of a smaller number of MaxNumTriangleMergeCand. The smaller number of merge candidates can fulfill the demand in the scenario that may require lower encoder and decoder complexity.

This disclosure proposes several examples of changes that may improve VVC signaling. A set of enumerated examples are provided below. The enumerated examples provided below may be used individually or in combination, including in combination with examples provided elsewhere in this disclosure.

*Example 1:* In this illustrative example, an SPS-level flag **sps_mmvd_enabled_flag** is added to specify that the MMVD may be used in decoding of pictures in the CVS. The sps_mmvd_enabled_flag may allow VVC to flexibly either enable or disable MMVD in a CVS. Some lower-level flags related to MMVD could use this **sps_mmvd_enabled_flag** as a condition check to reduce the signaling overhead. In this example VVC Draft 4 is changed as shown in <!>...</!> tags:

| seq_parameter_set_rbsp( ) { | Descriptor |
|---|---|
| ... | |
| **sps_temporal_mvp_enabled_flag** | u(1) |
| if( sps_temporal_mvp_enabled_flag ) | |
| **sps_sbtmvp_enabled_flag** | u(1) |
| ... | |
| **sps_ibc_enabled_flag** | u(1) |
| **sps_ciip_enabled_flag** | u(1) |
| **sps_fpel_mmvd_enabled_flag** | u(1) |
| **sps_triangle_enabled_flag** | u(1) |
| **<!>sps_mmvd_enabled_flag</!>** | <!>u(1)</!> |
| ... | |
| } | |

*Example 2:* It is proposed to add a tile group-level syntax element (e.g., flag or other type of syntax element) **max_num_mmvd_merge_base_cand** to specify the maximum number of MMVD base merging candidates supported in the tile group. For instance, in some examples, **max_num_mmvd_merge_base_cand** specifies the maximum number of MMVD base merging candidates supported in the tile group subtracting 1. The maximum number of MMVD base merging candidates, MaxNumMmvdBaseMergeCand, may be derived (e.g., by video encoder 200 and/or video decoder 300) as follows:

$$MaxNumMmvdBaseMergeCand = 1 + max\_num\_mmvd\_merge\_base\_cand$$

In this example, the value of MaxNumMmvdBaseMergeCand shall be in the range of 1 to 2, inclusive. MaxNumMmvdBaseMergeCand allows the VVC to flexibly either enable or disable MMVD in a tile group. CU-level flags related to MMVD could use this **max_num_mmvd_merge_base_cand** to do implicit derivation and reduce the signaling overhead. Combining with Example 1, the SPS flag **sps_mmvd_enabled_flag** may be added as a condition check prior to the parsing of **max_num_mmvd_merge_base_cand** to reduce the signaling overhead. Because the MMVD base merging candidates directly reuse the first MaxNumMmvdBaseMergeCand available normal merging candidates, one of MMVD base merging candidate is useless as MaxNumMmvdBaseMergeCand = 2 and MaxNumMergeCand = 1, i.e., **max_num_mmvd_merge_base_cand** = 1 and **six_minus_max_num_merge_cand** = 5. In this case, at least one normal merging candidate is not available to MMVD base merging candidate. Because the complexity in the condition of MaxNumMergeCand = 1 can be largely reduced without compromising on the coding performance, the VVC codec can further reduce the complexity by setting MaxNumMmvdBaseMergeCand as 1 without compromising on the coding performance while **six_minus_max_num_merge_cand** = 5. Therefore, the tile group flag **six_minus_max_num_merge_cand** < 5 may be added as a condition check prior to the parsing of **max_num_mmvd_merge_base_cand** to further reduce the signaling overhead. **max_num_mmvd_merge_base_cand** can be inferred as 0 when **six_minus_max_num_merge_cand** = 5. The proposed change to VVC Draft 4 is shown in the table below with <!>...</!> tags:

| tile_group_header ( ) { | Descriptor |
|---|---|
| … | |
| if ( tile_group_type != I ) { | |
| if( sps_temporal_mvp_enabled_flag ) | |

(continued)

| | |
|---|---|
| **tile_group_temporal_mvp_enabled_flag** | u(1) |
| if( tile_group_type = = B ) | |
| **mvd_l1_zero_flag** | u(1) |
| if( tile_group_temporal_mvp_enabled_flag ) { | |
| if( tile_group_type = = B ) | |
| **collocated_from_l0_flag** | u(1) |
| } | |
| if( ( weighted_pred_flag && tile_group_type = = P ) \|\| <br> ( weighted_bipred_flag && tile_group = = B ) ) | |
| pred_weight_table( ) | |
| **six_minus_max_num_merge_cand** | ue(v) |
| <!> if( sps_mmvd_enabled_flag && six_minus_max_num_merge_cand < 5 ) <!> | |
| <!> **max_num_mmvd_merge_base_cand**<!> | <!>u(1)<!> |
| if( sps_affine_enabled_flag ) | |
| **five_minus_max_num_subblock_merge_cand** | **ue(v)** |
| if( sps_fpel_mmvd_enabled_flag ) | |
| **tile_group_fpel_mmvd_enabled_flag** | **u(1)** |
| } else if ( sps_ibc_enabled_flag ) | |
| **six_minus_max_num_merge_cand** | ue(v) |
| … | |
| **}** | |

Another example is to only use at least one of the conditions, such as **sps_mmvd_enabled_flag, six_minus_max_num_merge_cand** < 5, and other conditions as the condition checks prior to the parsing of **max_num_mmvd_merge_base_cand** to reduce the signaling overhead. In some examples, max_num_mmvd_merge_base_cand can be signaled without any conditions.

*Example 3:* This proposed method is on top of Example 2. In Example 3, a condition check is added to skip the parsing of **mmvd_merge_flag** as the number of MMVD base merging candidates is equal to 1, i.e., MaxNumMmvdBaseMergeCand > 1. If the syntax is combined with Example 1, a condition check **sps_mmvd_enabled_flag** may be added prior to **mmvd_flag** to reduce the redundant signaling overhead. The proposed change to VVC Draft 4 is shown in the table below with <!>...</!> tags:

| merge_data( x0, y0, cbWidth, cbHeight ) { | **Descriptor** |
|---|---|
| if ( CuPredMode[ x0 ][ y0 ] = = MODE_IBC ) { | |
| if( MaxNumMergeCand > 1 ) | |
| merge_idx[ x0 ][ y0 ] | ae(v) |
| } else { | |
| <!> if( sps_mmvd_enabled_flag )<!> | |
| **mmvd_flag**[ x0 ][ y0 ] | ae(v) |
| if( mmvd_flag x0 ][ y0 ] == 1 ) { | |
| <!> if( MaxNumMmvdBaseMergeCand > 1 )<!> | |
| **mmvd_merge_flag**[ x0 ][ y0 ] | ae(v) |
| **mmvd_distance_idx**[ x0 ][ y0 ] | ae(v) |

(continued)

| | |
|---|---|
| **mmvd_direction_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] = = 1 ) { | |
| if( MaxNumSubblockMergeCand > 1 ) | |
| **merge_subblock_idx**[ x0 ][ y0 ] | ae(v) |
| } else { | |
| if( sps_ciip_enabled_flag && cu_skip_flag[ x0 ][ y0 ] = = 0 && ( cbWidth * cbHeight ) >= 64 && cbWidth < 128 && cbHeight < 128 ) { | |
| **ciip_flag**[ x0 ][ y0 ] | ae(v) |
| if( ciip_flag[ x0 ][ y0 ] ) { | |
| if ( cbWidth <= 2 * cbHeight \|\| cbHeight <= 2 * cbWidth ) | |
| **ciip_luma_mpm_flag**[ x0 ][ y0 ] | ae(v) |
| if( ciip_luma_mpm_flag[ x0 ][ y0 ] ) | |
| **ciip_luma_mpm_idx**[ x0 ][ y0 ] | ae(v) |
| } | |
| } | |
| if( sps_triangle_enabled_flag && tile_group_type = = B && ciip_flag[ x0 ][ y0 ] = = 0 && cbWidth * cbHeight >= 64 ) | |
| **merge_triangle_flag**[ x0 ][ y0 ] | ae(v) |
| if( merge_triangle_flag[ x0 ][ y0 ] ) { | |
| **merge_triangle_split_dir**[ x0 ][ y0 ] | ae(v) |
| **merge_triangle_idx0**[ x0 ] [ y0 ] | ae(v) |
| **merge_triangle_idx1**[ x0 ][ y0 ] | ae(v) |
| } else if( MaxNumMergeCand > 1 ) | |
| **merge_idx[** x0 ][ y0 ] | ae(v) |
| } | |
| } | |
| } | |
| } | |
| | |

Another example is to use only one of the conditions, such as MaxNumMmvdBaseMergeCand and MaxNum-MergeCand, and other conditions as the condition checks prior to the parsing of **mmvd_merge_flag** to reduce the signaling overhead.

*Example 4:* In this illustrative example, a tile group-level flag **max_num_mmvd_merge_base_cand** is added to specify the maximum number of MMVD base merging candidates supported in the tile group. For instance, **max_num_mmvd_merge_base_cand** may specify the maximum number of MMVD base merging candidates supported in the tile group subtracting 1. The maximum number of MMVD base merging candidates, MaxNumMmvdBase-MergeCand, is derived as follows:

$$MaxNumMmvdBaseMergeCand = 1 + max\_num\_mmvd\_merge\_base\_cand$$

The value of MaxNumMmvdBaseMergeCand shall be in the range of 1 to 2, inclusive. It is proposed to restrict the smallest number of **six_minus_max_num_merge_cand** to be 2 as **max_num_mmvd_merge_base_cand** is true. This proposed change can guarantee that at least two normal merging candidates can be created and provided for MMVD base merging candidates, whose number is 2. A tile group-level flag **six_minus_max_num_ibc_merge_cand** can be provided to specify the number of merging candidates for intra block copy (IBC) mode, i.e., MaxNumIbcMergeCand. This change can avoid the ambiguity between MaxNumMergeCand, MaxNumIbcMergeCand and MaxNumMmvdBaseMergeCand. The proposed change to VVC Draft 4 is shown in the table below with <!>...</!> tags and <d>...</d> tags are shown in the table below to indicate deletions:

Section 7.3.4.1

| tile_group _header ( ) { | Descriptor |
|---|---|
| … | |
| if ( tile_group_type != I ) { | |
| if( sps_temporal_mvp_enabled_flag ) | |
| **tile_group_temporal_mvp_enabled_flag** | u(1) |
| if( tile_group_type = = B ) | |
| **mvd_l1_zero_flag** | u(1) |
| if( tile_group_temporal_mvp_enabled_flag ) { | |
| if( tile_group_type = = B ) | |
| **collocated_from_l0_flag** | u(1) |
| } | |
| if( ( weighted_pred_flag && tile_group_type = = P ) \|\| ( weighted _bipred_flag && tile_group = = B ) ) | |
| pred _weight_table( ) | |
| <!> **max_num_mmvd_merge_base_cand**</!> | <!>u(1)</!> |
| **six_minus_max_num_merge_cand** | ue(v) |
| if( sps_affine_enabled_flag ) | |
| **five_minus_max_num_subblock_merge_cand** | **ue(v)** |
| if( sps_fpel_mmvd_enabled_flag ) | |
| **tile_group_fpel_mmvd_enabled_flag** | **u(1)** |
| } <d> else if ( sps_ibc_enabled_flag )</d> | |
| <d> **six_minus_max_num_merge_cand**</d> | <d>ue(v)</d> |
| <!> if ( sps_ibc_enabled_flag )</!> | |
| <!> **six_minus_max_num_ibc_merge_cand**</!> | <!>ue(v)</!> |
| … | |
| } | |

**six_minus_max_num_merge_cand** specifies the maximum number of merging motion vector prediction (MVP) candidates supported in the tile group subtracted from 6. The maximum number of merging MVP candidates, MaxNumMergeCand, is derived as follows:

$$\text{MaxNumMergeCand} = 6 - \text{six\_minus\_max\_num\_merge\_cand}$$

The value of MaxNumMergeCand shall be in the range of <!>**max_num_mmvd_merge_base_cand</!>** to 6, inclusive.

Another embodiment for MaxNumMergeCand combines the SPS MMVD flag as follows:

The value of MaxNumMergeCand shall be in the range of <!>1+ **sps_mmvd_enabled_flag**</!> to 6, inclusive.

<!>**six_minus_max_num_ibc_merge_cand** specifies the maximum number of IBC merging motion vector prediction (MVP) candidates supported in the tile group subtracted from 6. The maximum number of IBC merging MVP candidates, MaxNumIbcMergeCand is derived as follows:

$$\text{MaxNumIbcMergeCand} = 6 - \text{six\_minus\_max\_num\_ibc\_merge\_cand}$$

The value of MaxNumIbcMergeCand shall be in the range of 1 to 6, inclusive.</!>

Section 7.3.6.8

| merge_data( x0, y0, cbwidth, cbHeight ) { | Descriptor |
|---|---|
| if ( CuPredMode[ x0 ][ y0 ] = = MODE_IBC ) { | |
| <d> if( MaxNumMergeCand > 1 )</d> | |
| <!> if( MaxNumIbcMergeCand > 1 )</!> | |
| merge_idx[ x0 ][ y0 ] | ae(v) |
| } else { | |
| **mmvd_flag**[ x0 ][ y0 ] | ae(v) |
| if( mmvd_flag[ x0 ][ y0 ] = = 1 ) { | |
| **mmvd_merge_flag**[ x0 ][ y0 ] | ae(v) |
| **mmvd_distance_idx**[ x0 ][ y0 ] | ae(v) |
| **mmvd_direction_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] = = 1 ) { | |
| if( MaxNumSubblockMergeCand > 1 ) | |
| **merge_subblock_idx**[ x0 ][ y0 ] | ae(v) |
| } else { | |
| if( sps_ciip_enabled_flag && cu_skip_flag[ x0 ][ y0 ] = = 0 && ( cbWidth * cbHeight ) >= 64 && cbWidth < 128 && cbHeight < 128 ) { | |
| **ciip_flag**[ x0 ][ y0 ] | ae(v) |
| if( ciip_flag[ x0 ][ y0 ] ) { | |
| if ( cbWidth <= 2 * cbHeight \|\| cbHeight <= 2 * cbWidth ) | |
| **ciip_luma_mpm_flag**[ x0 ][ y0 ] | ae(v) |
| if( ciip_luma_mpm flag[ x0 ][ y0 ] ) | |
| **ciip_luma_mpm_idx**[ x0 ][ y0 ] | ae(v) |
| } | |

(continued)

| | |
|---|---|
| } | |
| if( sps_triangle_enabled_flag && tile_group_type = = B && ciip_flag[ x0 ][ y0 ] = = 0 && cb Width * cbHeight >= 64 ) | |
| **merge_triangle_flag**[ x0 ][ y0 ] | ae(v) |
| if( merge_triangle_flag[ x0 ][ y0 ] ) { | |
| **merge_triangle_split_dir**[ x0 ] [ y0 ] | ae(v) |
| **merge_triangle_idx0**[ x0 ] [ y0 ] | ae(v) |
| **merge_triangle_idx1**[ x0 ][ y0 ] | ae(v) |
| } else if( MaxNumMergeCand > 1 ) | |
| **merge_idx**[ x0 ][ y0 ] | ae(v) |
| } | |
| } | |
| } | |
| } | |

*Example 5:* In this illustrative example, the smallest number of **six_minus_max_num_merge_cand** is restricted to be 2, instead of 1. This proposed change can guarantee that at least two normal merging candidates can be created and provided for MMVD base merging candidates, whose number is 2. Since there are two normal merging candidates, it is not necessary to have the condition check MaxNumMergeCand > 1 prior to **merge_idx.** The proposed change to VVC Draft 4 is shown in the table below with <!>... </!> to indicate changes and <d>...</d> tags to indicate deletions:

Section 7.3.4.1

| tile_group _header ( ) { | **Descriptor** |
|---|---|
| … | |
| if ( tile_group_type != I ) { | |
| if( sps_temporal_mvp_enabled_flag ) | |
| **tile_group_temporal_mvp_enabled_flag** | u(1) |
| if( tile_group_type = = B ) | |
| **mvd_l1_zero_flag** | u(1) |
| if( tile_group_temporal_mvp_enabled_flag ) { | |
| if( tile_group_type = = B ) | |
| **collocated_from_l0_flag** | u(1) |
| } | |
| if( ( weighted_pred_flag && tile_group_type = = P ) \|\| ( weighted _bipred_flag && tile_group = = B ) ) | |
| pred _weight_table( ) | |
| **six_minus_max_num_merge_cand** | ue(v) |
| if( sps_affine_enabled_flag ) | |
| **five_minus_max_num_subblock_merge_cand** | ue(v) |
| if( sps_fpel_mmvd_enabled_flag ) | |

(continued)

| | |
|---|---|
| **tile_group_fpel_mmvd_enabled_flag** | u(1) |
| } else if ( sps_ibc_enabled_flag ) | |
| **six_minus_max_num_merge_cand** | ue(v) |
| … | |
| } | |

**six_minus_max_num_merge_cand** specifies the maximum number of merging motion vector prediction (MVP) candidates supported in the tile group subtracted from 6. The maximum number of merging MVP candidates, MaxNumMergeCand, is derived as follows:

$$\text{MaxNumMergeCand} = 6 - \text{six\_minus\_max\_num\_merge\_cand}$$

The value of MaxNumMergeCand shall be in the range of <!>2</!> to 6, inclusive.

Section 7.3.6.8

| merge_data( x0, y0, cbWidth, cbHeight ) { | **Descriptor** |
|---|---|
| if ( CuPredMode[ x0 ][ y0 ] = = MODE_IBC ) { | |
| if( MaxNumMergeCand > 1 ) | |
| merge_idx[ x0 ][ y0 ] | ae(v) |
| } else { | |
| **mmvd_flag**[ x0 ][ y0 ] | ae(v) |
| if( mmvd_flag[ x0 ][ y0 ] = = 1 ) { | |
| **mmvd_merge_flag**[ x0 ][ y0 ] | ae(v) |
| **mmvd_distance_idx**[ x0 ][ y0 ] | ae(v) |
| **mmvd_direction_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] = = 1 ) { | |
| if( MaxNumSubblockMergeCand > 1 ) | |
| **merge_subblock_idx**[ x0 ] [ y0 ] | ae(v) |
| } else { | |
| if( sps_ciip_enabled_flag && cu_skip_flag[ x0 ][ y0 ] = = 0 && ( cbWidth * cbHeight ) >= 64 && cbWidth < 128 && cbHeight < 128 ) { | |
| **ciip_flag**[ x0 ][ y0 ] | ae(v) |
| if( ciip_flag[ x0 ][ y0 ] ) { | |
| if ( cbWidth <= 2 * cbHeight \|\| cbHeight <= 2 * cbWidth ) | |
| **ciip_luma_mpm_flag**[ x0 ][ y0 ] | ae(v) |
| if( ciip_luma_mpm_flag[ x0 ][ y0 ] ) | |
| **ciip_luma_mpm_idx**[ x0 ][ y0 ] | ae(v) |
| } | |

(continued)

|  |  |
|---|---|
| } | |
| if( sps_triangle_enabled_flag && tile_group_type = = B && ciip_flag[ x0 ][ y0 ] = = 0 && cb Width * cbHeight >= 64 ) | |
| **merge_triangle_flag**[ x0 ][ y0 ] | ae(v) |
| if( merge_triangle_flag[ x0 ][ y0 ] ) { | |
| **merge_triangle_split_dir**[ x0 ] [ y0 ] | ae(v) |
| **merge_triangle_idx0**[ x0 ][ y0 ] | ae(v) |
| **merge_triangle_idx1**[ x0 ][ y0 ] | ae(v) |
| } else <d>if( MaxNumMergeCand > 1 )</d> | |
| **merge_idx[** x0 ][ y0 ] | ae(v) |
| } | |
| } | |
| } | |
| } | |

*Example 6:* In the current VVC test model (VTM) design, the number of merging candidates in the mergeCand-List is set as MaxNumMergeCand. It is proposed in Example 6 that, if MaxNumMergeCand = 1 and mmvd_flag are enabled in this CU, the number of merging candidates in the mergeCandList for this CU is inferred to be 2, instead of MaxNumMergeCand. On top of Example 2 and Example 4, the Example 6 is modified as follows: if MaxNumMergeCand = 1, MaxNumMmvdBaseMergeCand = 2, and mmvd_flag enabled in this CU, the number of merging candidates in the mergeCandList for this CU is inferred to be 2, instead of MaxNumMergeCand.

The combination of Examples 1 to Example 6 is possible. Then, there are three improved solutions:

Solution 1: Combination of Example 1, Example 2, and Example 3. As MaxNumMergeCand = 1, MaxNumMmvdBaseMergeCand is forced to be 1 at tile group level or at CU level.
Solution 2: Combination of Example 1 and Example 4. As MaxNumMmvdBaseMergeCand = 2, MaxNumMergeCand is forced to be 2 at tile group level or at CU level.
Solution 3: Example 6. As MaxNumMergeCand = 1 and MaxNumMmvdBaseMergeCand = 2, the number of merging candidates in the mergeCandList is inferred to be 2 as mmvd_flag is enabled in this CU.

**Maximum number of trianglemerging candidates**

There are several proposed changes to improve the VVC signaling:

*Example 7:* In this example of the present invention, a tile-level flag **five_minus_max_num_triangle_merge_cand** is added to indicate the maximum number of triangle merge candidates, MaxNumTriangleMergeCand. MaxNumTriangleMergeCand can be derived as follows: MaxNumTriangleMergeCand = T - **five_minus_max_num_triangle_merge_cand,** where T is a pre-assigned positive integer, and the minimum value of MaxNum-TriangleMergeCand could be defined as U. Therefore, **five_minus_max_num_triangle_merge_cand** may be in the range of 0 to (T-U), inclusive. In one example, T is set as 5 and U as 2. Then **five_minus_max_num_triangle_merge_cand** is in the range of 0 to 3, inclusive. Another example is related to the case of MaxNumTriangleMergeCand = 2. In the design of VVC Draft 4, **merge_triangle_idx0** and **merge_triangle_idx1** are always parsed. It is proposed to skip the parsing of **merge_triangle_idx1** as MaxNumTriangleMergeCand = 2 since **merge_triangle_idx1** must be the opposite number of **merge_triangle_idx0**, i.e., **merge_triangle_idx1** = 0 as **merge_triangle_idx0** = 1, and **merge_triangle_idx1** = 1 as **merge_triangle_idx0** = 0. The proposed change to VVC Draft 4 is shown in the table below with <!>...</!> tags:

Section 7.3.4.1

| tile_group _header ( ) { | Descriptor |
|---|---|
| … | |
| if ( tile_group_type != I ) { | |
| if( sps_temporal_mvp_enabled_flag ) | |
| **tile_group_temporal_mvp_enabled_flag** | u(1) |
| if( tile_group_type = = B ) | |
| **mvd_l1_zero_flag** | u(1) |
| if( tile_group_temporal_mvp_enabled_flag ) { | |
| if( tile_group_type = = B ) | |
| **collocated_from_l0_flag** | u(1) |
| } | |
| if( ( weighted_pred_flag && tile_group_type = = P ) \|\| ( weighted _bipred_flag && tile_group = = B ) ) | |
| pred_weight_table( ) | |
| **six_minus_max_num_merge_cand** | ue(v) |
| if( sps_affine_enabled_flag ) | |
| **five_minus_max_num_subblock_merge_cand** | **ue(v)** |
| <!> if( sps_triangle_enabled_flag )</!> | |
| <!> **five_minus_max_num_triangle_merge_cand**</!> | <!>ue(v)</!> |
| if( sps_fpel_mmvd_enabled_flag ) | |
| **tile_group_fpel_mmvd_enabled_flag** | **u(1)** |
| } else if ( sps_ibc_enabled_flag ) | |
| **six_minus_max_num_merge_cand** | ue(v) |
| … | |
| } | |

**five_minus_max_num_triangle_merge_cand** specifies the maximum number of triangle merging motion vector prediction (MVP) candidates supported in the tile group subtracted from 5. The maximum number of merging MVP candidates, MaxNumTriangleMergeCand is derived as follows:

$$MaxNumTriangleMergeCand = 5 - five\_minus\_max\_num\_triangle\_merge\_cand$$

The value of MaxNumTriangleMergeCand shall be in the range of 2 to 5, inclusive.

Section 7.3.6.8 in VVC Draft 4

| merge_data( x0, y0, cbwidth, cbHeight ) { | Descriptor |
|---|---|
| if ( CuPredMode[ x0 ][ y0 ] = = MODE_IBC ) { | |
| if( MaxNumMergeCand > 1 ) | |
| merge_idx[ x0 ][ y0 ] | ae(v) |
| } else { | |

(continued)

| | |
|---|---|
| **mmvd_flag**[ x0 ][ y0 ] | ae(v) |
| if( mmvd_flag[ x0 ][ y0 ] = = 1 ) { | |
| **mmvd_merge_flag**[ x0 ][ y0 ] | ae(v) |
| **mmvd_distance_idx**[ x0 ][ y0 ] | ae(v) |
| **mmvd_direction_idx**[ x0 ][ y0 ] | ae(v) |
| } else { | |
| if( MaxNumSubblockMergeCand > 0 && cbWidth >= 8 && cbHeight>= 8 ) | |
| **merge_subblock_flag**[ x0 ][ y0 ] | ae(v) |
| if( merge_subblock_flag[ x0 ][ y0 ] = = 1 ) { | |
| if( MaxNumSubblockMergeCand > 1 ) | |
| **merge_subblock_idx**[ x0 ][ y0 ] | ae(v) |
| } else { | |
| if( sps_ciip_enabled_flag && cu_skip_flag[ x0 ][ y0 ] = = 0 && ( cbWidth * cbHeight ) >= 64 && cbWidth < 128 && cbHeight < 128 ) { | |
| **ciip_flag**[ x0 ][ y0 ] | ae(v) |
| if( ciipflag[ x0 ][ y0 ] ) { | |
| if ( cbWidth <= 2 * cbHeight || cbHeight <= 2 * cbWidth ) | |
| **ciip_luma_mpm_flag**[ x0 ][ y0 ] | ae(v) |
| if( ciip_luma_mpm_flag[ x0 ][ y0 ] ) | |
| **ciip_luma_mpm_idx**[ x0 ][ y0 ] | ae(v) |
| } | |
| } | |
| if( sps_triangle_enabled_flag && tile_group_type = = B && ciipflag[ x0 ][ y0 ] = = 0 && cb Width * cbHeight >= 64 ) | |
| **merge_triangle_flag**[ x0 ][ y0 ] | ae(v) |
| if( merge_triangle_flag[ x0 ][ y0 ] ) { | |
| **merge_triangle_split_dir**[ x0 ] [ y0 ] | ae(v) |
| **merge_triangle_idx0**[ x0 ] [ y0 ] | ae(v) |
| <!> if(MaxNumTriangleMergeCand > 2)</!> | |
| **merge_triangle_idx1**[ x0 ][ y0 ] | ae(v) |
| } else if( MaxNumMergeCand > 1 ) | |
| **merge_idx**[ x0 ][ y0 ] | ae(v) |
| } | |
| } | |
| } | |
| } | |

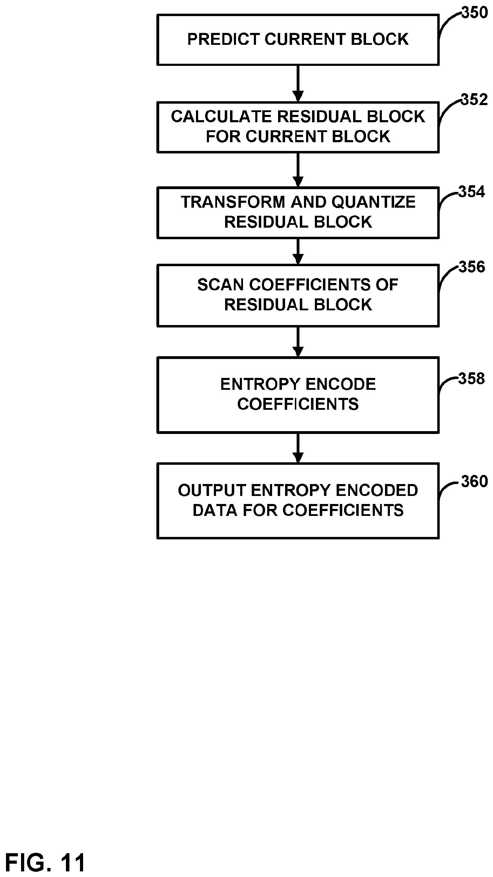

FIG. 11 is a flowchart illustrating an example method for encoding a current block. The flowcharts of this disclosure are presented as examples. In other examples, the flowcharts may include more, fewer, or different steps, and/or steps may be performed in different orders or in parallel. With regard to FIG. 11, the current block may include a current CU. Although described with respect to video encoder 200 (FIGS. 1 and 9), it should be understood that other devices may be configured to perform a method similar to that of FIG. 11.

In this example, video encoder 200 initially predicts the current block (350). For example, video encoder 200 may form a prediction block for the current block. Video encoder 200 may form the prediction block using triangle merge mode and signal associated syntax elements in accordance with the techniques of this disclosure. Video encoder 200 may then calculate a residual block for the current block (352). To calculate the residual block, video encoder 200 may calculate a difference between the original, uncoded block and the prediction block for the current block. Video encoder 200 may then transform and quantize coefficients of the residual block (354). Next, video encoder 200 may scan the quantized transform coefficients of the residual block (356). During the scan, or following the scan, video encoder 200 may entropy encode the transform coefficients (358). For example, video encoder 200 may encode the transform coefficients using CAVLC or CABAC. Video encoder 200 may then output the entropy encoded data of the block (360).

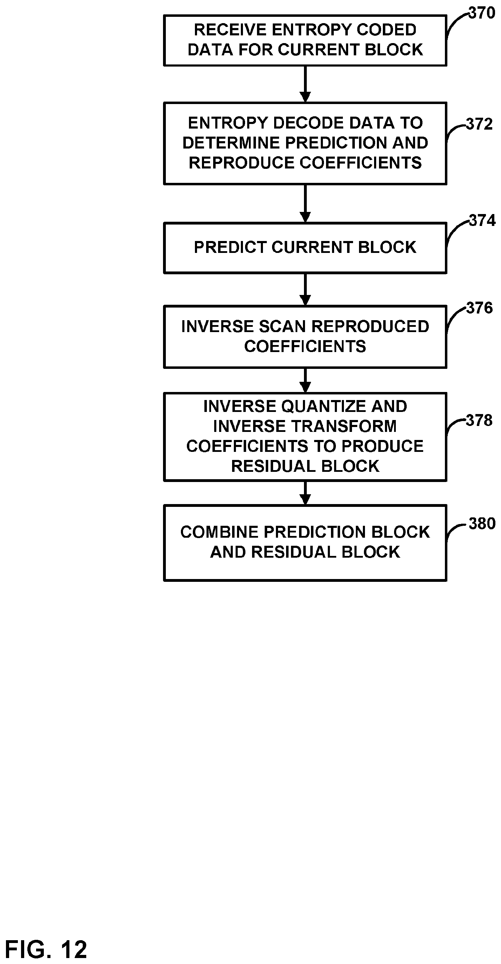

FIG. 12 is a flowchart illustrating an example method for decoding a current block of video data. The current block may include a current CU. Although described with respect to video decoder 300 (FIGS. 1 and 10), it should be understood that other devices may be configured to perform a method similar to that of FIG. 12.

Video decoder 300 may receive entropy coded data for the current block, such as entropy coded prediction information and entropy coded data for transform coefficients of a residual block corresponding to the current block (370). Video decoder 300 may entropy decode the entropy coded data to determine prediction information for the current block and to reproduce transform coefficients of the residual block (372). Video decoder 300 may predict the current block (374), e.g., using an intra- or inter-prediction mode as indicated by the prediction information for the current block, to calculate a prediction block for the current block. Video decoder 300 may use triangle merge mode to calculate the prediction block for the current block and decode associated syntax elements in accordance with one or more techniques of this disclosure. Video decoder 300 may then inverse scan the reproduced transform coefficients (376), to create a block of quantized transform coefficients. Video decoder 300 may then inverse quantize and inverse transform the transform coefficients to produce a residual block (378). Video decoder 300 may ultimately decode the current block by combining the prediction block and the residual block (380).

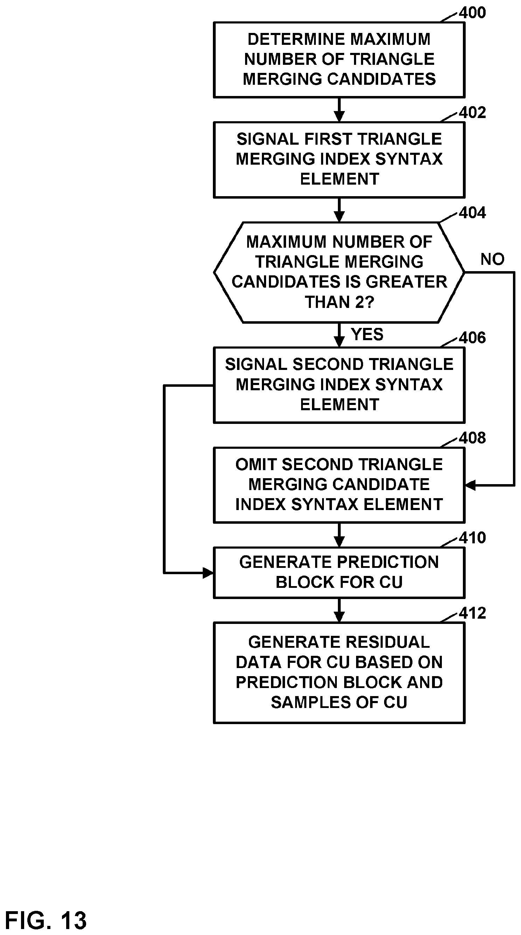

FIG. 13 is a flowchart illustrating an example encoding method in accordance with one or more techniques of this disclosure. In the example of FIG. 13, video encoder 200 determines a maximum number of triangle merging candidates (400). For example, video encoder 200 may determine the maximum number of triangle merging candidates based on configuration input provided to video encoder 200. In some examples, video encoder 200 may try different values of the maximum number of triangle merging candidates to determine a best maximum number of triangle merging candidates.

Video encoder 200 signals a first syntax element (e.g., sps_triangle_enabled_flag) in the bitstream, where the syntax element indicates whether triangle merge mode is enabled. Video encoder 200 signals a second syntax element (e.g., five_minus_max_num_triangle_merge_cand) based on the syntax element indicating that triangle merge mode is enabled. For instance, video encoder 200 may determine a value of the second syntax element as T minus the maximum number of triangle merging candidates, where T is a preassigned positive integer (e.g., 5). Video encoder 200 then signals this second syntax element in the bitstream.

Furthermore, in the example of FIG. 13, video encoder 200 signals a first triangle merging index syntax element (e.g., merge_triangle_idx0) in the bitstream (402). The first triangle merging index syntax element specifies a first triangle merging candidate index. The first triangle merging candidate index indicates a first triangle merging candidate of a triangular shape-based motion compensation candidate list. This first triangle merging candidate need not be the first-occurring triangle merging candidate in the triangular shape-based motion compensation candidate list.

Video encoder 200 determines whether the maximum number of triangle merging candidates is greater than 2 (404). In response to determining that the maximum number of triangle merging candidates is greater than 2 ("YES" branch of 404), video encoder 200 may signal a second triangle merging index syntax element (e.g., merge_triangle_idx1) in the bitstream (406). The second triangle merging index syntax element specifies a second triangle merging candidate index. The second triangle merging candidate index specifies a second triangle merging candidate of the triangle shape-based motion compensation candidate list. The second triangle merging candidate need not be the second-occurring triangle merging candidate in the triangular shape-based motion compensation candidate list. Rather, the second triangle merging candidate may be any triangle merging candidate in the triangle shape-based motion compensation candidate list other than the first triangle merging candidate.

In some illustrative examples, video decoder 300 generates the triangular shape-based motion compensation candidate list based on a table. In some such examples, entries in the table correspond to different combinations of pairs of merging candidates in a merging candidate list. The first and second triangle merging candidate indices specify respective entries in the table. The entries are ordered in the table so that no entry corresponding to a first pair of merging candidates is put behind another entry corresponding to a second pair of merging candidates if the second pair of merging candidates cannot be used given the maximum number of triangle merging candidates.

In other illustrative examples, video decoder 300 may generate the triangular shape-based motion compensation candidate list based on a selected table in a plurality of tables. Each table in the plurality of tables corresponds to a different maximum number of triangle merging candidates. The selected table corresponds to the maximum number of triangle merging candidates that was determined based on the first syntax element. Entries in the table correspond to different combinations of pairs of merging candidates in a merging candidate list. The first and second triangle merging candidate indices specify respective entries in the selected table.

In response to determining that the maximum number of triangle merging candidates is not greater than 2 ("NO" branch of 404), video encoder 200 omits the second triangle merging index syntax element from the bitstream (408). Thus, video encoder 200 omits from the bitstream a triangle merging index syntax element that specifies a second triangle merging candidate index indicating a second triangle merging candidate of the triangle shaped-based motion compensation candidate list. The second triangle merging candidate is different from the first triangle merging candidate.

Furthermore, in the example of FIG. 13, video encoder 200 generates a prediction block for a CU (410). To generate the prediction block for the CU, video encoder 200 inter-predicts a first triangle partition of the CU using motion information of the first triangle merging candidate. Additionally, video encoder 200 inter-predicts a second triangle partition of the CU using motion information of the second triangle merging candidate.

Video encoder 200 generates residual data for the CU based on the prediction block for the CU and samples of the CU (412). For example, video encoder 200 may generate the residual data for the CU by subtracting samples of the prediction block from corresponding samples of the CU.

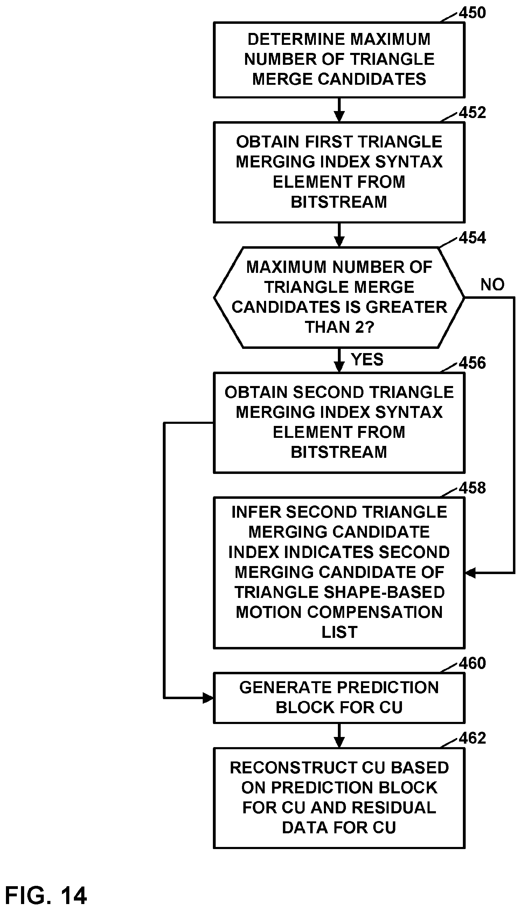

FIG. 14 is a flowchart illustrating an example decoding method in accordance with one or more techniques of this disclosure. In the example of FIG. 14, video decoder 300 determines, based on a first syntax element (e.g., minus_max_num_triangle_merge_cand) signaled in a bitstream that includes an encoded representation of the video data, a maximum number of triangle merging candidates (450). In some examples, to determine the maximum number of triangle merging candidates, video decoder 300 may obtain the first syntax element from the bitstream and determine the maximum number of triangle merging candidates as T minus a value specified by the first syntax element, where T is a preassigned positive integer (e.g., 5).

Furthermore, signaling of the first syntax element in the bitstream is dependent on whether another syntax element (e.g., sps_triangle_enabled_flag) indicates that triangle merge mode is enabled. Thus, video decoder 300 obtains a syntax element (e.g., sps_triangle_enabled_flag) from the bitstream, where the syntax element indicates whether triangle merge mode is enabled. Additionally, in this example, video decoder 300 obtains the first syntax element (e.g., minus_max_num_triangle_merge_cand) based on the syntax element indicating that triangle merge mode is enabled.

Additionally, in the example of FIG. 14, video decoder 300 obtains a first triangle merging index syntax element (e.g., merge _triangle_idx0) from the bitstream (452). The first triangle merging index syntax element specifies a first triangle merging candidate index. The first triangle merging candidate index indicates a first triangle merging candidate of a triangular shape-based motion compensation candidate list. This first triangle merging candidate need not be the first-occurring triangle merging candidate in the triangular shape-based motion compensation candidate list.

Furthermore, video decoder 300 determines whether the maximum number of triangle merging candidates is greater than 2 (454). In response to determining that the maximum number of triangle merging candidates is greater than 2 ("YES" branch of 454), video decoder 300 may obtain a second triangle merging index syntax element from the bitstream (456). The second triangle merging index syntax element specifies a second triangle merging candidate index. The second triangle merging candidate index specifies a second triangle merging candidate of the triangle shape-based motion compensation candidate list. The second triangle merging candidate need not be the second-occurring triangle merging candidate in the triangular shape-based motion compensation candidate list. Rather, the second triangle merging candidate may be any triangle merging candidate in the triangle shape-based motion compensation candidate list other than the first triangle merging candidate.

In some illustrative examples, video decoder 300 generates the triangular shape-based motion compensation candidate list based on a table. In some such examples, entries in the table correspond to different combinations of pairs of merging candidates in a merging candidate list. The first and second triangle merging candidate indices specify respective entries in the table. The entries are ordered in the table so that no entry corresponding to a first pair of merging candidates is put behind another entry corresponding to a second pair of merging candidates if the second pair of merging candidates cannot be used given the maximum number of triangle merging candidates.

In other illustrative examples, video decoder 300 may generate the triangular shape-based motion compensation candidate list based on a selected table in a plurality of tables. Each table in the plurality of tables corresponds to a different maximum number of triangle merging candidates. The selected table corresponds to the maximum number of triangle merging candidates that was determined based on the first syntax element. Entries in the table correspond to different combinations of pairs of merging candidates in a merging candidate list. The first and second triangle merging candidate indices specify respective entries in the selected table.

In response to determining that the maximum number of triangle merging candidates is not greater than 2 ("NO" branch of 454), video decoder 300 infers that a second triangle merging candidate index indicates a second triangle merging candidate of the triangular shape-based motion compensation candidate list without obtaining any syntax element specifying the second triangle merging candidate index from the bitstream (458). The second triangle merging candidate may be different from the first triangle merging candidate.

Furthermore, in the example of FIG. 14, video decoder 300 generates a prediction block for a CU (460). As part of generating the prediction block for the CU, video decoder 300 inter-predicts a first triangle partition of the CU using motion information of the first triangle merging candidate. Additionally, video decoder 300 inter-predicts a second triangle partition of the CU using motion information of the second triangle merging candidate.

Video decoder 300 reconstructs the CU based on the prediction block for the CU and residual data for the CU (462). For example, video decoder 300 may add samples of the prediction block for the CU to corresponding samples of the residual data to reconstruct the CU.

Although the techniques of this disclosure have primarily been described with respect to a triangle merge mode in which a CU is partitioned diagonally into two evenly sized partitions, the techniques of this disclosure may also be applicable to a geometric partitioning mode in which a CU is partitioned diagonally into two unevenly sized partitions. For instance, video encoder 200 may determine a maximum number of geometric partitioning mode merging candidates; signal a first geometric partitioning mode merging index syntax element in the bitstream, the first geometric partitioning mode merging index syntax element specifying a first geometric partitioning mode merging candidate index, the first geometric partitioning mode merging candidate index indicating a first geometric partitioning mode merging candidate of a motion compensation candidate list; determine whether the maximum number of geometric partitioning mode merging candidates is greater than 2; based on the maximum number of geometric partitioning mode merging candidates not being greater than 2, omit from the bitstream a second geometric partitioning mode merging index syntax element that specifies a second geometric partitioning mode merging candidate index indicating a second geometric partitioning mode merging candidate of the geometric partitioning mode shaped-based motion compensation candidate list, the second geometric partitioning mode merging candidate being different from the first geometric partitioning mode merging candidate; generate a prediction block for a CU, wherein generating the prediction block for the CU comprises: inter-predicting a first geometric partitioning mode partition of the CU using motion information of the first geometric partitioning mode merging candidate; and inter-predicting a second geometric partitioning mode partition of the CU using motion information of the second geometric partitioning mode merging candidate; and generate residual data for the CU based on the prediction block for the CU and samples of the CU.

Similarly, video decoder 300 may determine, based on a first syntax element signaled in a bitstream that includes an encoded representation of the video data, a maximum number of geometric partitioning mode merging candidates; obtain a first geometric partitioning mode merging index syntax element from the bitstream, the first geometric partitioning mode merging index syntax element specifying a first geometric partitioning mode merging candidate index, the first geometric partitioning mode merging candidate index indicating a first geometric partitioning mode merging candidate of a triangular shape-based motion compensation candidate list; determine whether the maximum number of geometric partitioning mode merging candidates is greater than 2; based on the maximum number of geometric partitioning mode merging candidates not being greater than 2, infer that a second geometric partitioning mode merging candidate index indicates a second geometric partitioning mode merging candidate of the geometric partitioning mode shape-based motion compensation candidate list without obtaining any syntax element specifying the second geometric partitioning mode merging candidate index from the bitstream, the second geometric partitioning mode merging candidate being different from the first geometric partitioning mode merging candidate; generate a prediction block for a CU, wherein generating the prediction block for the CU comprises: inter-predicting a first geometric partitioning mode partition of the CU using motion information of the first geometric partitioning mode merging candidate; and inter-predicting a second geometric partitioning mode partition of the CU using motion information of the second geometric partitioning mode merging candidate; and reconstruct the CU based on the prediction block for the CU and residual data for the CU.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), or other equivalent integrated or discrete logic circuitry. Accordingly, the terms "processor" and "processing circuitry," as used herein may refer to any of the foregoing structures or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

## Claims

1. A method of decoding video data, the method comprising:

> obtaining a first syntax element from a bitstream that includes an encoded representation of the video data, the first syntax element indicating whether triangle merge mode is enabled;
> obtaining a second syntax element from the bitstream based on the first syntax element indicating that triangle merge mode is enabled;
> determining (450), based on the second syntax element, a maximum number of triangle merging candidates;
> obtaining (452) a first triangle merging index syntax element from the bitstream, the first triangle merging index syntax element specifying a first triangle merging candidate index, the first triangle merging candidate index indicating a first triangle merging candidate of a triangular shape-based motion compensation candidate list;
> determining (454) whether the maximum number of triangle merging candidates is greater than 2;
> based on the maximum number of triangle merging candidates being equal to 2, inferring (458) that a second triangle merging candidate index indicates a second triangle merging candidate of the triangular shape-based motion compensation candidate list without obtaining any syntax element specifying the second triangle merging candidate index from the bitstream, the second triangle merging candidate being different from the first triangle merging candidate;
> generating (374; 460) a prediction block for a coding unit, CU, wherein generating the prediction block for the CU comprises:
>
>> inter-predicting a first triangle partition of the CU using motion information of the first triangle merging candidate; and
>> inter-predicting a second triangle partition of the CU using motion information of the second triangle merging candidate; and
>
> reconstructing (380; 462) the CU based on the prediction block for the CU and residual data for the CU.

2. The method of claim 1, wherein:

> the CU is a first CU,

the maximum number of triangle merging candidates is a first maximum number of triangle merging candidates, the triangular shape-based motion compensation candidate list is a first triangular shape-based motion compensation candidate list, and
the method further comprises:

determining (454) whether a second maximum number of triangle merging candidates is greater than 2;
obtaining (452) a third triangle merging index syntax element from the bitstream, the third triangle merging index syntax element specifying a third triangle merging candidate index, the third triangle merging candidate index indicating a third triangle merging candidate of a second triangular shape-based motion compensation candidate list;
based on the second maximum number of triangle merging candidates being greater than 2, obtaining (456) a fourth triangle merging index syntax element from the bitstream, the fourth triangle merging index syntax element specifying a fourth triangle merging candidate index, the fourth triangle merging candidate index indicating a fourth triangle merging candidate of the second triangular shape-based motion compensation candidate list;
generating (374; 460) a prediction block for a second CU, wherein generating the prediction block for the second CU comprises:

inter-predicting a first triangle partition of the second CU using motion information of the third triangle merging candidate; and
inter-predicting a second triangle partition of the second CU using motion information of the fourth triangle merging candidate; and

reconstructing (380; 462) the second CU based on the prediction block for the second CU and residual data for the second CU.

3. The method of claim 1, wherein the first syntax element and the second syntax element are obtained from a sequence parameter set, SPS, of the bitstream.

4. The method of claim 1, wherein obtaining (452) the first triangle merging index syntax element comprises obtaining the first triangle merging index syntax element from a merge data syntax structure.

5. A method of encoding video data, the method comprising:

determining (400) a maximum number of triangle merging candidates;
signaling a first syntax element in a bitstream, the first syntax element indicating whether triangle merge mode is enabled;
signaling a second syntax element in the bitstream based on the first syntax element indicating that triangle merge mode is enabled, wherein the second syntax element indicates the maximum number of triangle merging candidates;
signaling (402) a first triangle merging index syntax element in the bitstream, the first triangle merging index syntax element specifying a first triangle merging candidate index, the first triangle merging candidate index indicating a first triangle merging candidate of a triangular shape-based motion compensation candidate list;
determining (404) whether the maximum number of triangle merging candidates is greater than 2;
based on the maximum number of triangle merging candidates being equal to 2, omitting (408) from the bitstream a second triangle merging index syntax element that specifies a second triangle merging candidate index indicating a second triangle merging candidate of the triangular shape-based motion compensation candidate list, the second triangle merging candidate being different from the first triangle merging candidate;
generating (350; 410) a prediction block for a coding unit, CU, wherein generating the prediction block for the CU comprises:

inter-predicting a first triangle partition of the CU using motion information of the first triangle merging candidate; and
inter-predicting a second triangle partition of the CU using motion information of the second triangle merging candidate; and

generating (352; 412) residual data for the CU based on the prediction block for the CU and samples of the CU.

**6.** The method of claim 5, wherein:

> the CU is a first CU,
> the maximum number of triangle merging candidates is a first maximum number of triangle merging candidates,
> the triangular shape-based motion compensation candidate list is a first triangular shape-based motion compensation candidate list, and
> the method further comprises:
>
>> signaling (402) a third triangle merging index syntax element in the bitstream, the third triangle merging index syntax element specifying a third triangle merging candidate index, the third triangle merging candidate index indicating a third triangle merging candidate of a second triangular shape-based motion compensation candidate list;
>> determining (404) whether a second maximum number of triangle merging candidates is greater than 2;
>> based on the second maximum number of triangle merging candidates being greater than 2, signaling (406) a fourth triangle merging index syntax element in the bitstream, the fourth triangle merging index syntax element specifying a fourth triangle merging candidate index, the fourth triangle merging candidate index indicating a fourth triangle merging candidate of the second triangular shape-based motion compensation candidate list;
>> generating (350; 410) a prediction block for a second CU, wherein generating the prediction block for the second CU comprises:
>>
>>> inter-predicting a first triangle partition of the second CU using motion information of the third triangle merging candidate; and
>>> inter-predicting a second triangle partition of the second CU using motion information of the fourth triangle merging candidate; and
>>
>> reconstructing (352; 412) the second CU based on the prediction block for the second CU and residual data for the second CU.

**7.** The method of claim 5, wherein the first syntax element and the second syntax element are signaled in a sequence parameter set, SPS, of the bitstream.

**8.** A device (116, 300) for decoding video data, the device comprising:

> a memory (320) to store the video data; and
> one or more processors implemented in circuitry, the one or more processors configured to:
>
>> obtain a first syntax element from a bitstream that includes an encoded representation of the video data, the first syntax element indicating whether triangle merge mode is enabled;
>> obtain a second syntax element from the bitstream based on the first syntax element indicating that triangle merge mode is enabled;
>> determine (450), based on the second syntax element, a maximum number of triangle merging candidates;
>> obtain (452) a first triangle merging index syntax element from the bitstream, the first triangle merging index syntax element specifying a first triangle merging candidate index, the first triangle merging candidate index indicating a first triangle merging candidate of a triangular shape-based motion compensation candidate list;
>> determine (454) whether the maximum number of triangle merging candidates is greater than 2;
>> based on the maximum number of triangle merging candidates being equal to 2, infer (458) that a second triangle merging candidate index indicates a second triangle merging candidate of the triangular shape-based motion compensation candidate list without obtaining any syntax element specifying the second triangle merging candidate index from the bitstream, the second triangle merging candidate being different from the first triangle merging candidate;
>> generate (374; 460) a prediction block for a coding unit, CU, wherein the one or more processors are configured such that, as part of generating the prediction block for the CU, the one or more processors are configured to:
>>
>>> inter-predict a first triangle partition of the CU using motion information of the first triangle merging candidate; and
>>> inter-predict a second triangle partition of the CU using motion information of the second triangle merging candidate; and

reconstruct (380; 462) the CU based on the prediction block for the CU and residual data for the CU.

9. The device of claim 8, wherein:

the CU is a first CU,
the maximum number of triangle merging candidates is a first maximum number of triangle merging candidates,
the triangular shape-based motion compensation candidate list is a first triangular shape-based motion compensation candidate list, and
the one or more processors are further configured to:

determine (454) whether a second maximum number of triangle merging candidates is greater than 2;
obtain (452) a third triangle merging index syntax element from the bitstream, the third triangle merging index syntax element specifying a third triangle merging candidate index, the third merging candidate index indicating a third triangle merging candidate of a second triangular shape-based motion compensation candidate list;
based on the second maximum number of triangle merging candidates being greater than 2, obtain (456) a fourth triangle merging index syntax element from the bitstream, the fourth triangle merging index syntax element specifying a fourth triangle merging candidate index, the fourth triangle merging candidate index indicating a fourth triangle merging candidate of the second triangular shape-based motion compensation candidate list;
generate (374; 460) a prediction block for a second CU, wherein the one or more processors are configured such that, as part of generating the prediction block for the second CU, the one or more processors:

inter-predict a first triangle partition of the second CU using motion information of the third triangle merging candidate; and
inter-predict a second triangle partition of the second CU using motion information of the fourth triangle merging candidate; and

reconstruct (380; 462) the second CU based on the prediction block for the second CU and residual data for the second CU.

10. The device of claim 8,
wherein the one or more processors are configured to obtain the first syntax element and the second syntax element from a sequence parameter set, SPS, of the bitstream.

11. The device of claim 8,
further comprising a display (118) configured to display decoded video data.

12. The device of claim 8,
wherein the device is a camera, a computer, a smartphone, a television, or a set-top box.

13. A device (102, 200) for encoding video data, the device comprising:

a memory (230) to store the video data; and
one or more processors implemented in circuitry, the one or more processors configured to:

determine (400) a maximum number of triangle merging candidates;
signal a first syntax element in a bitstream, the first syntax element indicating whether triangle merge mode is enabled;
signal a second syntax element in the bitstream based on the first syntax element indicating that triangle merge mode is enabled, wherein the second syntax element indicates the maximum number of triangle merging candidates;
signal (402) a first triangle merging index syntax element in the bitstream, the first triangle merging index syntax element specifying a first triangle merging candidate index, the first triangle merging candidate index indicating a first triangle merging candidate of a triangular shape-based motion compensation candidate list;
determine (404) whether the maximum number of triangle merging candidates is greater than 2;

based on the maximum number of triangle merging candidates being equal to 2, omit (408) from the bitstream a second triangle merging index syntax element that specifies a second triangle merging candidate index indicating a second triangle merging candidate of the triangular shape-based motion compensation candidate list, the second triangle merging candidate being different from the first triangle merging candidate; generate (350; 410) a prediction block for a coding unit, CU, wherein the one or more processors are configured such that, as part of generating the prediction block for the CU, the one or more processors:

inter-predict a first triangle partition of the CU using motion information of the first triangle merging candidate; and
inter-predict a second triangle partition of the CU using motion information of the second triangle merging candidate; and

generate (352; 412) residual data for the CU based on the prediction block for the CU and samples of the CU.

**Patentansprüche**

1. Verfahren zum Decodieren von Videodaten, wobei das Verfahren Folgendes beinhaltet:

Erhalten eines ersten Syntaxelements aus einem Bitstrom, der eine encodierte Darstellung der Videodaten enthält, wobei das erste Syntaxelement angibt, ob der Dreieckszusammenführungsmodus aktiviert ist;
Erhalten eines zweiten Syntaxelements aus dem Bitstrom auf der Basis davon, dass das erste Syntaxelement angibt, dass der Dreieckszusammenführungsmodus aktiviert ist;
Bestimmen (450) einer maximalen Anzahl von Dreieckszusammenführungskandidaten auf der Basis des zweiten Syntaxelements;
Erhalten (452) eines ersten Dreieckszusammenführungsindex-Syntaxelements aus dem Bitstrom, wobei das erste Dreieckszusammenführungsindex-Syntaxelement einen ersten Dreieckszusammenführungskandidaten-Index spezifiziert, wobei der erste Dreieckszusammenführungskandidaten-Index einen ersten Dreieckszusammenführungskandidaten einer Liste von dreiecksformbasierten Bewegungskompensationskandidaten angibt;
Feststellen (454), ob die maximale Anzahl von Dreieckszusammenführungskandidaten größer als 2 ist;
Inferieren (458), auf der Basis davon, dass die maximale Anzahl von Dreieckszusammenführungskandidaten gleich 2 ist, dass ein zweiter Dreieckszusammenführungskandidaten-Index einen zweiten Dreieckszusammenführungskandidaten der Liste von dreiecksformbasierten Bewegungskompensationskandidaten angibt, ohne ein Syntaxelement zu erhalten, das den zweiten Dreieckszusammenführungskandidaten-Index aus dem Bitstrom spezifiziert, wobei sich der zweite Dreieckszusammenführungskandidat vom ersten Dreieckszusammenführungskandidaten unterscheidet;
Erzeugen (374; 460) eines Prädiktionsblocks für eine CU (Coding Unit), wobei das Erzeugen des Prädiktionsblocks für die CU Folgendes beinhaltet:

Inter-Prädizieren einer ersten Dreieckspartition der CU anhand von Bewegungsinformationen des ersten Dreieckszusammenführungskandidaten; und
Inter-Prädizieren einer zweiten Dreieckspartition der CU anhand von Bewegungsinformationen des zweiten Dreieckszusammenführungskandidaten; und

Rekonstruieren (380; 462) der CU auf der Basis des Prädiktionsblocks für die CU und von Restdaten für die CU.

2. Verfahren nach Anspruch 1, wobei:

die CU eine erste CU ist,
die maximale Anzahl von Dreieckszusammenführungskandidaten eine erste maximale Anzahl von Dreieckszusammenführungskandidaten ist,
die Liste von dreieckigen formbasierten Bewegungskompensationskandidaten eine Liste von ersten dreiecksformbasierten Bewegungskompensationskandidaten ist, und
das Verfahren ferner Folgendes beinhaltet:

Feststellen (454), ob eine zweite maximale Anzahl von Dreieckszusammenführungskandidaten größer als 2 ist;
Erhalten (452) eines dritten Dreieckszusammenführungsindex-Syntaxelements aus dem Bitstrom, wobei das dritte Dreieckszusammenführungsindex-Syntaxelement einen dritten Dreieckszusammenführungskandidaten-Index spezifiziert, wobei der dritte Dreieckszusammenführungskandidaten-Index einen dritten Dreieckszusammenführungskandidaten einer Liste von zweiten dreieckigen Bewegungskompensationskandidaten angibt;

Erhalten (456), auf der Basis davon, dass die zweite maximale Anzahl von Dreieckszusammenführungskandidaten größer als 2 ist, eines vierten Dreieckszusammenführungsindex-Syntaxelements aus dem Bitstrom, wobei das vierte Dreieckszusammenführungsindex-Syntaxelement einen vierten Dreieckszusammenführungskandidaten-Index spezifiziert, wobei der vierte Dreieckszusammenführungskandidaten-Index einen vierten Dreieckszusammenführungskandidaten der Liste von zweiten dreiecksformbasierten Bewegungskompensationskandidaten angibt;

Erzeugen (374; 460) eines Prädiktionsblocks für eine zweite CU, wobei das Erzeugen des Prädiktionsblocks für die zweite CU Folgendes beinhaltet:

Inter-Prädizieren einer ersten Dreieckspartition der zweiten CU anhand von Bewegungsinformationen des dritten Dreieckszusammenführungskandidaten; und
Inter-Prädizieren einer zweiten Dreieckspartition der zweiten CU anhand von Bewegungsinformationen des vierten Dreieckszusammenführungskandidaten; und

Rekonstruieren (380; 462) der zweiten CU auf der Basis des Prädiktionsblocks für die zweite CU und von Restdaten für die zweite CU.

3. Verfahren nach Anspruch 1, wobei das erste Syntaxelement und das zweite Syntaxelement aus einem SPS (Sequence Parameter Set) des Bitstroms erhalten werden.

4. Verfahren nach Anspruch 1, wobei das Erhalten (452) des ersten Dreieckszusammenführungsindex-Syntaxelements das Erhalten des ersten Dreieckszusammenführungsindex-Syntaxelements aus einer Zusammenführungsdaten-Syntaxstruktur beinhaltet.

5. Verfahren zum Encodieren von Videodaten, wobei das Verfahren Folgendes beinhaltet:

Bestimmen (400) einer maximalen Anzahl von Dreieckszusammenführungskandidaten;
Signalisieren eines ersten Syntaxelements in einem Bitstrom, wobei das erste Syntaxelement angibt, ob der Dreieckszusammenführungsmodus aktiviert ist;
Signalisieren eines zweiten Syntaxelements in dem Bitstrom auf der Basis davon, dass das erste Syntaxelement angibt, dass der Dreieckszusammenführungsmodus aktiviert ist, wobei das zweite Syntaxelement die maximale Anzahl von Dreieckszusammenführungskandidaten angibt;
Signalisieren (402) eines ersten Dreieckszusammenführungsindex-Syntaxelements im Bitstrom, wobei das erste Dreieckszusammenführungsindex-Syntaxelement einen ersten Dreieckszusammenführungskandidaten-Index spezifiziert, wobei der erste Dreieckszusammenführungskandidaten-Index einen ersten Dreieckszusammenführungskandidaten einer Liste von dreiecksformbasierten Bewegungskompensationskandidaten angibt;
Feststellen (404), ob die maximale Anzahl von Dreieckszusammenführungskandidaten größer als 2 ist;
Auslassen (408), auf der Basis davon, dass die maximale Anzahl von Dreieckszusammenführungskandidaten gleich 2 ist, eines zweiten Dreieckszusammenführungsindex-Syntaxelements aus dem Bitstrom, das einen zweiten Dreieckszusammenführungskandidaten-Index spezifiziert, der einen zweiten Dreieckszusammenführungskandidaten der Liste von dreiecksformbasierten Bewegungskompensationskandidaten angibt, wobei sich der zweite Dreieckszusammenführungskandidat vom ersten Dreieckszusammenführungskandidaten unterscheidet;
Erzeugen (350; 410) eines Prädiktionsblocks für eine CU (Coding Unit), wobei das Erzeugen des Prädiktionsblocks für die CU Folgendes beinhaltet:

Inter-Prädizieren einer ersten Dreieckspartition der CU anhand von Bewegungsinformationen des ersten Dreieckszusammenführungskandidaten; und
Inter-Prädizieren einer zweiten Dreieckspartition der CU anhand von Bewegungsinformationen des zweiten Dreieckszusammenführungskandidaten; und

Erzeugen (352; 412) von Restdaten für die CU auf der Basis des Prädiktionsblocks für die CU und von Samples der CU.

6. Verfahren nach Anspruch 5, wobei:

   die CU eine erste CU ist,
   die maximale Anzahl von Dreieckszusammenführungskandidaten eine erste maximale Anzahl von Dreieckszusammenführungskandidaten ist,
   die Liste von dreiecksformbasierten Bewegungskompensationskandidaten eine erste Liste von dreiecksformbasierten Bewegungskompensationskandidaten ist, und
   das Verfahren ferner Folgendes beinhaltet:

   Signalisieren (402) eines dritten Dreieckszusammenführungsindex-Syntaxelements in dem Bitstrom, wobei das dritte Dreieckszusammenführungsindex-Syntaxelement einen dritten Dreieckszusammenführungskandidaten-Index spezifiziert, wobei der dritte Dreieckszusammenführungskandidaten-Index einen dritten Dreieckszusammenführungskandidaten einer zweiten Liste von dreiecksformbasierten Bewegungskompensationskandidaten angibt;
   Feststellen (404), ob eine zweite maximale Anzahl von Dreieckszusammenführungskandidaten größer als 2 ist;
   Signalisieren (406), auf der Basis davon, dass die zweite maximale Anzahl von Dreieckszusammenführungskandidaten größer als 2 ist, eines vierten Dreieckszusammenführungsindex-Syntaxelements in dem Bitstrom, wobei das vierte Dreieckszusammenführungsindex-Syntaxelement einen vierten Dreieckszusammenführungskandidaten-Index spezifiziert, wobei der vierte Dreieckszusammenführungskandidaten-Index einen vierten Dreieckszusammenführungskandidaten der zweiten Liste von dreiecksformbasierten Bewegungskompensationskandidaten angibt;
   Erzeugen (350; 410) eines Prädiktionsblocks für eine zweite CU, wobei das Erzeugen des Prädiktionsblocks für die zweite CU Folgendes beinhaltet:

   Inter-Prädizieren einer ersten Dreieckspartition der zweiten CU anhand von Bewegungsinformationen des dritten Dreieckszusammenführungskandidaten; und
   Inter-Prädizieren einer zweiten Dreieckspartition der zweiten CU anhand von Bewegungsinformationen des vierten Dreieckszusammenführungskandidaten; und

   Rekonstruieren (352; 412) der zweiten CU auf der Basis des Prädiktionsblocks für die zweite CU und von Restdaten für die zweite CU.

7. Verfahren nach Anspruch 5,
   wobei das erste Syntaxelement und das zweite Syntaxelement in einem SPS (Sequence Parameter Set) des Bitstroms signalisiert werden.

8. Gerät (116, 300) zum Decodieren von Videodaten, wobei das Gerät Folgendes umfasst:

   einen Speicher (320) zum Speichern der Videodaten; und
   einen oder mehrere in Schaltung implementierte Prozessoren, wobei die ein oder mehreren Prozessoren konfiguriert sind zum:

   Erhalten eines ersten Syntaxelements aus einem Bitstrom, der eine encodierte Darstellung der Videodaten enthält, wobei das erste Syntaxelement angibt, ob der Dreieckszusammenführungsmodus aktiviert ist;
   Erhalten eines zweiten Syntaxelements aus dem Bitstrom auf der Basis davon, dass das erste Syntaxelement angibt, dass der Dreieckszusammenführungsmodus aktiviert ist;
   Bestimmen (450) einer maximalen Anzahl von Dreieckszusammenführungskandidaten auf der Basis des zweiten Syntaxelements;
   Erhalten (452) eines ersten Dreieckszusammenführungsindex-Syntaxelements aus dem Bitstrom, wobei das erste Dreieckszusammenführungsindex-Syntaxelement einen ersten Dreieckszusammenführungskandidaten-Index spezifiziert, wobei der erste Dreieckszusammenführungskandidaten-Index einen ersten Dreieckszusammenführungskandidaten einer Liste von dreiecksformbasierten Bewegungskompensationskandidaten angibt;
   Feststellen (454), ob die maximale Anzahl von Dreieckszusammenführungskandidaten größer als 2 ist;
   Inferieren (458), auf der Basis davon, dass die maximale Anzahl von Dreieckszusammenführungskandidaten gleich 2 ist, dass ein zweiter Dreieckszusammenführungskandidaten-Index einen zweiten Dreieckszusammenführungskandidaten der Liste von dreiecksformbasierten Bewegungskompensationskandidaten angibt, ohne ein Syntaxelement zu erhalten, das den zweiten Dreieckszusammenführungskandidaten-Index aus dem Bitstrom spezifiziert, wobei sich der zweite Dreieckszusammenführungskandidat vom ersten Dreieckszusammenführungskandidaten unterscheidet;

Erzeugen (374; 460) eines Prädiktionsblocks für eine CU (Coding Unit), wobei die ein oder mehreren Prozessoren so konfiguriert sind, dass als Teil des Erzeugens des Prädiktionsblocks für die CU die ein oder mehreren Prozessoren konfiguriert sind zum:

> Inter-Prädizieren einer ersten Dreieckspartition der CU anhand von Bewegungsinformationen des ersten Dreieckszusammenführungskandidaten; und
>
> Inter-Prädizieren einer zweiten Dreieckspartition der CU anhand von Bewegungsinformationen des zweiten Dreieckszusammenführungskandidaten; und

Rekonstruieren (380; 462) der CU auf der Basis des Prädiktionsblocks für die CU und von Restdaten für die CU.

9. Gerät nach Anspruch 8, wobei:

> die CU eine erste CU ist,
> die maximale Anzahl von Dreieckszusammenführungskandidaten eine erste maximale Anzahl von Dreieckszusammenführungskandidaten ist,
> die Liste von dreiecksformbasierten Bewegungskompensationskandidaten eine Liste von ersten dreiecksformbasierten Bewegungskompensationskandidaten ist, und
> die ein oder mehreren Prozessoren ferner konfiguriert sind zum:

> > Feststellen (454), ob eine zweite maximale Anzahl von Dreieckszusammenführungskandidaten größer als 2 ist;
> > Erhalten (452) eines dritten Dreieckszusammenführungsindex-Syntaxelements aus dem Bitstrom, wobei das dritte Dreieckszusammenführungsindex-Syntaxelement einen dritten Dreieckszusammenführungskandidaten-Index spezifiziert, wobei der dritte Dreieckszusammenführungskandidaten-Index einen dritten Dreieckszusammenführungskandidaten einer Liste von zweiten dreieckigen Bewegungskompensationskandidaten angibt;
> > Erhalten (456), auf der Basis davon, dass die zweite maximale Anzahl von Dreieckszusammenführungskandidaten größer als 2 ist, eines vierten Dreieckszusammenführungsindex-Syntaxelements aus dem Bitstrom, wobei das vierte Dreieckszusammenführungsindex-Syntaxelement einen vierten Dreieckszusammenführungskandidaten-Index spezifiziert, wobei der vierte Dreieckszusammenführungskandidaten-Index einen vierten Dreieckszusammenführungskandidaten der Liste von zweiten dreiecksformbasierten Bewegungskompensationskandidaten angibt;
> > Erzeugen (374; 460) eines Prädiktionsblocks für eine zweite CU, wobei die ein oder mehreren Prozessoren so konfiguriert sind, dass als Teil des Erzeugens des Prädiktionsblocks für die zweite CU die ein oder mehreren Prozessoren Folgendes durchführen:

> > > Inter-Prädizieren einer ersten Dreieckspartition der zweiten CU anhand von Bewegungsinformationen des dritten Dreieckszusammenführungskandidaten; und
> > > Inter-Prädizieren einer zweiten Dreieckspartition der zweiten CU anhand von Bewegungsinformationen des vierten

> > Dreieckszusammenführungskandidaten; und

> Rekonstruieren (380; 462) der zweiten CU auf der Basis des Prädiktionsblocks für die zweite CU und von Restdaten für die zweite CU.

10. Gerät nach Anspruch 8,
    wobei die ein oder mehreren Prozessoren zum Erhalten des ersten Syntaxelements und des zweiten Syntaxelements aus einem SPS (Sequence Parameter Set) des Bitstroms konfiguriert sind.

11. Gerät nach Anspruch 8,
    das ferner ein Display (118) umfasst, das zum Anzeigen decodierter Videodaten konfiguriert ist.

**12.** Gerät nach Anspruch 8,
wobei das Gerät eine Kamera, ein Computer, ein Smartphone, ein Fernseher oder eine Set-Top-Box ist.

**13.** Gerät (102, 200) zum Encodieren von Videodaten, wobei das Gerät Folgendes umfasst:

einen Speicher (230) zum Speichern der Videodaten; und
einen oder mehrere in Schaltung implementierte Prozessoren, wobei die ein oder mehreren Prozessoren konfiguriert sind zum:

Bestimmen (400) einer maximalen Anzahl von Dreieckszusammenführungskandidaten;
Signalisieren eines ersten Syntaxelements in einem Bitstrom, wobei das erste Syntaxelement angibt, ob der Dreieckszusammenführungsmodus aktiviert ist;
Signalisieren eines zweiten Syntaxelements in dem Bitstrom auf der Basis davon, dass das erste Syntaxelement angibt, dass der Dreieckszusammenführungsmodus aktiviert ist, wobei das zweite Syntaxelement die maximale Anzahl von Dreieckszusammenführungskandidaten angibt;
Signalisieren (402) eines ersten Dreieckszusammenführungsindex-Syntaxelements in dem Bitstrom, wobei das erste Dreieckszusammenführungsindex-Syntaxelement einen ersten Dreieckszusammenführungskandidaten-Index spezifiziert, wobei der erste Dreieckszusammenführungskandidaten-Index einen ersten Dreieckszusammenführungskandidaten einer Liste von dreiecksformbasierten Bewegungskompensationskandidaten angibt;
Feststellen (404), ob die maximale Anzahl von Dreieckszusammenführungskandidaten größer als 2 ist;
Auslassen (408), auf der Basis davon, dass die maximale Anzahl von Dreieckszusammenführungskandidaten gleich 2 ist, eines zweiten Dreieckszusammenführungsindex-Syntaxelements aus dem Bitstrom, das einen zweiten Dreieckszusammenführungskandidaten-Index spezifiziert, der einen zweiten Dreieckszusammenführungskandidaten der Liste von dreiecksformbasierten Bewegungskompensationskandidaten angibt, wobei sich der zweite Dreieckszusammenführungskandidat vom ersten Dreieckszusammenführungskandidaten unterscheidet;
Erzeugen (350; 410) eines Prädiktionsblocks für eine CU (Coding Unit), wobei die ein oder mehreren Prozessoren so konfiguriert sind, dass als Teil des Erzeugens des Prädiktionsblocks für die CU die ein oder mehreren Prozessoren Folgendes durchführen:

Inter-Prädizieren einer ersten Dreieckspartition der CU anhand von Bewegungsinformationen des ersten Dreieckszusammenführungskandidaten; und
Inter-Prädizieren einer zweiten Dreieckspartition der CU anhand von Bewegungsinformationen des zweiten Dreieckszusammenführungskandidaten; und

Erzeugen (352; 412) von Restdaten für die CU auf der Basis des Prädiktionsblocks für die CU und von Samples der CU.

## Revendications

**1.** Procédé de décodage de données vidéo, le procédé comprenant :

l'obtention d'un premier élément de syntaxe à partir d'un train de bits comportant une représentation encodée des données vidéo, le premier élément de syntaxe indiquant qu'un mode de fusion triangulaire est activé ou non ;
l'obtention d'un second élément de syntaxe à partir du train de bits lorsque le premier élément de syntaxe indique que le mode de fusion triangulaire est activé ;
la détermination (450), sur la base du second élément de syntaxe, d'un nombre maximum de candidats à la fusion triangulaire ;
l'obtention (452) d'un premier élément de syntaxe d'indice de fusion triangulaire à partir du train de bits, le premier élément de syntaxe d'indice de fusion triangulaire spécifiant un premier indice de candidat à la fusion triangulaire, le premier indice de candidat à la fusion triangulaire indiquant un premier candidat à la fusion triangulaire d'une liste de candidats à la compensation de mouvement basée sur la forme triangulaire ;
la détermination (454) que le nombre maximum de candidats à la fusion triangulaire est supérieur ou non à 2 ;
lorsque le nombre maximum de candidats à la fusion triangulaire est égal à 2, la déduction (458) qu'un deuxième indice de candidat à la fusion triangulaire indique un deuxième candidat à la fusion triangulaire de la liste de candidats à la compensation de mouvement basée sur la forme triangulaire sans obtenir d'élément de syntaxe spécifiant le deuxième indice de candidat à la fusion triangulaire à partir du train de bits, le deuxième candidat à la fusion triangulaire étant différent du premier candidat à la fusion triangulaire ;

la génération (374 ; 460) d'un bloc de prédiction pour une unité de codage, CU, dans lequel la génération du bloc de prédiction pour la CU comprend :

l'inter-prédiction d'une première partition triangulaire de la CU à partir d'informations de mouvement du premier candidat à la fusion triangulaire ; et

l'inter-prédiction d'une seconde partition triangulaire de la CU à l'aide d'informations de mouvement du deuxième candidat à la fusion triangulaire ; et

la reconstruction (380 ; 462) de la CU à partir du bloc de prédiction de la CU et de données résiduelles de la CU.

2. Procédé selon la revendication 1, dans lequel :

la CU est une première CU,
le nombre maximum de candidats à la fusion triangulaire est un premier nombre maximum de candidats à la fusion triangulaire,
la liste de candidats à la compensation de mouvement basée sur la forme triangulaire est une première liste de candidats à la compensation de mouvement basée sur la forme triangulaire, et
le procédé comprend en outre :

la détermination (454) qu'un second nombre maximum de candidats à la fusion triangulaire est ou non supérieur à 2 ;
l'obtention (452) d'un troisième élément de syntaxe d'indice de fusion triangulaire à partir du train de bits, le troisième élément de syntaxe d'indice de fusion triangulaire spécifiant un troisième indice de candidat à la fusion triangulaire, le troisième indice de candidat à la fusion triangulaire indiquant un troisième candidat à la fusion triangulaire d'une seconde liste de candidats à la compensation de mouvement basée sur la forme triangulaire ;
lorsque le second nombre maximum de candidats à la fusion triangulaire est supérieur à 2, l'obtention (456) d'un quatrième élément de syntaxe d'indice de fusion triangulaire à partir du train de bits, le quatrième élément de syntaxe d'indice de fusion triangulaire spécifiant un quatrième indice de candidat à la fusion triangulaire, le quatrième indice de candidat à la fusion triangulaire indiquant un quatrième candidat à la fusion triangulaire de la seconde liste de candidats à la compensation de mouvement basée sur la forme triangulaire ;
la génération (374 ; 460) d'un bloc de prédiction pour une seconde CU, dans lequel la génération du bloc de prédiction pour la seconde CU comprend :

l'inter-prédiction d'une première partition triangulaire de la seconde CU à partir d'informations de mouvement du troisième candidat à la fusion triangulaire ; et
l'inter-prédiction d'une seconde partition triangulaire de la seconde CU à partir d'informations de mouvement du quatrième candidat à la fusion triangulaire ; et

la reconstruction (380 ; 462) de la seconde CU sur la base du bloc de prédiction de la seconde CU et de données résiduelles de la seconde CU.

3. Procédé selon la revendication 1, dans lequel le premier élément de syntaxe et le second élément de syntaxe sont obtenus à partir d'un ensemble de paramètres de séquence, SPS, du train de bits.

4. Procédé selon la revendication 1, dans lequel l'obtention (452) du premier élément de syntaxe d'indice de fusion triangulaire comprend l'obtention du premier élément de syntaxe d'indice de fusion triangulaire à partir d'une structure de syntaxe de données de fusion.

5. Procédé d'encodage des données vidéo, le procédé comprenant :

la détermination (400) d'un nombre maximum de candidats à la fusion triangulaire ;
la signalisation d'un premier élément de syntaxe dans un train de bits, le premier élément de syntaxe indiquant que le mode de fusion triangulaire est activé ou non ;
la signalisation d'un second élément de syntaxe dans le train de bits lorsque le premier élément de syntaxe indique que le mode de fusion triangulaire est activé, dans lequel le second élément de syntaxe indique le nombre maximum de candidats à la fusion triangulaire ;

la signalisation (402) d'un premier élément de syntaxe d'indice de fusion triangulaire dans le train de bits, l'élément de syntaxe d'indice de fusion triangulaire spécifiant un premier indice de candidat à la fusion triangulaire, le premier indice de candidat à la fusion triangulaire indiquant un premier candidat à la fusion triangulaire d'une liste de candidats à la compensation de mouvement basée sur la forme triangulaire ;

la détermination (404) que le nombre maximum de candidats à la fusion triangulaire est ou non supérieur à 2 ;

lorsque le nombre maximum de candidats à la fusion triangulaire est égal à 2, l'omission (408) dans le train de bits d'un second élément de syntaxe d'indice de fusion triangulaire qui spécifie un deuxième indice de candidat à la fusion triangulaire indiquant un deuxième candidat à la fusion triangulaire dans la liste de candidats à la compensation de mouvement basée sur la forme triangulaire, le deuxième candidat à la fusion triangulaire étant différent du premier candidat à la fusion triangulaire ;

la génération (350 ; 410) d'un bloc de prédiction pour une unité de codage, CU, dans lequel la génération du bloc de prédiction de la CU comprend :

l'inter-prédiction d'une première partition triangulaire de la CU à l'aide d'informations de mouvement du premier candidat à la fusion triangulaire ; et

l'inter-prédiction d'une seconde partition triangulaire de la CU à l'aide d'informations de mouvement du deuxième candidat à la fusion triangulaire ; et

la génération (352 ; 412) de données résiduelles pour la CU sur la base du bloc de prédiction de la CU et d'échantillons de la CU.

6. Procédé selon la revendication 5, dans lequel.

la CU est une première CU,

le nombre maximum de candidats à la fusion triangulaire est un premier nombre maximum de candidats à la fusion triangulaire,

la liste de candidats à la compensation de mouvement basée sur la forme triangulaire est une première liste de candidats à la compensation de mouvement basée sur la forme triangulaire, et

le procédé comprend en outre :

la signalisation (402) d'un troisième élément de syntaxe d'indice de fusion triangulaire dans le train de bits, le troisième élément de syntaxe d'indice de fusion triangulaire spécifiant un troisième indice de candidat à la fusion triangulaire, le troisième indice de candidat à la fusion triangulaire indiquant un troisième candidat à la fusion triangulaire d'une seconde liste de candidats à la compensation de mouvement basée sur la forme triangulaire ;

la détermination (404) qu'un second nombre maximum de candidats à la fusion triangulaire est ou non supérieur à 2 ;

lorsque le second nombre maximum de candidats à la fusion triangulaire est supérieur à 2, la signalisation (406) d'un quatrième élément de syntaxe d'indice de fusion triangulaire dans le train de bits, le quatrième élément de syntaxe d'indice de fusion triangulaire spécifiant un quatrième indice de candidat à la fusion triangulaire, le quatrième indice de candidat à fusion triangulaire indiquant un quatrième candidat à la fusion triangulaire de la seconde liste de candidats à la compensation de mouvement basée sur la forme triangulaire ;

la génération (350 ; 410) d'un bloc de prédiction pour une seconde CU, dans lequel la génération du bloc de prédiction pour la seconde CU comprend

l'inter-prédiction d'une première partition triangulaire de la seconde CU à l'aide d'informations de mouvement du troisième candidat à la fusion triangulaire, et

l'inter-prédiction d'une seconde partition triangulaire de la seconde CU à l'aide d'informations de mouvement du quatrième candidat à la fusion triangulaire ; et

la reconstruction (352 ; 412) de la seconde CU à partir du bloc de prédiction de la seconde CU et de données résiduelles de la seconde CU.

7. Procédé selon la revendication 5, dans lequel le premier élément de syntaxe et le second élément de syntaxe sont signalés dans un ensemble de paramètres de séquence, SPS, du train de bits.

**8.** Dispositif (116, 300) de décodage de données vidéo, le dispositif comprenant :

une mémoire (320) pour stocker les données vidéo ; et
un ou plusieurs processeurs implémentés dans des circuits, les un ou plusieurs processeurs étant configurés pour :

obtenir un premier élément de syntaxe à partir d'un train de bits comportant une représentation encodée des données vidéo, le premier élément de syntaxe indiquant qu'un mode de fusion triangulaire est activé ou non ;
obtenir un second élément de syntaxe à partir du train de bits lorsque le premier élément de syntaxe indique que le mode de fusion triangulaire est activé ;
déterminer (450), sur la base du second élément de syntaxe, un nombre maximum de candidats à la fusion triangulaire ;
obtenir (452) un premier élément de syntaxe d'indice de fusion triangulaire à partir du train de bits, le premier élément de syntaxe d'indice de fusion triangulaire spécifiant un premier indice de candidat à la fusion triangulaire, le premier indice de candidat à la fusion triangulaire indiquant un premier candidat à la fusion triangulaire d'une liste de candidats à la compensation de mouvement basée sur la forme triangulaire ;
déterminer (454) que le nombre maximum de candidats à la fusion triangulaire est ou non supérieur à 2 ;
lorsque le nombre maximum de candidats à la fusion triangulaire est égal à 2, la déduction (458) qu'un deuxième indice de candidat à la fusion triangulaire indique un deuxième candidat à la fusion triangulaire de la liste de candidats à la compensation de mouvement basée sur la forme triangulaire sans obtenir d'élément de syntaxe spécifiant le deuxième indice de candidat à la fusion triangulaire à partir du train de bits, le deuxième candidat à la fusion triangulaire étant différent du premier candidat à la fusion triangulaire ;
générer (374 ; 460) un bloc de prédiction pour une unité de codage, CU, dans lequel les un ou plusieurs processeurs sont configurés de telle sorte que, dans le cadre de la génération du bloc de prédiction pour la CU, les un ou plusieurs processeurs soient configurés pour :

réaliser une inter-prédiction d'une première partition triangulaire de la CU à l'aide d'informations de mouvement du premier candidat à la fusion triangulaire ; et
réaliser une inter-prédiction d'une seconde partition triangulaire de la CU à l'aide d'informations de mouvement du deuxième candidat à la fusion triangulaire ; et
reconstruire (380 ; 462) la CU sur la base du bloc de prédiction de la CU et de données résiduelles de la CU.

**9.** Dispositif selon la revendication 8, dans lequel :

la CU est une première CU,
le nombre maximum de candidats à la fusion triangulaire est un premier nombre maximum de candidats à la fusion triangulaire,
la liste de candidats à la compensation de mouvement basée sur la forme triangulaire est une première liste de candidats à la compensation de mouvement basée sur la forme triangulaire, et
les un ou plusieurs processeurs sont configurés en outre pour :

déterminer (454) qu'un second nombre maximum de candidats à la fusion triangulaire est supérieur à 2 ou non ;
obtenir (452) un troisième élément de syntaxe d'indice de fusion triangulaire à partir du train de bits, le troisième élément de syntaxe d'indice de fusion triangulaire spécifiant un troisième indice de candidat à la fusion triangulaire, le troisième indice de candidat à la fusion triangulaire indiquant un troisième candidat à la fusion triangulaire d'une seconde liste de candidats à la compensation de mouvement triangulaire basée sur la forme triangulaire ;
lorsque le second nombre maximum de candidats à la fusion triangulaire est supérieur à 2, obtenir (456) un quatrième élément de syntaxe d'indice de fusion triangulaire à partir du train de bits, le quatrième élément de syntaxe d'indice de fusion triangulaire spécifiant un quatrième indice de candidat à la fusion triangulaire, le quatrième indice de candidat à la fusion triangulaire indiquant un quatrième candidat à la fusion triangulaire de la seconde liste de candidats à la compensation de mouvement basée sur la forme triangulaire ;
générer (374 ; 460) un bloc de prédiction pour une seconde CU, dans lequel les un ou plusieurs processeurs sont configurés de telle sorte que, dans le cadre de la génération du bloc de prédiction pour la seconde CU, les un ou plusieurs processeurs :

réalisent une inter-prédiction d'une première partition triangulaire de la seconde CU à l'aide d'informations de mouvement du troisième candidat à la fusion triangulaire , et

réalisent une inter-prédiction d'une seconde partition triangulaire de la second CU à l'aide d'informations de mouvement du quatrième candidat à la fusion triangulaire ; et

reconstruire (380 ; 462) la seconde CU sur la base du bloc de prédiction de la seconde CU et de données résiduelles de la seconde CU.

10. Dispositif selon la revendication 8, dans lequel les un ou plusieurs processeurs sont configurés pour obtenir le premier élément de syntaxe et le second élément de syntaxe à partir d'un ensemble de paramètres de séquence, SPS, du train de bits.

11. Dispositif selon la revendication 8, comprenant en outre un afficheur (118) configuré pour afficher des données vidéo décodées.

12. Dispositif selon la revendication 8, le dispositif étant une caméra, un ordinateur, un téléphone intelligent, un téléviseur ou un décodeur.

13. Dispositif (102, 200) d'encodage de données vidéo, le dispositif comprenant :

une mémoire (230) pour stocker les données vidéo, et
un ou plusieurs processeurs implémentés dans des circuits, les un ou plusieurs processeurs étant configurés pour :

déterminer (400) un nombre maximum de candidats à la fusion triangulaire ;
signaler un premier élément de syntaxe dans un train de bits, le premier élément de syntaxe indiquant que le mode de fusion triangulaire est activé ou non ;
signaler un second élément de syntaxe dans le train de bits lorsque le premier élément de syntaxe indique que le mode de fusion triangulaire est activé, dans lequel le second élément de syntaxe indique le nombre maximum de candidats à la fusion triangulaire ;
signaler (402) un premier élément de syntaxe d'indice de fusion triangulaire dans le train de bits, le premier élément de syntaxe d'indice de fusion triangulaire spécifiant un premier indice de candidat à la fusion triangulaire, le premier indice de candidat à la fusion triangulaire indiquant un premier candidat à la fusion triangulaire d'une liste de candidats à la compensation de mouvement basée sur la forme triangulaire,
déterminer (404) que le nombre maximum de candidats à la fusion triangulaire est supérieur 2 ou non, lorsque le nombre maximum de candidats à la fusion triangulaire est égal à 2, omettre (408) dans le train de bits un second élément de syntaxe d'indice de fusion triangulaire qui spécifie un deuxième indice de candidat à la fusion triangulaire indiquant un deuxième candidat à la fusion triangulaire dans la liste de candidats à la compensation de mouvement basée sur la forme triangulaire, le deuxième candidat à la fusion triangulaire étant différent du premier candidat à la fusion triangulaire ;
générer (350 ; 410) un bloc de prédiction pour une unité de codage, CU, dans lequel les un ou plusieurs processeurs sont configurés de telle sorte que, dans le cadre de la génération du bloc de prédiction pour la CU, les un ou plusieurs processeurs :

réalisent une inter-prédiction d'une première partition triangulaire de la CU à l'aide d'informations de mouvement du premier candidat à la fusion triangulaire, et
réalisent une inter-prédiction d'une seconde partition triangulaire de la CU à l'aide d'informations de mouvement du deuxième candidat à la fusion triangulaire ; et

générer (352 ; 412) des données résiduelles de la CU sur la base du bloc de prédiction de la CU et d'échantillons de la CU.

**FIG. 1**

L1 reference

L0 reference

FIG. 2

FIG. 3

$(x_0 , y_0)$
$(x_1 , y_1)$

$\overline{v_0}$
$\overline{v_1}$

Cur

$(x_2 , y_2)$

$\overline{v_2}$
$\overline{v_3}$
$(x_3 , y_3)$

A

$\overline{v_4}$

$(x_4 , y_4)$

FIG. 4

FIG. 5

FIG. 6

FIG. 7

FIG. 8A

FIG. 8B

**FIG. 9**

EP 3 935 851 B1

FIG. 10

EP 3 935 851 B1

PREDICT CURRENT BLOCK ⌐350

↓

CALCULATE RESIDUAL BLOCK
FOR CURRENT BLOCK ⌐352

↓

TRANSFORM AND QUANTIZE
RESIDUAL BLOCK ⌐354

↓

SCAN COEFFICIENTS OF
RESIDUAL BLOCK ⌐356

↓

ENTROPY ENCODE
COEFFICIENTS ⌐358

↓

OUTPUT ENTROPY ENCODED
DATA FOR COEFFICIENTS ⌐360

# FIG. 11

RECEIVE ENTROPY CODED DATA FOR CURRENT BLOCK —370

ENTROPY DECODE DATA TO DETERMINE PREDICTION AND REPRODUCE COEFFICIENTS —372

PREDICT CURRENT BLOCK —374

INVERSE SCAN REPRODUCED COEFFICIENTS —376

INVERSE QUANTIZE AND INVERSE TRANSFORM COEFFICIENTS TO PRODUCE RESIDUAL BLOCK —378

COMBINE PREDICTION BLOCK AND RESIDUAL BLOCK —380

FIG. 12

DETERMINE MAXIMUM
NUMBER OF TRIANGLE
MERGING CANDIDATES
_400

SIGNAL FIRST TRIANGLE
MERGING INDEX SYNTAX
ELEMENT
_402

MAXIMUM NUMBER OF
TRIANGLE MERGING
CANDIDATES IS GREATER
THAN 2?
_404

NO

YES

SIGNAL SECOND TRIANGLE
MERGING INDEX SYNTAX
ELEMENT
_406

OMIT SECOND TRIANGLE
MERGING CANDIDATE
INDEX SYNTAX ELEMENT
_408

GENERATE PREDICTION
BLOCK FOR CU
_410

GENERATE RESIDUAL
DATA FOR CU BASED ON
PREDICTION BLOCK AND
SAMPLES OF CU
_412

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- CE10-related: Using regular merge index signaling for triangle mode. *JVET-M0883*

- **BROSS et al.** Versatile Video Coding (Draft 4). *Joint Video Experts Team (JVET) of ITU-T SG 16 WP 3 and ISO/IEC JTC 1/SC 29/WG 11, 13th Meeting: Marrakech, MA*, 09 January 2019